# EUROPÄISCHE PATENTSCHRIFT

(11) **EP 1 787 042 B1**
(45) Veröffentlichungstag und Bekanntmachung des Hinweises auf die Patenterteilung: **16.04.2008**
(21) Anmeldenummer: 05776256.9
(22) Anmeldetag: 08.08.2005
(51) Int. Cl.: F16H 3/66

(54) **MEHRSTUFEN-AUTOMATGETRIEBE**
MULTI-STEP AUTOMATIC GEARBOX
BOITE DE VITESSES AUTOMATIQUE A PLUSIEURS ETAGES

(30) Priorität: 06.08.2004 DE 102004038287
(43) Veröffentlichungstag der Anmeldung: 23.05.2007
(73) Patentinhaber: ZF FRIEDRICHSHAFEN AG, 88038 Friedrichshafen (DE)
(72) Erfinder: BAUKNECHT, Gert, 88048 Friedrichshafen (DE); ZIEMER, Peter, 88069 Tettnang (DE); GIERLING, Armin, 88085 Langenargen (DE)
(86) Internationale Anmeldenummer: PCT/EP2005/008585
(87) Internationale Veröffentlichungsnummer: WO 2006/015836

(56) Entgegenhaltungen:
- US-A1- 2004 072 648
- US-A1- 2005 085 332
- US-B1- 6 634 980

## Beschreibung

Die Erfindung betrifft ein Mehrstufen-Automatgetriebe gemäß dem Oberbegriff des Patentanspruchs 1.

Dokument US 2004 072648 wird als nächstliegenden Stand der Technik angesehen.

Automatgetriebe mit mehreren, ohne Gruppenschaltung schaltbaren Gängen sind vielfältig bekannt. Aus der US 5,106,352 ist ein 6-Gang-Automatgetriebe bekannt, bei dem ein einfacher Vorschalt-Planetenradsatz koaxial zu einem als Ravigneaux-Planetenradsatz ausgebildeten Zweisteg-Vierwellen-Hauptradsatz angeordnet ist und fünf Schaltelemente vorgesehen sind. Dabei ist der Vorschalt-Planetenradsatz als nicht schaltbare Reduzierstufe mit an einem Getriebegehäuse festgesetztem Sonnenrad ausgeführt, deren Ausgangsdrehzahl kleiner ist als die Drehzahl einer Antriebswelle des Automatgetriebes und über zwei Kupplungen auf zwei unterschiedliche Elemente des Hauptradsatzes übertragbar ist, wobei eines dieser beiden Elemente zusätzlich über eine erste Bremse an dem Getriebegehäuse festsetzbar ist. Dieses Eingangselement des Hauptradsatzes, weiches wahlweise mit dem Ausgangselement des Vorschaltradsatzes verbindbar oder am Getriebegehäuse festsetzbar ist, sei im folgenden mit "erstes Eingangselement des Hauptradsatzes" bezeichnet. Entsprechend sei das andere Eingangselement des Hauptradsatzes, das auch mit dem Ausgangselement des Vorschalt-Planetenradsatz verbindbar ist, im folgenden mit "zweites Eingangselement des Hauptradsatzes" bezeichnet. Die Drehzahl der Antriebswelle ist über eine dritte Kupplung auf ein drittes Eingangselement des Hauptradsatzes übertragbar, wobei dieses dritte Element über eine zweite Bremse auch an dem Getriebegehäuse festsetzbar ist. Ein viertes Element des Hauptradsatzes bildet das Ausgangselement des Hauptradsatzes und ist ausschließlich fest mit einer Abtriebswelle des Automatgetriebes verbunden.

Mehrere alternative Bauteilanordnungen zu diesem in der US 5,106,352 beschriebenen Automatgetriebe sind beispielsweise aus der US 6,139,463 und der DE 10210 348 A1 bekannt.

In der noch nicht veröffentlichten Deutschen Patentanmeldung DE 10221095.0 der Anmelderin ist eine Weiterentwicklung des in der US 5,106,352 bekannten 6-Gang-Automatgetriebes zu einem 7-Gang-Automatgetriebe beschrieben. Gegenüber der US 5,106,352 ist der Vorschalt-Planetenradsatz als einfacher, schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist über das gegenüber der US 5,106,352 zusätzliche sechste Schaltelement an einem Getriebegehäuse festsetzbar. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert mit einer Drehzahl kleiner oder gleich der Drehzahl der Antriebswelle. Für diese kinematische Kopplung der einzelnen Radsatzelemente und Schaltelemente offenbart die DE 10221095.0 zahlreiche verschiedene Anordnungsvarianten der Getriebekomponenten relativ zueinander.

In der JP 20011182785 A ist eine Weiterentwicklung des aus der US 5,106,352 bekannten 6-Gang-Automatgetriebes zu einem 8-Gang-Automatgetriebe beschrieben. Gegenüber der US 5,106,352 ist dabei der Vorschalt-Planetenradsatz als einfacher, nicht schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist an einem Getriebegehäuse festgesetzt. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert stets mit einer Drehzahl kleiner der Drehzahl der Antriebswelle. Über das gegenüber der US 5,106,352 zusätzliche sechste Schaltelement ist das - wahlweise mit dem Ausgangselement des Vorschalt-Planetenradsatzes verbindbare oder am Getriebegehäuse festsetzbare - erste Eingangselement des Hauptradsatzes nun wahlweise auch mit der Antriebswelle des Getriebes verbindbar. Hinsichtlich der räumlichen Anordnung der Schaltelemente relativ zueinander und relativ zu den Planetenradsätzen ist in der JP 2001/182785 A vorgeschlagen, die beiden Schaltelemente, über die das erste und zweite Eingangselement des Hauptradsatzes mit dem Hohlrad des Vorschalt-Planetenradsatzes verbindbar sind, zusammen mit dem gegenüber der US 5,106,352 zusätzlichen sechsten Schaltelement als eine Baugruppe axial zwischen dem Vorschalt-Planetenradsatz und dem Hauptradsatz anzuordnen. Dabei ist das bereits aus der US 5,106,352 bekannte (fünfte) Schaltelement, über welches die Antriebswelle mit dem dritten Eingangselement des Hauptradsatzes verbindbar ist, auf der dieser Baugruppe gegenüberliegenden Seite des Hauptradsatzes angeordnet, also auch auf der dem Vorschalt-Planetenradsatz abgewandten Seite des Hauptradsatzes. Weiterhin lehrt die JP 20011182785 A, das gegenüber der US 5,106,352 zusätzliche sechste Schaltelement innerhalb der genannten Baugruppe räumlich gesehen radial über dem Schaltelement anzuordnen, über welches erste Eingangselement des Hauptradsatzes mit dem Hohlrad des Vorschaltradsatzes verbindbar ist.

In der noch nicht veröffentlichten Deutschen Patentanmeldung DE 10318565.8 der Anmelderin wird eine verbesserte Bauteilanordnung des aus der JP 2001/182785 A bekannten 8-Gang-Automatgetriebes beschrieben. Um gegenüber der zugrunde liegenden Basiskonstruktion des 6-Gang-Automatgetriebe gemäß US 5,106,352 nur vergleichsweise wenige konstruktive Änderungen vornehmen zu müssen, wird in der DE 10318565.8 vorgeschlagen, die aus dem 6-Gang-Automatgetriebe bekannte räumliche Lage von Vorschalt-Planetenradsatz, Ravigneaux-Hauptradsatz und den ersten fünf Schaltelementen im Getriebegehäuse relativ zueinander beizubehalten und das gegenüber der US 5,106,352 zusätzliche sechste Schaltelementes in dem Getriebegehäuse auf der Seite des Getriebes anzuordnen, die einem Antriebsmotor zugewandt ist, räumlich gesehen zwischen einer antriebsseitigen Getriebegehäusewand und ersten Schaltelement, über welches das Ausgangselement des Vorschalt-Planeteradsatzes mit dem zweiten Eingangselement des Hauptradsatzes verbindbar ist, räumlich gesehen aber auch zwischen der genannten antriebsseitigen Getriebegehäusewand und dem Vorschalt-Planetenradsatz. Das gegenüber der US 5,106,352 zusätzliche sechste Schaltelement ist also auf der dem Hauptradsatz abgewandten Seite des Vorschalt-Planetenradsatzes angeordnet.

Der vorliegenden Erfindung liegt die Aufgabe zugrunde, das in der JP 20011182785 A bzw. der DE 10318565.8 angegebene Mehrstufen-Automatgetriebe mit acht Vorwärtsgängen weiterzuentwickeln und alternative Bauteilanordnungen für die Planetenradsätze und die sechs Schaltelemente für zu schaffen.

Diese Aufgabe wird durch ein die Merkmale des Patentanspruchs 1 aufweisendes Mehrstufen-Automatgetriebe gelöst. Vorteilhafte Ausgestaltungen und Weiterbildungen der Erfindung ergeben sich aus den Unteransprüchen.

Die Erfindung geht aus von dem in der JP 2001/182785 A bzw. der noch nicht veröffentlichten Deutschen Patentanmeldung DE 10318565.8 der Anmelderin beschriebenen Getriebeschema für ein Mehrstufen-Automatgetriebe mit zumindest acht Vorwärtsgängen, umfassend eine Antriebswelle, eine Abtriebswelle, einen als Doppelplanetenradsatz ausgebildeten Vorschaltradsatz, einen als gekoppelten Planetenradsatz mit mindestens drei nicht gekoppelten Eingangselementen und einem Ausgangselement ausgebildeten Hauptradsatz, sowie mindestens sechs Schaltelemente. Durch selektives Schließen von jeweils zwei der Schaltelemente ist eine Drehzahl der Antriebswelle derart auf die Abtriebswelle übertragbar, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Die gesamte Offenbarung der noch nicht vorveröffentlichten Deutschen Patentanmeldung DE 10318565.8 der Anmelderin soll ausdrücklich auch Teil der Offenbarung der vorliegenden Erfindung sein.

Ein Eingangselement des Vorschaltradsatzes ist ständig mit der Antriebswelle verbunden. Ein Ausgangselement des Vorschaltradsatzes rotiert stets mit einer Drehzahl kleiner der Drehzahl der Antriebswelle. Ein drittes Element des Vorschaltradsatzes ist an einem Getriebegehäuse festgesetzt. Die Ausgangsdrehzahl des Vorschaltradsatzes ist über zwei Schaltelemente auf zwei unterschiedliche Eingangselemente der Hauptradsatzes übertragbar. Die Drehzahl der Antriebswelle ist über zwei andere Schaltelemente ebenfalls auf zwei verschiedene Eingangselemente des Hauptradsatzes übertragbar. Das Ausgangselement des Hauptradsatzes ist ständig mit der Abtriebswelle verbunden.

In einer bevorzugten Ausgestaltung dieses Getriebeschemas als 8-Gang-Automatgetriebe bildet ein (gekoppelter) Steg des Vorschaltradsatzes dessen stets mit der Antriebswelle verbundenes Eingangselement, ein Hohlrad des Vorschaltradsatzes dessen mit zwei verschiedenen Eingangselementen des Hauptradsatzes verbindbares Ausgangselement, und ein Sonnenrad des Vorschaltradsatzes dessen am Getriebegehäuse festgesetztes drittes Element. Vorschalt- und Hauptradsatz sind koaxial zueinander angeordnet. Der Hauptradsatz kann als Zweisteg-Vierwellen-Getriebe in Bauform eines "Ravigneaux-Planetenradsatzes" ausgeführt sein, mit einem ersten Sonnenrad als erstes Eingangselement des Hauptradsatzes, welches wahlweise mit dem Hohlrad des Vorschaltradsatzes oder der Antriebswelle verbindbar oder am Getriebegehäuse festsetzbar ist, mit einem zweiten Sonnenrad als zweites Eingangselement des Hauptradsatzes, welches mit dem Hohlrad des Vorschaltradsatzes verbindbar ist, mit einem (gekoppelten) Steg als drittes Eingangselement des Hauptradsatzes, welcher wahlweise mit der Antriebswelle verbindbar oder am Getriebegehäuse festsetzbar ist, sowie mit einem Hohlrad als Ausgangselement des Hauptradsatzes, welches stets mit der Abtriebswelle verbunden ist. In diesem Fall also ist
- ein Eingangselement des ersten Schaltelementes mit dem Ausgangselement des Vorschaltradsatzes verbunden,
- ein Ausgangselement des ersten Schaltelementes mit dem zweiten Eingangselement des Hauptradsatzes verbunden,
- ein Eingangselement des zweiten Schaltelementes mit dem Ausgangselement des Vorschaltradsatzes verbunden,
- ein Ausgangselement des zweiten Schaltelementes mit dem ersten Eingangselement des Hauptradsatzes verbunden,
- ein Eingangselement des dritten Schaltelementes mit dem Getriebegehäuse verbunden,
- ein Ausgangselement des dritten Schaltelementes mit dem ersten Eingangselement des Hauptradsatzes verbunden,
- ein Eingangselement des vierten Schaltelementes mit dem Getriebegehäuse verbunden,
- ein Ausgangselement des vierten Schaltelementes mit dem dritten Eingangselement des Hauptradsatzes verbunden,
- ein Eingangselement des fünften Schaltelementes mit der Antriebswelle verbunden,
- ein Ausgangselement des fünften Schaltelementes mit dem dritten Eingangselement des Hauptradsatzes verbunden,
- ein Eingangselement des sechsten Schaltelementes mit der Antriebswelle verbunden,
- ein Ausgangselement des sechsten Schaltelementes mit dem ersten Eingangselement des Hauptradsatzes verbunden, sowie
- das Ausgangselement des Hauptradsatzes ständig mit der Abtriebswelle verbunden.

Der Hauptradsatz kann aber auch als Zweisteg-Vierwellen-Getriebe mit zwei gekoppelten Einsteg-Planetenradsätzen ausgebildet sein, wobei beispielsweise das wahlweise mit dem Hohlrad des Vorschaltradsatzes oder der Antriebswelle verbindbare oder am Getriebegehäuse festsetzbare erste Eingangselement dieses Hauptradsatzes durch ein Sonnenrad des ersten dieser beiden Einsteg-Planetenradsätzen des Hauptradsatzes und ein mit diesem ersten Sonnenrad des Hauptradsatzes verbundenen Steg des zweiten dieser beiden Einsteg-Planetenradsätzen des Hauptradsatzes gebildet wird, und wobei das mit dem Hohlrad des Vorschaltradsatzes verbindbare zweite Eingangselement dieses Hauptradsatzes durch ein Sonnenrad des zweiten der beiden Einsteg-Planetenradsätzen des Hauptradsatzes gebildet wird, und wobei das wahlweise mit der Antriebswelle verbindbare oder am Getriebegehäuse festsetzbare dritte Eingangselement des Hauptradsatzes durch einen Steg des ersten der beiden Einsteg-Planetenradsätzen des Hauptradsatzes und einen mit diesem ersten Steg des Hauptradsatzes verbundenen Hohlrad des zweiten der beiden Einsteg-Planetenradsätzen des Hauptradsatzes gebildet wird, und wobei ein Hohlrad des ersten der beiden Einsteg-Planetenradsätzen des Hauptradsatzes als Ausgangselement dieses Hauptradsatzes stets mit der Abtriebswelle verbunden ist. In diesem Fall entspricht die Anbindung der Ein- und Ausgangselemente der sechs Schaltelemente an die drei Eingangselemente des Hauptradsatzes der zuvor am Beispiel des Ravigneaux-Hauptradsatzes beschriebenen Anbindung.

Der Hauptradsatz kann beispielsweise auch als Dreisteg-Fünfwellen-Getriebe mit drei gekoppelten Einsteg-Planetenradsätzen ausgebildet sein, oder auch als reduziertes Dreisteg-Fünfweiten-Getriebe mit drei gekoppelten Einsteg-Planetenradsätzen, bei denen zumindest zwei dieser Einzel-Planetenradsätze über einen gemeinsamen Steg und ein weiteres gemeinsames Zentralrad (also entweder über deren Sonnenräder oder über deren Hohlräder) miteinander gekoppelt ("reduziert") sind. Analog dazu kann der Hauptradsatz beispielsweise auch als "reduziertes Viersteg-Sechswetien-Getriebe ausgebildet sein, bei dem die dabei im Prinzip vorhandenen vier miteinander gekoppelten Einzel-Planetenradsätze derart zusammengefasst sind, dass der Hauptradsatz nur noch zwei Stege aufweist. Im Unterschied zu der Anbindung der sechs Schaltelemente an die Eingangselemente eines Hauptradsatzes vom Typ "Zweisteg-Vierwellen-Planetengetriebe bieten sich hinsichtlich der kinematischen Anbindung der Ein- und Ausgangselemente des dritten und sechsten Schaltelementes an die einzelnen Hauptradsatz-Elemente verschiedene Möglichkeiten, wobei dann gilt:
- das Eingangselement des dritten Schaltelementes ist mit dem Getriebegehäuse verbunden,
- das Ausgangselement des dritten Schaltelementes ist mit dem ersten Eingangselement des Hauptradsatzes oder einem in einem Drehzahlplan zu diesem ersten Eingangselement benachbarten Eingangselement des Hauptradsatzes verbunden,
- das Eingangselement des sechsten Schaltelementes ist mit der Antriebswelle verbunden,
- das Ausgangselement des sechsten Schaltelementes ist mit dem ersten Eingangselement des Hauptradsatzes oder einem in dem Drehzahlplan zu diesem ersten Eingangselement benachbarten Eingangselement des Hauptradsatzes verbunden.

In allen genannten Ausführungsvarianten sind im ersten Vorwärtsgang das erste und vierte Schaltelement, im zweiten Vorwärtsgang das erste und dritte Schaltelement, im dritten Vorwärtsgang das erste und zweite Schaltelement, im vierten Vorwärtsgang das erste und sechste Schaltelement, im fünften Vorwärtsgang das erste und fünfte Schaltelement, im sechsten Vorwärtsgang das fünfte und sechste Schaltelement, im siebten Vorwärtsgang das zweite und fünfte Schaltelement und im achten Vorwärtsgang das dritte und fünfte Schaltelement geschlossen. Im Rückwärtsgang sind das vierte Schaltelement und zusätzlich entweder das zweite oder das sechste Schaltelement geschlossen.

Gemäß der Erfindung wird nun vorgeschlagen, dass das fünfte Schaltelement, über welches die Antriebswelle des Getriebes mit dem dritten Eingangselement des Hauptradsatzes verbindbar ist, und das sechste Schaltelement, über welches die Antriebswelle des Getriebes mit dem ersten oder einem (in dem Drehzahlplan zu diesem ersten Eingangselement des Hauptradsatzes benachbarten) vierten Eingangselement des Hauptradsatzes verbindbar ist, eine Baugruppe bilden, umfassend einen für das fünfte und sechste Schaltelement gemeinsamen Lamellenträger, je ein Lamellenpaket für das fünfte und sechste Schaltelement sowie je eine Servoeinrichtung für das fünfte und sechste Schaltelement zur Betätigung des jeweiligen Lamellenpaketes des fünften bzw. sechsten Schaltelementes. Dabei bildet der für das fünfte und sechste Schaltelement gemeinsame Lamellenträger sowohl das Eingangselement des fünften Schaltelementes als auch das Eingangselement des sechsten Schaltelementes.

In einer ersten vorteilhaften Ausgestaltung der durch das fünfte und sechste Schaltelement gebildeten Baugruppe wird vorgeschlagen, dass diese Baugruppe räumlich gesehen zumindest überwiegend auf der dem Hauptradsatz abgewandten Seite des Vorschaltradsatzes angeordnet ist. Dabei können das erste Schaltelement, über welches das Ausgangselement des Vorschaltradsatzes mit dem zweiten Eingangselement des Hauptradsatzes verbindbar ist, und das zweite Schaltelement, über welches das Ausgangselement des Vorschaltradsatzes mit dem ersten Eingangselement des Hauptradsatzes verbindbar ist, zumindest überwiegend auf der Seite des Vorschaltradsatzes angeordnet sein, die der durch das fünfte und sechste Schaltelement gebildeten genannten Baugruppe gegenüberliegt, wobei dann das erste Schaltelement vorzugsweise näher am Vorschaltradsatz angeordnet ist als das zweite Schaltelement. Bei einer derartigen räumlichen Anordnung des ersten, zweiten, fünften und sechsten Schaltelementes kann einerseits das mit dem ersten bzw. vierten Eingangselement des Hauptradsatzes verbundene Ausgangselement des sechsten Schaltelementes den Vorschaltradsatz sowie das erste und zweite Schaltelement in axialer Richtung radial vollständig übergreifen, andererseits kann auch das mit dem dritten Eingangselement des Hauptradsatzes verbundene Ausgangselement des fünften Schaltelementes das genannte Ausgangselement des sechsten Schaltelementes in axialer Richtung radial zumindest teilweise übergreifen. Zudem ist es bei einer derartigen räumlichen Anordnung des ersten, zweiten, fünften und sechsten Schaltelementes zweckmäßig, wenn das dritte Schaltelement, über welches das erste Eingangselement des Hauptradsatzes oder ein (in dem Drehzahlplan zu diesem ersten Eingangselement des Hauptradsatzes benachbartes) viertes Eingangselement des Hauptradsatzes am Getriebegehäuse festsetzbar ist, und/oder das vierte Schaltelement, über welches das dritte Eingangselement des Hauptradsatzes an dem Getriebegehäuse festsetzbar ist, auf der Seite des Vorschaltradsatzes angeordnet ist, die der durch das fünfte und sechste Schaltelement gebildeten Baugruppe gegenüberliegt.

In einer zweiten vorteilhaften Ausgestaltung der durch das fünfte und sechste Schaltelement gebildeten Baugruppe wird vorgeschlagen, dass diese Baugruppe räumlich gesehen zumindest überwiegend in einem Bereich axial zwischen Vorschaltradsatzes und Hauptradsatz angeordnet ist. Dabei kann die Baugruppe des fünften und sechsten Schaltelementes räumlich gesehen zumindest teilweise radial unter einem Lamellenpaket des zweiten Schaltelementes angeordnet sein, wobei dann das mit dem ersten Eingangselement des Hauptradsatzes verbundene Ausgangselement des zweiten Schaltelementes die genannte Baugruppe des fünften und sechsten Schaltelementes in axialer Richtung radial zumindest teilweise übergreift. Auch kann die Baugruppe des fünften und sechsten Schaltelementes räumlich gesehen zumindest teilweise radial unter einem Lamellenpaket des ersten Schaltelementes angeordnet sein. Bei einer derartigen räumlichen Anordnung des ersten, zweiten, fünften und sechsten Schaltelementes ist es zweckmäßig, wenn das dritte und/oder vierte Schaltelement auf der Seite des Hauptradsatzes angeordnet sind, die dem Vorschaltradsatzes gegenüberliegt.

In einer dritten vorteilhaften Ausgestaltung der durch das fünfte und sechste Schaltelement gebildeten Baugruppe wird vorgeschlagen, dass diese Baugruppe räumlich gesehen zumindest überwiegend auf der dem Vorschaitradsatz abgewandten Seite des Hauptradsatzes angeordnet ist. Dabei können das erste und zweite Schaltelement zumindest überwiegend auf der Seite des Hauptradsatzes angeordnet sein, die der genannten Baugruppe des fünften und sechsten Schaltelementes gegenüberliegt. Bei einer derartigen räumlichen Anordnung des fünften und sechsten Schaltelementes ist es zweckmäßig, wenn das dritte und/oder vierte Schaltelement zumindest überwiegend auf der gleichen Seite des Hauptradsatzes angeordnet sind, an der auch die genannte Baugruppe des fünften und sechsten Schaltelementes angeordnet ist.

Bei allen diesen drei genannten Ausgestaltungen der durch das fünfte und sechste Schaltelement gebildeten Baugruppe kann das Lamellenpaket des fünften Schaltelementes wahlweise entweder auf einem größeren Durchmesser angeordnet sein als das Lamellenpaket des sechsten Schaltelementes (in diesem Fall räumlich gesehen vorzugsweise zumindest teilweise radial über dem genannten Lamellenpaket des sechsten Schaltelementes), oder auf einem kleineren Durchmesser als das Lamellenpaket des sechsten Schaltelementes (in diesem Fall räumlich gesehen vorzugsweise zumindest teilweise radial unter dem genannten Lamellenpaket des sechsten Schaltelementes), oder aber auf einem zumindest ähnlichen Durchmesser angeordnet sein wie das Lamellenpaket des sechsten Schaltelementes (in diesem Fall räumlich gesehen vorzugsweise näher am Vorschaltradsatz als das genannte Lamellenpaket des sechsten Schaltelementes).

Die Erfindung und deren vorteilhafte Ausgestaltungen und Weiterbildungen werden im folgenden anhand der Figuren näher erläutert, wobei die Bezugszeichen vergleichbarer Bauelemente in allen Figuren auch gleichartig bezeichnet sind. Es zeigen:
- Fig. 1A: ein Getriebeschema gemäß dem gattungsgemäßen Stand der Technik;
- Fig. 1B: ein Schaltschema des Getriebes gemäß Fig. 1;
- Fig. 1C: ein Drehzahlplan des Getriebes gemäß Fig. 1;
- Fig. 2: ein beispielhaftes erstes erfindungsgemäßes Getriebeschema;
- Fig. 3: ein beispielhaftes zweites erfindungsgemäßes Getriebeschema;
- Fig. 4: ein beispielhaftes drittes erfindungsgemäßes Getriebeschema;
- Fig. 5: ein beispielhaftes viertes erfindungsgemäßes Getriebeschema;
- Fig. 6: ein beispielhaftes fünftes erfindungsgemäßes Getriebeschema;
- Fig. 7: ein beispielhaftes sechstes erfindungsgemäßes Getriebeschema;
- Fig. 8: ein beispielhaftes siebtes erfindungsgemäßes Getriebeschema;
- Fig. 9: ein beispielhaftes achtes erfindungsgemäßes Getriebeschema
- Fig. 10: ein beispielhaftes neuntes erfindungsgemäßes Getriebeschema;
- Fig. 11: ein beispielhaftes zehntes erfindungsgemäßes Getriebeschema; und
- Fig. 12: eine Ausgestaltungsvariante des zehnten erfindungsgemäßen Getriebeschema gemäß Fig. 11.

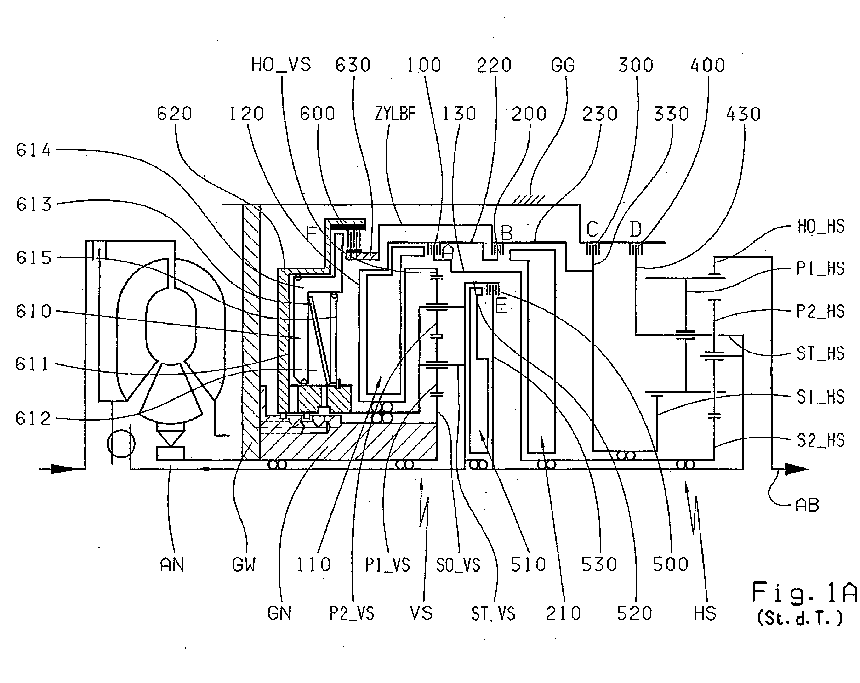

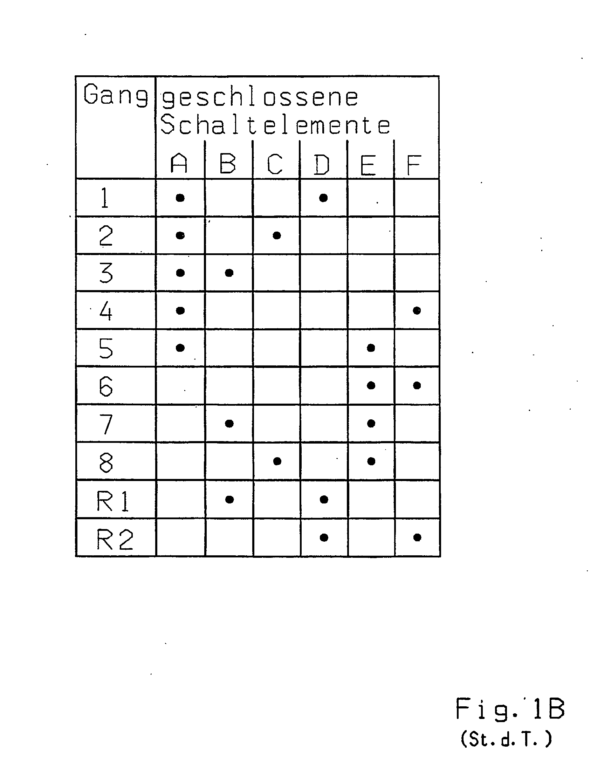

Zum besseren Verständnis wird zunächst der der Erfindung zugrundeliegende Stand der Technik erläutert. Fig. 1A zeigt dabei das Getriebeschema des gattungsgemäßen Standes der Technik gemäß DE 10318565.8, Fig. 1B das entsprechende Schaltschema. In Fig. 1A ist mit AN eine Antriebswelle des Automatgetriebes bezeichnet, die mit einem (nicht dargestellten) Antriebsmotor des Automatgetriebes wirkverbunden ist, im dargestellten Beispiel über einen Drehmomentwandler mit Torsionsdämpfer und Wandlerüberbrückungskupplung. Mit AB ist eine koxial zur Antriebswelle AN angeordnete Abtriebswelle des Automatgetriebes bezeichnet, die mit mindestens einer Antriebsachse des Kraftfahrzeugs wirkverbunden ist. Selbstverständlich könnte anstelle des Drehmomentwandlers auch eine Reibkupplung als Anfahrelement des Automatgetriebes zwischen Antriebsmotor und Automatgetriebe angeordnet sein. Auch könnte der Antriebsmotor nur über einen einfachen Torsionsdämpfer oder ein Zweimassenschwungrad oder eine starre Welle mit der Antiebswelle AN des Getriebes verbunden sein, wobei in diesem Fall ein innerhalb des Automatgetriebes angeordnetes Reibschaltelement als Anfahrelement des Getriebes ausgebildet sein muß.

Das Automatgetriebe weist einen Vorschaltradsatz VS und einen koaxial neben (aber nicht unmittelbar neben) diesem Vorschaltradsatz VS angeordneten Hauptradsatz HS auf. Der Vorschaltradsatz VS ist als Plus-Planetenradsatz in Doppelplanetenbauweise ausgeführt, mit einem Hohlrad HO_VS, mit einem Sonnenrad SO_VS, sowie mit einem aus zwei Einzeistegen gebildeten Steg ST_VS, an dem innere Planetenräder P1_VS, die mit dem Sonnenrad SO_VS kämmen, und äußere Planetenräder P2_VS, die mit den inneren Planetenrädern P1_VS und dem Hohlrad HO_VS kämmen, verdrehbar gelagert sind. Dabei arbeitet dieser Vorschaltradsatz VS als nicht schaltbare Reduzierstufe und erzeugt eine Ausgangsdrehzahl, die vom Betrag her kleiner ist als eine Eingangsdrehzahl der Antriebswelle AN des Automatgetriebes. Hierzu ist das Sonnenrad SO_VS des Vorschaltradsatzes VS an einem Getriebegehäuse GG festgesetzt und der Steg ST_VS ständig mit der Antriebswelle AN verbunden. Das Hohlrad HO_VS bildet also das Ausgangselement des Vorschaltradsatzes VS und ist über zwei Schaltelemente A, B mit einzelnen Eingangselementen des Hauptradsatzes HS verbindbar.

Der Hauptradsatz HS ist als gekoppeltes Zweisteg-Vierwellen-Planetengetriebe ausgebildet, mit drei nicht miteinander gekoppelten Eingangselementen und einem Ausgangselement, in Bauform eines Ravigneaux-Radsatzes mit zwei Sonnenrädern S1_HS und S2_HS, einem Hohlrad HO_HS sowie einem gekoppelten Steg ST_HS, an dem lange Planetenräder P1_HS, die mit dem ersten Sonnenrad S1_HS und dem Hohlrad HO_HS kämmen, und kurze Planetenräder P2_HS, die mit dem zweiten Sonnenrad S2_HS und den langen Planetenrädern P1_HS kämmen, verdrehbar gelagert sind. Dabei bildet das erste Sonnenrad S1_HS das erste Eingangselement des Hauptradsatzes HS, das zweite Sonnenrad S2_HS das zweite Eingangselement des Hauptradsatzes HS, der gekoppelte Steg ST_HS das dritte Eingangselement des Hauptradsatzes HS und das Hohlrad HO_HS das Ausgangselement des Hauptradsatzes HS.

Das Automatgetriebe weist insgesamt sechs Schaltelemente A bis F auf. Die Schaltelemente A, B, E und F sind als Kupplung ausgebildet, die Schaltelemente C und D als Bremse. Hierzu ist das zweite Sonnenrad S2_HS des Hauptradsatzes HS über das erste Schaltelement A mit dem Hohlrad HO_VS des Vorschaltradsatzes VS verbindbar. Weiterhin ist hierzu das erste Sonnenrad S1_HS des Hauptradsatzes HS über das zweite Schaltelement B mit dem Hohlrad HO_VS des Vorschaltradsatzes VS verbindbar, über das dritte Schaltelement C an dem Getriebegehäuse GG festsetzbar und über das sechste Schaltelement F mit der Antriebswelle AN verbindbar. Weiterhin ist hierzu der Steg S1_HS des Hauptradsatzes HS über das vierte Schaltelement D an dem Getriebegehäuse GG festsetzbar und über das fünfte Schaltelement E mit der Antriebswelle AN verbindbar. Infolge dieser Anbindung der einzelnen Elemente des Hauptradsatzes HS an die einzelnen Schaltelemente ist der Steg ST_HS des Hautradsatzes HS also durch ein gleichzeitiges Schließen des fünften und sechsten Schaltelementes E, F auch mit dem ersten Sonnenrad S1_HS des Hauptradsatzes HS verbindbar. Das Hohlrad HO_HS des Hauptradsatzes HS ist ständig und ausschließlich mit der Abtriebswelle AB verbunden.

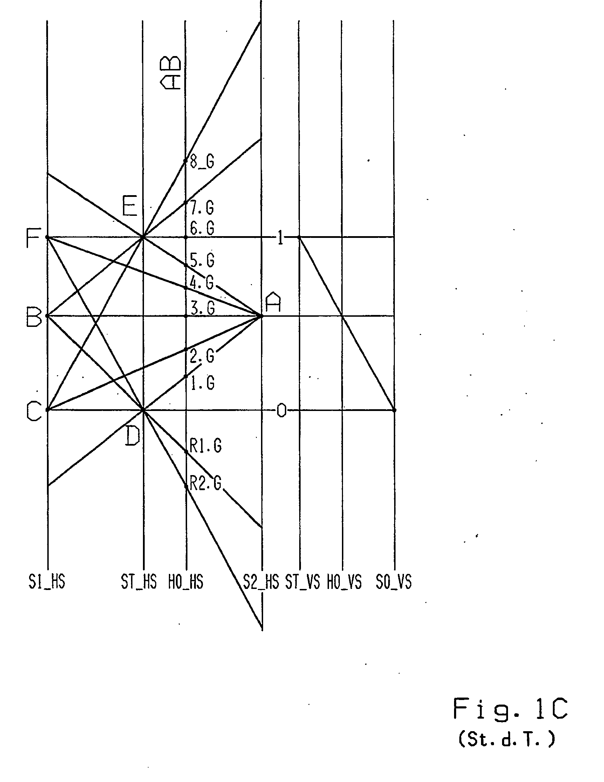

Fig. 1B zeigt ein Schaltschema des in Fig. 1A dargestellten Mehrstufen-Automatgetriebes. Es sind insgesamt acht Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Im ersten Gang "1" sind Kupplung A und Bremse D geschlossen, im zweiten Gang "2" Kupplung A und Bremse C, im dritten. Gang "3" die Kupplungen A und B, im vierten Gang "4" die Kupplungen A und F, im fünften Gang "5" die Kupplungen A und E, im sechsten Gang "6" die Kupplungen E und F, im siebten Gang "7" die Kupplungen B und E, und im achten Gang "8" Bremse C und Kupplung E. In einem ersten Rückwärtsgang "R1" sind Kupplung B und Bremse D geschlossen. Es kann auch ein zweiter Rückwärtsgang "R2" vorgesehen sein, in dem Kupplung F und Bremse D geschlossen sind. Fig. 1C zeigt ein Drehzahlplan des in Fig. 1A dargestellten Mehrstufen-Automatgetriebes. Fig. 1C zeigt einen Drehzahlplan des in Fig. 1A dargestellten Mehrstufen-Automatgetriebes.

Zurückkommend auf Fig. 1A, sind die Lamellenpakete sowie die Ein-und Ausgangselemente der Schaltelemente einheitlich bezeichnet. So ist das Lamellenpaket des ersten Schaltelementes A mit 100 bezeichnet, das Eingangselement des ersten Schaltelementes A mit 120, das Ausgangselement des ersten Schaltelementes A mit 130, sowie eine Servoeinrichtung zur Betätigung des Lamellenpaketes 100 des ersten Schaltelementes A mit 110. Entsprechend sind die Lamellenpakete der anderen Schaltelemente B, C, D, E und F mit 200, 300, 400, 500 und 600 bezeichnet, die Eingangselemente der anderen Schaltelemente B, E und F mit 220, 520 und 620. Entsprechend sind auch die Ausgangselemente der anderen Schaltelemente B, C, D, E und F mit 230, 330, 430, 530 und 630 bezeichnet, sowie die Servoeinrichtungen der anderen Kupplungen B, E und F zum Betätigen deren jeweiligen Lamellenpakete 200 bzw. 500 bzw. 600 mit 210, 510 und 610.

Hinsichtlich der räumlichen Anordnung der Schaltelemente und Radsätze relativ zueinander innerhalb des mit GG bezeichneten Getriebegehäuses lehrt die DE 10318565.8 folgendes: Das als Kupplung ausgebildete fünfte Schaltelement E ist räumlich gesehen axial zwischen Vorschaltradsatz VS und Hauptradsatz HS angeordnet, axial unmittelbar angrenzend an den Vorschaltradsatz VS. Das ebenfalls als Kupplung ausgebildete zweite Schaltelement B ist ebenfalls axial zwischen Vorschaltradsatz VS und Hauptradsatz HS angeordnet, wobei das Lamellenpaket 200 dieser Kupplung B räumlich gesehen in etwa radial über dem Lamellenpaket 500 der Kupplung E angeordnet ist und die Servoeinrichtung 210 der Kupplung B axial an die Kupplung E auf deren dem Vorschaltradsatz VS abgewandten Seite angrenzt. Axial in Richtung Hauptradsatz HS gesehen schließen sich an die Kupplung B zuerst das als Bremse ausgebildete dritte Schaltelement C, dann das ebenfalls als Bremse ausgebildete vierte Schaltelement D und dann der Hauptradsatz HS an. Das Lamellenpaket 100 des als Kupplung ausgebildeten ersten Schaltelementes A ist räumlich gesehen in etwa über dem Vorschaltradsatz VS angeordnet. Die Servoeinrichtung 110 dieser Kupplung A ist zumindest überwiegend auf der dem Hauptradsatz HS abgewandten Seite des Vorschaltradsatzes VS angeordnet. Auf der dem Vorschaltradsatz VS abgewandten Seite der Servoeinrichtung 110 der Kupplung A, räumlich gesehen axial zwischen der Kupplung A und einer antriebsseitigen getriebegehäusefesten Gehäusewand GW, also auf der dem Hauptradsatz HS abgewandten Seite von Kupplung A und Vorschaltradsatz VS, ist das als Kupplung ausgebildete sechste Schaltelement F angeordnet.

Als Ausführungsbeispiel für eine Servoeinrichtung eines Schaltelementes ist in Fig. 1A die Servoeinrichtung 610 des sechsten Schaltelementes F näher detailliert. So ist diese Servoeinrichtung 610 innerhalb eines zylinderförmigen Lamellenträgers angeordnet, der das Eingangselement 620 der Kupplung F bildet und entsprechend stets mit Drehzahl der Antriebswelle AN des Getriebes rotiert. Die Servoeinrichtung 610 weist einen Druckraum 611 auf, der durch einen Mantelflächenabschnitt des Lamellenträgers der Kupplung F und einen Kolben 614 der Servoeinrichtung 610 gebildet wird. Bei einer Druckbeaufschlagung dieses Druckraums 611 bewegt sich der Kolben 614 gegen die Kraft eines hier beispielhaft als Tellerfeder ausgebildeten Rückstelfelementes 613 der Servoeinrichtung 610 axial in Richtung des Vorschaltradsatzes VS und betätigt bzw. schließt das Lamellenpaket 600 der Kupplung F. Zur vorzugsweise vollständigen Kompensation eines dynamischen Druckes des rotierenden Druckraumes 611 weist die Servoeinrichtung 610 zusätzlich einen mit Schmiermittel drucklos befüllbaren Druckausgleichsraum 612 auf, der durch eine Fläche des Kolbens 614 und eine Stauscheibe 615 gebildet wird. Das Eingangselement 620 ist auf einer getriebegehäusefesten Nabe GN verdrehbar gelagert, die sich ausgehend von der getriebegehäusefesten Gehäusewand GW im Innenraum des Getriebegehäuses GG axial in Richtung des Vorschaltradsatzes VS bis zum Sonnenrad SO_VS des Vorschaltradsatzes VS erstreckt und mit diesem Sonnenrad SO_VS verdrehfest verbunden ist. Entsprechend weist diese getriebegehäusefeste Nabe GN auch Kanäle zur Druck-und Schmiermittelzuführung zum Druckraum bzw. Druckausgleichsraum der Kupplung F auf.

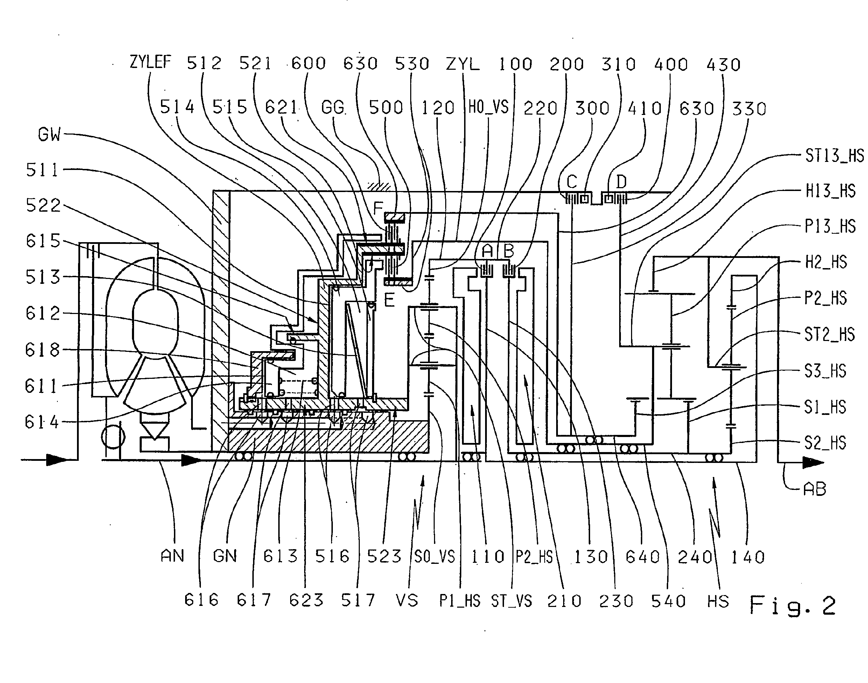

Anhand Fig. 2 wird nun ein erstes beispielhaftes Getriebeschema gemäß der vorliegenden Erfindung erläutert. Wie beim gattungsgemäßen Stand der Technik gemäß Fig. 1 weist das erfindungsgemäße Automatgetriebe eine Antriebswelle AN, eine Abtriebswelle AB, einen als Einfach-Planetenradsatz in Doppelplanetenbauweise ausgeführten Vorschaltradsatz VS, einen aus miteinander gekoppelten Planetenradsätzen gebildeten mehrgliedrigen Hauptradsatz HS, sowie sechs Schaltelemente A bis F. Vorzugsweise ist durch selektives Schließen von jeweils zwei dieser sechs Schaltelemente A bis F eine Drehzahl der Antriebswelle AN über die Radsätze VS, HS in mindestens acht verschiedenen Vorwärtsgängen übertragbar, wobei bei jedem Gangwechsel von einem Gang in den jeweils nächstfolgend höheren oder nächstfolgend niedrigeren Gang stets nur ein zuvor geschaltetes Schaltelement geöffnet und ein zuvor nicht geschaltetes Schaltelement geschlossen wird. Vorschaltradsatz VS und Hauptradsatz HS. sind koaxial zueinander angeordnet. Beispielhaft verlaufen Antriebswelle AN und Abtriebswelle AB koaxial zueinander, können jedoch durch vergleichsweise einfache Modifikation auch achsparallel oder winklig zueinander verlaufen. Die kinematische Kopplung von Vorschaltradsatz VS und Hauptradsatz HS an die Schaltelemente A bis F und an die Antriebs- und Abtriebswelle AN, AB wurde im wesentlichen von Fig. 1 übernommen, sodaß auch für das erste erfindungsgemäße Getriebe gemäß Fig. 2 die in Fig. 1B dargestellte Schaltlogik gilt.

Ein Detailunterschied zu Fig. 1 betrifft die Ausbildung des Hauptradsatzes HS, der nunmehr beispielhaft als ein "auf eine Zweisteg-Einheit reduziertes Dreisteg-Fünfwellen-Planetengetriebe" mit vier voneinander unabhängigen Eingangselementen und einem Ausgangselement ausgeführt ist. Dieser "neue" Hauptradsatz HS gemäß Fig. 2 ist aus drei einzelnen miteinander gekoppelten Planetenradsätze gebildet, wobei wiederum zwei dieser drei einzelnen Planetenradsätze als ein Planetenradsatz zusammengefaßt sind, der dann mit dem verbliebenen Einzel-Planetenradsatz gekoppelt ist. Dabei umfasst der "neue" Hauptradsatz HS drei Sonnenräder S1_HS, S2_HS und S3_HS, nur zwei Hohlräder H13_HS und H2_HS, sowie nur zwei Stege ST13_HS und ST2_HS mit jeweils daran verdrehbar gelagerten Planetenrädern P13_HS bzw. P2_HS. Das zweite Sonnenrad S2_HS, der zweite Steg ST2_HS, die kurzen Planetenräder P2_HS und das zweite Hohlrad H2_HS sind dem verbleibenden Einzel-Planetenradsatz des Hauptradsatzes HS zugeordnet, wobei diese kurzen Planetenräder P2_HS mit dem zweiten Sonnenrad S2_HS und dem zweiten Hohlrad H2_HS des Hauptradsatzes HS kämmen. Das erste und dritte Sonnenrad S1_HS und S3_HS, der gekoppelte Steg ST13_HS, die langen Planetenräder P13_HS und das gekoppelte Hohlrad H13_HS sind dem gekoppelten Planetenradsatz des Hauptradsatzes HS zugeordnet, wobei diese langen Planetenräder P13_HS mit beiden Sonnenrädern S1_HS und S3_HS und mit dem gekoppelten Hohlrad H13_HS des Hauptradsatzes HS kämmen. Im Prinzip kann der so beschriebene gekoppelte Planetenradsatz des Hauptradsatzes HS also auch als ein Einzel-Planetenradsatz mit geteiltem Sonnenrad verstanden werden. Diese "Teilung des genannten Sonnenrades in zwei einzelne Sonnenräder (S1_HS, S3_HS) wiederum ist wichtig, um die kinematische Kopplung der Eingangselemente des Hauptradsatzes HS an die verschiedenen Schaltelemente A bis F und die kinematische Kopplung des Ausgangselementes des Hauptradsatzes HS an die Abtriebswelle AB des Getriebes, so wie aus dem gattungsgemäßen Stand der Technik gemäß Fig. 1 vorgegeben, nunmehr in Verbindung mit der nachfolgend beschriebenen erfindungsgemäßen Bauteilanordnung darstellen zu können. Räumlich gesehen ist der das zweite Sonnenrad S2_HS aufweisende Einzel-Planetenradsatz des Hauptradsatzes HS auf der vorschaltradsatzfemen Seite des Hauptradsatzes HS angeordnet, wohingegen das dritte Sonnenrad S3_HS auf der vorschaltradsatznahen Seite des Hauptradsatzes HS angeordnet ist. Das erste Sonnenrad S1_HS des Hauptradsatzes HS ist also axial zwischen den anderen Sonnenrädern S3_HS und S2_HS des Hauptradsatzes HS angeordnet.

Der Vorschaltradsatz VS umfasst wie in Fig. 1 ein Sonnenrad SO_VS, einen gekoppelten Steg ST_VS mit daran verdrehbar gelagerten inneren und äußeren Planetenrädern P1_VS, P2_VS sowie ein Hohlrad HO_VS. Das Sonnenrad SO_VS ist dabei an einer mit dem Getriebegehäuse GG verdrehfest verbundenen Nabe GN, die sich ausgehend von einer getriebegehäusefesten Gehäusewand GW in den Getriebeinnenraum in Richtung Vorschaltradsatz VS erstreckt, festgesetzt. Die genannte Gehäusewand GW bildet hier eine Außenwand des Getriebes, die einerseits auf der dem Hauptradsatz HS abgewandten Seite des Vorschaltradsatzes VS angeordnet ist, andererseits einem hier zur Vereinfachung nicht näher dargestellten und mit der Antriebswelle AN wirkverbundenen Antriebsmotor des Getriebes zugewandt ist. In dem in Fig. 2 dargestellten Getriebeschema ist beispielhaft ein Drehmomentwandler in Kraftflußrichtung zwischen Antriebsmotor und Antriebswelle AN angeordnet. Der gekoppelte Steg ST_VS bildet das Eingangselement des Vorschaltradsatzes VS, wobei ein dem Hauptradsatz HS zugewandtes Stegblech dieses Stegs ST_VS mit der Antriebswelle AN des Getriebes verdrehfest verbunden ist. Das Hohlrad HO_VS bildet das Ausgangselement des Vorschaltradsatzes HS und erzeugt eine Drehzahl, die kleiner ist als die Drehzahl der Antriebswelle AN und die gleiche Drehrichtung hat wie die Drehzahl der Antriebswelle AN. Diese Ausgangsdrehzahl des Vorschaltradsatzes VS ist über das erste und zweite Schaltelement A und B auf zwei verschiedenen Eingangselemente des Hauptradsatzes HS übertragbar.

Das erste und zweite Sonnenrad S1_HS, S2_HS des Hauptradsatzes HS sind verdrehfest miteinander verbunden, bilden das erste Eingangselement des Hauptradsatzes HS und sind über das hier als Lamellenkupplung ausgebildete zweite Schaltelement B mit dem Ausgangselement - also dem Hohlrad HO_VS - des Vorschaltradsatzes VS verbindbar. Das zweite Hohlrad H2_HS des Hauptradsatzes HS bildet das zweite Eingangselement des Hauptradsatzes HS und ist über das hier als Lamellenkupplung ausgebildete erste Schaltelement A ebenfalls mit dem Ausgangselement - also dem Hohlrad HO_VS - des Vorschaltradsatzes VS verbindbar. Der gekoppelte Steg ST13_HS des Hauptradsatzes HS bildet das dritte Eingangselement des Hauptradsatzes HS und ist einerseits über das hier als Lamellenkupplung ausgebildete fünfte Schaltelement E mit des Antriebswelle AN verbindbar, andererseits wahlweise auch über das hier beispielhaft als Lamellenbremse ausgebildete vierte Schaltelement D am Getriebegehäuse GG festsetzbar. Das dritte Sonnenrad S3_HS des Hauptradsatzes HS bildet das vierte Eingangselement des Hauptradsatzes HS und ist einerseits über das hier als Lamellenkupplung ausgebildete sechste Schaltelement F mit des Antriebswelle AN verbindbar, andererseits wahlweise auch über das hier beispielhaft als Lamellenbremse ausgebildete dritte Schaltelement C am Getriebegehäuse GG festsetzbar. Das gekoppelte Hohlrad H13_HS und der zweite Steg ST2_HS des Hauptradsatzes HS sind verdrehfest miteinander verbunden, bilden das Ausgangselement des Hauptradsatzes HS und sind mit der Abtriebswelle AB des Getriebes verbunden.

Aus dem Aufbau des Hauptradsatzes HS und seiner kinematischen Kopplung an die einzelnen Schaltelemente A bis F ist ersichtlich, dass im Unterschied zu Fig. 1 in Fig. 2 die in Fig. 1 bestehende feste Kopplung zwischen den Ausgangselementen 230, 330, 630 der drei Schaltelemente B, C, F und dem ersten Eingangselement des Hauptradsatzes HS (in Fig. 1 also dem Sonnenrad S1_HS) ersetzt ist durch eine Kombination aus einer festen Kopplung zwischen Ausgangselement 230 der Kupplung B und dem ersten Eingangselement des Hauptradsatzes HS (in Fig. 2 also den gekoppelten Sonnenräder S1_HS und S2_HS), aus einer festen Kopplung zwischen Ausgangselement 330 der Bremse C und Ausgangselement 630 der Kupplung F und dem vierten Eingangselement des Hauptradsatzes HS (in Fig. 2 also dem Sonnenrad S3_HS, sowie aus einer kinematischen Kopplung zwischen dem ersten und vierten Eingangselement des Hauptradsatzes HS über die langen Planetenräder P13_HS des Hauptradsatzes HS. Entsprechend fallen die Linien des ersten und vierten Eingangselementes des Hauptradsatzes HS in einem Drehzahlplan des erfindungsgemäßen Getriebes gemäß Fig. 2 zusammen. Sollte in einer Modifikation des Hauptradsatzes HS vorgesehen sein, dass die genannten langen Planetenräder P13_HS abweichend von der Darstellung in Fig. 2 als Stufenplarietenräder ausgebildet sind, so würden in dem zu dieser Modifikation zugehörigen Drehzahlplan die Linien des ersten und vierten Eingangselementes des modifizierten Hauptradsatzes benachbart zueinander liegen.

Gemäß der Erfindung bilden das fünfte und sechste Schaltelement E, F eine fertigungstechnisch einfach vormontierbare Baugruppe, die einen für das fünfte und sechste Schaltelement E, F gemeinsamen Lamellenträger ZYLEF, je ein Lamellenpaket 500, 600 für das fünfte und sechste Schaltelement E, F, sowie je eine Servoeinrichtung 510, 610 für das fünfte und sechste Schaltelement E, F zur Betätigung des jeweiligen Lamellenpaketes 500, 600 des fünften bzw. sechsten Schaltelementes E, F umfasst. Dabei bildet der für die beiden Kupplungen E, F gemeinsame Lamellenträger ZYLEF sowohl das Eingangselement 520 der Kupplung E als auch das Eingangselement 620 der Kupplung F. Wie in Fig. 2 ersichtlich, ist diese Baugruppe mit den beiden Kupplungen E, F räumlich gesehen auf der dem Hauptradsatz HS abgewandten Seite des Vorschaltradsatzes VS angeordnet. Je nach geometrischer Auslegung insbesondere des Vorschaltradsatzes VS und der Lamellenpakete 500, 600 der Kupplungen E, F kann in einer anderen Ausgestaltung der die Kupplungen E, F umfassenden Baugruppe auch vorgesehen sein, dass die Lamellenpakete 500, 600 der Kupplungen E, F abweichend von der Darstellung in Fig. 2 teilweise oder auch ganz in einem Bereich radial über dem Vorschaltradsatz VS angeordnet sind, wobei aber wesentliche Bauteile der die Kupplungen E, F umfassenden Baugruppe - insbesondere die Servoeinrichtungen 510, 610 der Kupplungen E, F - dann immer noch zumindest überwiegend auf der dem Hauptradsatz HS abgewandten Seite des Vorschaltradsatzes VS angeordnet sind.

Wie in Fig. 2 weiterhin ersichtlich, sind das hier als Lamellenkupplung ausgebildete erste Schaltelement A und das ebenfalls hier als Lamellenkupplung ausgebildete zweite Schaltelement B auf der Seite des Vorschaltradsatzes VS angeordnet, die der Baugruppe mit den beiden Kupplungen E, F gegenüberliegt, räumlich gesehen in einem Bereich axial zwischen Vorschaltradsatz VS und Hauptradsatz HS. Dabei ist die Kupplung A näher am Vorschaltradsatz VS angeordnet als die Kupplung B, wobei die Kupplung A hier axial unmittelbar an den Vorschaltradsatz VS auf dessen dem Hauptradsatz HS zugewandten Seite angrenzt und die Kupplung B axial unmittelbar an die Kupplung A auf deren dem Hauptradsatz HS zugewandten Seite angrenzt. Die Lamellenpakete 100, 200 der beiden Kupplungen A, B sind beispielhaft auf gleichem Durchmesser angeordnet, was die Verwendung von gleichen Lamellen für diese Kupplungen A, B ermöglicht. Ein Eingangselement 120 der Kupplung A ist beispielhaft als zylinderringförmiger Außenlamellenträger ausgebildet, der einerseits an seinem vorschaltradsatznahen Ende mit dem Hohlrad HO_VS verdrehfest verbunden ist und andererseits an seinem Innendurchmesser im Bereich seines hauptradsatznahen Endes ein geeignetes Mitnahmeprofil zur Aufnahme von beispielsweise als außenverzahnte Belaglamellen ausgebildeten Außenlamellen des Lamellenpaketes 100 der Kupplung A aufweist. Ein Eingangselement 220 der Kupplung B ist beispielhaft ebenfalls als zylinderringförmiger Außenlamellenträger ausgebildet und weist an seinem Innendurchmesser im Bereich seines hauptradsatznahen Endes ein geeignetes Mitnahmeprofil zur Aufnahme von beispielsweise als außenverzahnte Belaglamellen ausgebildeten Außenlamellen des Lamellenpaketes 200 der Kupplung B auf. An seinem der Kupplung A bzw. dem Vorschaltradsatz VS zugewandten Ende ist das Eingangselement 220 der Kupplung B mit dem Eingangselement 120 der Kupplung A verdrehfest verbunden, ist also über das Eingangselement 120 der Kupplung A mit dem Hohlrad HO_VS des Vorschaltradsatzes VS verbunden. Selbstverständlich können diese beiden Eingangselemente 120, 220 auch einstückig ausgeführt sein. Die Ausgangselemente 130, 230 beider Kupplungen A, B sind entsprechend als Innenlamellenträger ausgebildet und weisen an ihrem Außendurchmesser jeweils ein geeignetes Mitnahmeprofil zur Aufnahme von beispielsweise als innenverzahnte Stahllamellen ausgebildeten Innenlamellen des jeweiligen Lamellenpaketes 100 bzw. 200. Der weitgehend scheibenförmig ausgebildete Innenlamellenträger 130 der Kupplung A erstreckt sich hierbei in etwa parallel zum Vorschaltradsatz VS und ist in seinem Nabenbereich mit einer zweiten Sonnenwelle 140 verdrehfest verbunden. Diese zweite Sonnenwelle 140 wiederum erstreckt sich ausgehend von der Kupplung A axial in Richtung Hauptradsatz HS, durchdringt in ihrem Verlauf sowohl die neben der Kupplung A angeordnete Kupplung B als auch den Hauptradsatz HS zentrisch vollständig, und ist auf der vorschaltradsatzfernen Seite des Hauptradsatzes HS mit dem zweiten Hohlrad H2_HS des Hauptradsatzes HS verdrehfest verbunden. Bekanntlich bildet das genannte Hohlrad H2_HS das zweite Eingangselement des Hauptradsatzes HS. Der ebenfalls weitgehend scheibenförmig ausgebildete Innenlamellenträger 230 der Kupplung B erstreckt sich in etwa parallel zum Innenlamellenträger 130 der Kupplung A und ist in seinem Nabenbereich mit einer ersten Sonnenwelle 240 verdrehfest verbunden. Diese erste Sonnenwelle 240 wiederum erstreckt sich ausgehend von der Kupplung B axial in Richtung Hauptradsatz HS, durchdringt in ihrem axialen Verlauf das vorschaltradsatznahe dritte Sonnenrad S3_HS des Hauptradsatzes HS zentrisch vollständig, umschließt dabei die zweite Sonnenwelle 140 radial, und ist mit den beiden gekoppelten Sonnenrädern S1_HS und S2_HS des Hauptradsatzes HS verbunden. Bekanntlich bilden die genannten gekoppelten Sonnenräder S1_HS, S2_HS das erste Eingangselement des Hauptradsatzes HS.

In Fig. 2 der Einfachheit halber nur schematisch dargestellt sind eine Servoeinrichtung 110 zur Betätigung des Lamellenpaketes 100 der Kupplung A und eine Servoeinrichtung 210 zur Betätigung des Lamellenpaketes 200 der Kupplung B. Die Servoeinrichtung 110 der Kupplung A ist hierbei axial zwischen Vorschaltradsatz VS und dem Ausgangselement 130 bzw. Innenlamellenträger der Kupplung A angeordnet und beispielhaft an diesem Ausgangselement 130 bzw. Innenlamellenträger der Kupplung A axial verschiebbar gelagert. Beim Schließen der Kupplung A betätigt diese Servoeinrichtung 110 das ihr zugeordnete Lamellenpaket 100 axial in Richtung Hauptradsatz HS. Sinnvollerweise weist die Servoeinrichtung 110 auch einen dynamischen Druckausgleich auf zur Kompensation eines rotatorischen Druckes ihres stets mit Drehzahl des zweiten Eingangselementes des Hauptradsatzes HS, also hier stets mit Drehzahl des Hohlrades H2_HS rotierenden Druckraums. Die Servoeinrichtung 210 der Kupplung B ist hier beispielhaft auf der der Kupplung A bzw. dem Vorschaltradsatz VS gegenüberliegenden Seite des Lamellenpaketes 200 der Kupplung B angeordnet und an dem Ausgangselement 230 bzw. lnnenlamellenträger der Kupplung B axial verschiebbar gelagert. Beim Schließen der Kupplung B betätigt diese Servoeinrichtung 210 das ihr zugeordnete Lamellenpaket 200 axial in Richtung Vorschaltradsatz VS. Sinnvollerweise weist die Servoeinrichtung 210 auch einen dynamischen Druckausgleich auf zur Kompensation eines rotatorischen Druckes ihres stets mit Drehzahl des ersten Eingangselementes des Hauptradsatzes HS, also hier stets mit Drehzahl der beiden Sonnenräder S1_HS und S2_HS rotierenden Druckraums.

Wie in Fig. 2 weiterhin ersichtlich, sind sowohl das hier beispielhaft als Lamellenbremse ausgebildete dritte Schaltelement C als auch das hier beispielhaft ebenfalls als Lamellenbremse ausgebildete vierte Schaltelement D auf der Seite des Vorschaltradsatzes VS angeordnet, die der Baugruppe mit den beiden Kupplungen E, F gegenüberliegt, räumlich gesehen in einem Bereich axial zwischen der Kupplung B und dem Hauptradsatz HS. Dabei ist die Bremse D näher am Hauptradsatz HS angeordnet als die Bremse C. Eine Servoeinrichtung 310 zum Betätigen eines Lamellenpaketes 300 der Bremse C und eine Servoeinrichtung 410 zum Betätigen eines Lamellenpaketes 400 der Bremse D sind in Fig. 2 der Einfachheit halber nur schematisch dargestellt, räumlich gesehen axial zwischen den beiden Lamellenpaketen 300 und 400 angeordnet und in entsprechenden Kolbenräumen des Getriebegehäuses GG axial verschiebbar gelagert. Beispielhaft sind die Außenlamellenträger beider Bremsen C, D in das Getriebegehäuse GG integriert. Selbstverständlich wird der Fachmann bei Bedarf auch für eine der beiden oder auch beide Bremsen C, D jeweils einen separaten Außenlamellenträger oder auch einen für beide Bremsen C, D gemeinsamen Außenlamellenträger vorsehen, der dann als separates Bauteil verdrehfest mit dem Getriebegehäuse GG verbunden ist. Selbstverständlich wird der Fachmann bei Bedarf auch die der jeweiligen Bremse mit dem separaten Außenlamellenträger zugeordnete Servoeinrichtung in den genannten separaten Außenlamellenträger integrieren. Das Ausgangselement 330 der Bremse C ist hier als weitgehend scheibenförmiger Innenlamellenträger ausgebildet, der sich räumlich gesehen ausgehend vom Innendurchmesser des Lamellenpaketes 300 der Bremse C radial nach innen erstreckt und in seinem Nabenbereich mit einer dritten Sonnenwelle 640 verdrehfest verbunden. Diese dritte Sonnenwelle 640 stellt die mechanische Verbindung des Ausgangselementes 330 der Bremse C zum vorschaltradsaiznahen dritten Sonnenrad S3_HS des Hauptradsatzes HS her und umschließt dabei einen axialen Abschnitt der Stegwelle 540 radial. Sonnenwelle 640 und Sonnenrad S3_HS können auch einstückig ausgeführt sein. Das Ausgangselement 430 der Bremse D ist hier ebenfalls als weitgehend scheibenförmiger Innenlamellenträger ausgebildet, der sich räumlich gesehen ausgehend vom Innendurchmesser des Lamellenpaketes 400 der Bremse D radial nach innen erstreckt bis zu dem vorschaltradsatznahen Stegblech des gekoppelten Stegs ST13_HS des Hauptradsatzes HS, mit dem er auch verdrehfest verbunden ist. Innenlamellenträger 430 und vorschaltradsatznahes Stegblech des Stegs ST13_HS können auch einstückig ausgeführt sein.

Selbstverständlich wird der Fachmann auch die räumliche Lage der beiden Bremsen C, D innerhalb des Getriebegehäuses bei Bedarf modifizieren, sodaß abweichend von der Darstellung in Fig. 2 die Bremse C beispielsweise im Bereich der Gehäusewand GW angeordnet ist und/oder die Bremse D beispielsweise in einem Bereich radial über dem Hauptradsatz HS angeordnet ist.

Zurückkommend auf die durch die beiden Kupplungen E, F gebildeten Baugruppe, ist in Fig. 2 ersichtlich, dass der für die Kupplungen E und F gemeinsame Lamellenträger ZYLEF für beide Kupplungen E, F deren Eingangselement bildet und entsprechend mit der Antriebswelle AN verdrehfest verbunden ist. Für die Kupplung E ist der Lamellenträger ZYLEF als Außenlamellenträger zur Aufnahme von beispielsweise als außenverzahnte Stahllamellen ausgebildeten Außenlamellen des Lamellenpaketes 500 der Kupplung E ausgebildet, für die Kupplung F als Innenlamellenträger zur Aufnahme von beispielsweise als innenverzahnte Belaglamellen ausgebildeten Innenlamellen des Lamellenpaketes 600 der Kupplung F. Räumlich gesehen ist das Lamellenpaket 600 der Kupplung F in einem Bereich radial über dem Lamellenpaket 500 der Kupplung E angeordnet, wobei das radial innere Lamellenpaket 500 axial unmittelbar neben dem Vorschaltradsatz VS, insbesondere axial unmittelbar neben dem Hohlrad HO_VS des Vorschaltradsatzes VS angeordnet ist. Selbstverständlich können anstelle der wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefasern oder anderen geeigneten Verbundwerkstoffen verwendet werden. Geometrisch ist der genannte Lamellenträger ZYLEF im wesentlichen in Form eines in Richtung Vorschaltradsatz VS geöffneten Topfes ausgebildet. Am Innendurchmesser eines gestuft zylindrischen Abschnitts 521 des Lamellenträger ZYLEF sind die Außenlamellen des Lamellenpaketes 500 der Kupplung E angeordnet. Ein zumindest weitgehend scheibenförmiger Abschnitt (Topfboden) 522 des Lamellenträgers ZYLEF schließt sich an den genannten zylindrischen Abschnitt 521 des Lamellenträgers ZYLEF an und erstreckt sich ausgehend vom vorschaltradsatzfernen Ende des zylindrischen Abschnitts 521 radial nach innen. Am Innendurchmesser des genannten Topfbodens (522) des Lamellenträgers ZYLEF schließt sich eine Nabe des Lamellenträgers ZYLEF an. Ausgehend vom Innendurchmesser des genannten Topfbodens (522) erstreckt sich ein der Kupplung E zuzuordnender erster Nabenabschnitt 523 des Lamellenträgers ZYLEF axial in Richtung Vorschaltradsatz VS. Dieser erste Nabenabschnitt 523 ist an seinem vorschaltradsatznahen Ende mit einem hauptradsatzfemen Stegblech des gekoppelten Stegs ST_VS des Vorschaltradsatzes VS verdrehfest verbunden, wobei das hauptradsatznahe Stegblech dieses Stegs ST_VS mit der Antriebswelle AN verdrehfest verbunden ist. Ein der Kupplung F zuzuordnender zweiter Nabenabschnitt 623 des Lamellenträgers ZYLEF erstreckt sich ausgehend vom Innendurchmesser des scheibenförmigen Abschnitts 522 bzw. Topfbodens des Lamellenträgers ZYLEF axial in zum Vorschaltradsatz VS entgegengesetzter Richtung bzw. axial in Richtung Gehäusewand GW. Dabei ist die Nabe des Lamellenträgers ZYLEF mit ihren Nabenabschnitten 523 und 623 an der getriebegehäusefesten Nabe GN, an der auch das Sonnenrad SO_VS des Vorschaltradsatzes VS festgesetzt ist, verdrehbar gelagert. Der Außendurchmesser des zylindrischen Abschnitts 521 des Lamellenträgers ZYLEF ist mit 621 bezeichnet, als Hinweis, dass dieser Abschnitt auch der Kupplung F zuzuordnen ist. An diesem Außendurchmesser ist nämlich ein Mitnahmeprofil zur Aufnahme der Innenlamellen des Lamellenpaketes 600 der Kupplung F vorgesehen.

Die Servoeinrichtung 510 der Kupplung E zur Betätigung deren Lamellenpaket 500 umfaßt einen Druckraum 511, einen Druckausgleichsraum 512, einen Kolben 514, ein Rückstellelement 513 sowie eine Stauscheibe 515 und ist radial oberhalb des ersten Nabenanschnitts 523 des Lamellenträgers ZYLEF vollständig innerhalb eines Zylinderraums angeordnet, der durch den Lamellenträger ZYLEF, insbesondere durch dessen zylindrischen Abschnitt 521 gebildet wird. Der Kolben 514 ist an diesem Lamellenträger ZYLEF axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem drucklos mit Schmiermittel befüllbaren Druckausgleichsraum 512 vorgesehen, wobei dieser Druckausgleichsraum 512 näher am Hauptradsatz HS angeordnet ist als der genannte Druckraum 511. Dabei wird der Druckraum 511 durch eine Mantelfläche des Lamellenträgers ZYLEF und den Kolben 514 gebildet. Der Druckausgleichsraum 512 wird gebildet durch den Kolben 514 und die Stauscheibe 515, welche axial an dem Nabenabschnitt 523 des Lamellenträgers ZYLEF fixiert ist und gegenüber dem Kolben 515 axial verschiebbar schmiermitteldicht abgedichtet ist. Der Kolben 514 ist über das hier beispielhaft als Tellerfeder ausgebildete Rückstellelement 513 axial gegen den Nabenabschnitt 523 des Lamellenträgers ZYLEF vorgespannt. Bei einer Beaufschlagung des Druckraums 511 mit Druckmittel zum Schließen der Kupplung E bewegt sich der Kolben 514 axial in Richtung Vorschaltradsatz VS bzw. axial in Richtung Hauptradsatz HS und betätigt das ihm zugeordnete Lamellenpaket 500 gegen die Federkraft des Rückstelielementes 513.

Räumlich gesehen ist die Servoeinrichtung 510 der Kupplung E näher an Haupt- und Vorschaltradsatz HS, VS angeordnet als die Servoeinrichtung 610 der Kupplung F. Dabei ist diese Servoeinrichtung 610 räumlich gesehen zumindest überwiegend in einem Bereich radial über dem zweiten Nabenabschnitt 623 des Lamellenträgers ZYLEF angeordnet und auch an dem Lamellenträger ZYLEF axial verschiebbar gelagert. Entsprechend rotiert auch die Servoeinrichtung 610 ständig mit Drehzahl der Antriebswelle AN. Die Servoeinrichtung 610 der Kupplung F umfasst einen Druckraum 611, einen Druckausgleichsraum 612, einen abschnittsweise meanderförmig ausgebildeten Kolben 614, ein Rückstellelement 613, eine zylindrische Stauscheibe 615 und eine topfförmige Stützscheibe 618. Zum Ausgleich des rotatorischen Drucks des rotierenden Druckraums 611 der Servoeinrichtung 610 ist ein dynamischer Druckausgleich mit dem Druckausgleichsraum 612 vorgesehen. Hierzu erstreckt sich die zylindrische Stauscheibe 615 auf einem definierten Durchmesser oberhalb des Nabenanschnitts 623 ausgehend vom scheibenförmigen Abschnitt 522 des Lamellenträgers ZYLEF axial in Richtung Gehäusewand GW und ist zum axial benachbarten Kolben 614 hin axial verschiebbar schmiermitteldicht abgedichtet. Zusammen mit dem sich radial unterhalb der Stauscheibe 615 befindlichen und der Gehäusewand GW zugewandten Mantelflächenabschnitt des Lamellenträgers ZYLEF und dem radial unterhalb der Stauscheibe 615 befindlichen und dem Vorschaltradsatz VZ zugewandten Mantelflächenabschnitts des Kolbens 614 bildet diese Stauscheibe 615 den genannten Druckausgleichsraum 612. In dem dargestellten Beispiel sind Stauscheibe 615 und Lamellenträger ZYLEF beispielshaft einstückig ausgeführt, können selbstverständlich aber auch als separate Bauteile ausgeführt sein. Der Druckausgleichsraum 612 der Servoeinrichtung 610 der Kupplung F und der Druckraum 511 der Servoeinrichtung 510 der Kupplung E sind also unmittelbar benachbart zueinander angeordnet und nur durch eine Mantelfläche des für die Kupplungen E und F gemeinsamen Lamellenträgers ZYLEF voneinander getrennt. Auf der dem Druckraum 511 bzw. dem Vorschaltradsatz VS abgewandten Seite des Druckausgleichsraums 612 ist der Druckraum 611 der Servoeinrichtung 610 angeordnet. Gebildet wird dieser Druckraum 611 durch den Kolben 615 und die Stützscheibe 618 und einen axialen Abschnitt der Nabe 623. Hierzu ist die Stützscheibe 618 druckmitteldicht an der Nabe 623 befestigt. Radial oberhalb des Abschnitts der Nabe 623, der den Druckraum 611 bildet, erstreckt sich ein zylindrischer Anschnitt dieser topfförmigen Stützscheibe 618 axial in Richtung Druckraum 511 bzw. axial in Richtung Vorschaltradsatz VS und ist gegen einen korrespondierenden Abschnitt des Kolbens 614 hin druckmitteldicht axial verschiebbar abgedichtet. In seinem weiteren geometrischen Verlauf erstreckt sich der Kolben 614 zumindest weitgehend entlang der Außenkontur von Stützscheibe 618 und oberem Bereich des Lamellenträgers ZYLEF radial nach außen und axial in Richtung Hauptradsatz HS bis zu der hauptradsatzfernen Seite des ihm zugeordneten Lamellenpaketes 600 der Kupplung F. Axial vorgespannt wird der Kolben 614 durch das Rückstellelement 613, das hier beispielhaft als ein axial zwischen dem scheibenförmigen Abschnitt 622 des Lamellenträgers ZYLEF und dem Kolben 614 angeordnetes Spiralfederpaket aus ringförmig angeordneten, kinematisch parallel geschalteten Spiralfedern ausgebildet ist. Bei einer Beaufschlagung des Druckraums 611 mit Druckmittel zum Schließen der Kupplung F bewegt sich der Kolben 614 axial in Richtung Vorschaltradsatz VS bzw. axial in Richtung Hauptradsatz HS und betätigt das ihm zugeordnete Lamellenpaket 600 gegen die Federkraft des Rückstellelementes 613.

Aufgrund der Lagerung des Lamellenträgers ZYLEF an der getriebegehäusefesten Nabe GN ergibt sich eine konstruktiv vergleichsweise einfache Druck- und Schmiermittelzufuhr zu beiden Kupplungen E, F über entsprechende Kanäle bzw. Bohrungen, die abschnittsweise innerhalb der genannten getriebegehäusefesten Nabe GN und abschnittsweise innerhalb der Nabe des Lamellenträgers ZYLEF verlaufen. Eine Druckmittelzuführung zum Druckraum 511 der Servoeinrichtung 510 der Kupplung E ist mit 516 bezeichnet, eine Schmiermittelzuführung zum Druckausgleichsraum 512 der Servoeinrichtung 510 der Kupplung E mit 517, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Das Ausgangselement 530 der Kupplung E ist als Innenlamellenträger ausgebildet, der sich ausgehend von dem Lamellenpaket 500 der Kupplung E axial angrenzend an die Servoeinrichtung 510 der Kupplung E zunächst axial in Richtung Vorschaltradsatz VS und knapp vor dem Hohlrad HO_VS dieses Vorschaltradsatzes VS radial nach außen erstreckt bis knapp oberhalb des Außendurchmessers des genannten Hohlrades HO_VS bzw. bis knapp oberhalb des Außendurchmessers des mit dem genannten Hohlrad HO_VS verbundenen Eingangselementes 120 der Kupplung A. Im Bereich seines Außendurchmessers ist der Innenlamellenträger 530 der Kupplung E mit einem zylinderförmigen Verbindungselement ZYL verdrehfest verbunden. Dieses zylinderförmige Verbindungselement ZYL ist als ein in Richtung Kupplung E hin geöffneter Topf ausgebildet, der den Vorschaltradsatz VS, die sich an den Vorschaltradsatz VS axial anschließende Kupplung A und die sich an die Kupplung A axial anschließende Kupplung B radial vollständig umschließt. Ein scheibenförmiger Topfboden dieses Verbindungselementes ZYL grenzt hier axial an die Servoeinrichtung 210 der Kupplung B an und ist im Bereich seines Innendurchmessers bzw. seiner Nabe mit der Stegwelle 540 verdrehfest verbunden. Die Stegwelle 540 wiederum erstreckt sich axial in Richtung Hauptradsatz HS bis zu einem Bereich zwischen dem vorschaltradsatznahen dritten Sonnenrad S3_HS und dem räumlich mittleren ersten Sonnenrad 51_HS des Hauptradsatzes HS und durchdringt dabei das dritte Sonnenrad S3_HS des Hauptradsatzes HS und ist mit dem gekoppelten Steg ST13_HS des Hauptradsatzes HS verdrehfest verbunden. Insofern kann das genannte zylinderförmige Verbindungselement ZYL auch formal dem Ausgangselement 530 der Kupplung E zugeordnet werden.

Das Ausgangselement 630 der Kupplung F ist als Außenlamellenträger ausgebildet, geometrisch in Form eines in Richtung Kupplung F bzw. Gehäusewand GW hin geöffneten Topfes, welcher das zuvor beschriebene zylinderförmige Verbindungselement ZYL radial vollständig umschließt. Ein scheibenförmiger Topfboden dieses Ausgangselementes 630 bzw. Außenlamellenträgers der Kupplung F erstreckt sich räumlich gesehen axial zwischen dem Topfboden des genannten Verbindungselementes ZYL und dem scheibenförmigen Ausgangselement 330 bzw. Innenlamellenträger der Bremse C in radialer Richtung und ist in seinem Nabenbereich mit der dritten Sonnenwelle 640 verdrehfest verbunden, mit der auch das Ausgangselement 330 bzw. der Innenlamellenträger der Bremse C und das dritte Sonnenrad S3_HS des Hauptradsatzes verdrehfest verbunden ist. Am Außendurchmesser des Topfbodens des Ausgangselementes 630 bzw. Außenlamellenträgers der Kupplung F schließt sich ein zylindrischer Abschnitt des Ausgangselementes 630 bzw. Außenlamellenträgers der Kupplung F an und erstreckt sich axial in Richtung Gehäusewand GW bis über das Lamellenpaket 600 der Kupplung F hinweg. Im Bereich seines gehäusewandseitigen Endes weist der genannte zylindrische Abschnitt des Ausgangselementes bzw. Außenlamellenträgers 630 an seinem Innendurchmesser ein geeignetes Mitnahmeprofil auf zur Aufnahme der außenverzahnten Lamellen des Lamellenpaketes 600 der Kupplung F.

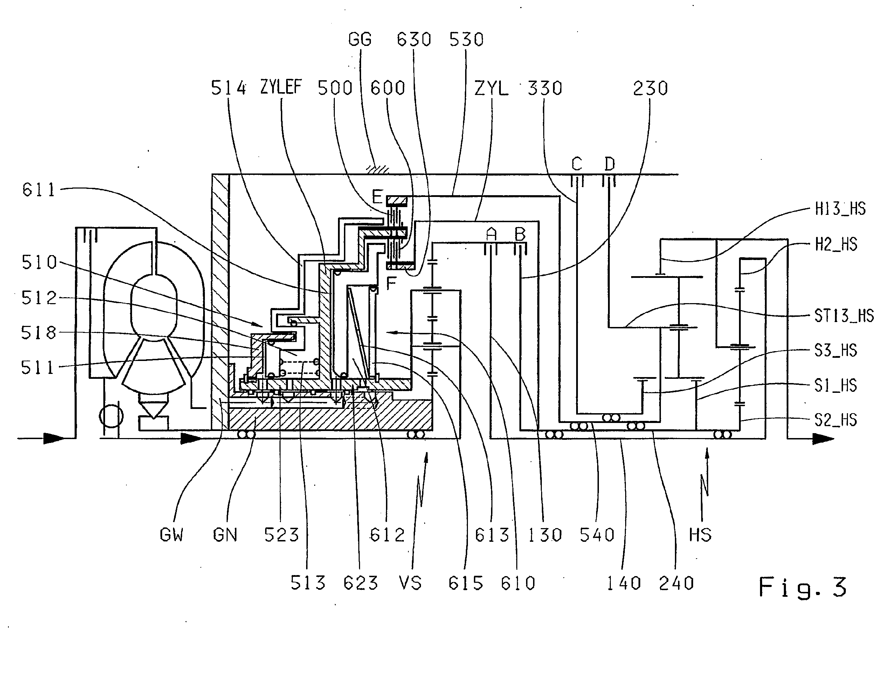

Anhand Fig. 3 wird nun ein zweites beispielhaftes Getriebeschema gemäß der vorliegenden Erfindung erläutert, basierend auf dem zuvor anhand Fig. 2 im Detail beschriebenen ersten erfindungsgemäßen Getriebeschema, jedoch mit einem zu Fig. 2 alternativen konstruktiven Ausgestaltung der Baugruppe mit dem fünften und sechsten Schaltelement E, F. Der wesentliche Unterschied zwischen dem zweiten erfindungsgemäßen Getriebeeschema gemäß Fig. 3 und dem ersten erfindungsgemäßen Getriebeeschema gemäß Fig. 2 ist die räumliche Anordnung der Lamellenpakete 500, 600 der beiden Bremsen E, F relativ zueinander. Gemäß Fig. 3 ist das Lamellenpaket 500 der Kupplung E nunmehr radial über dem Lamellenpaket 600 der Kupplung F angeordnet. Entsprechend dieser Anordnung ist auch die räumliche Lage der Servoeinrichtungen 510, 610 der beiden Kupplungen E, F angepaßt, wobei die Servoeinrichtung 610 der Kupplung F nunmehr näher am Vorschaltradsatz VS angeordnet ist als die Servoeinrichtung 510 der Kupplung E . Im direkten Vergleich zwischen Fig. 3 und der zugrunde liegenden Fig. 2 ist leicht ersichtlich, dass die gesamte Baugruppe der beiden Kupplungen E, F bauteilseitig identisch aufgebaut sind, wobei sich nur die Bauteilnamen geändert haben. Alle Bauelemente dieser Baugruppe, die in Fig. 2 namentlich der Kupplung E zugeordnet sind, sind in Fig. 3 nunmehr der Kupplung F zugeordnet. Entsprechend sind alle Bauelemente dieser Baugruppe, die in Fig. 2 namentlich der Kupplung F zugeordnet sind, in Fig. 3 nunmehr der Kupplung E zugeordnet. Insofern kann die weitere Beschreibung der Baugruppe mit dem für beide Kupplungen E, F gemeinsamen Lamellenträger ZYLEF, sowie den Servoeinrichtungen 510, 610 und den Lamellenpaketen 500, 600 beider Kupplungen E, F auf den Hinweis der sinngemäß angepassten Bezugszeichen beschränkt werden.

Da gemäß Fig. 3 das Lamellenpaket 500 der Kupplung E im Unterschied zu Fig. 2 radial über dem Lamellenpaket 600 der Kupplung F angeordnet ist, ist nunmehr auch das nunmehr als Innenlamellenträger ausgebildete Ausgangselement 630 der Kupplung F innerhalb des Ausgangselementes 530 der Kupplung E angeordnet. Dabei umgreift das genannte Ausgangselement 630 der Kupplung F den Vorschaltradsatz VS und die beiden Kupplungen A und B in axialer Richtung radial und ist axial neben dem Ausgangselement 230 der Kupplung B verdrehfest mit der ersten Sonnenwelle 240 verbunden. Diese erste Sonnenwelle 240 wiederum durchgreift in ihrem axialen Verlauf das vorschaltradsatznahe dritte Sonnenrad S3_HS des Hauptradsatzes HS und umschließt dabei die zweite Sonnenwelle 140, welche die mechanische Verbindung zwischen dem Ausgangselement 130 der Kupplung A und dem durch das Hohlrad H2_HS gebildete zweite Eingangselement des Hauptradsatzes HS herstellt, radial und ist mit den beiden gekoppelten Sonnenrädern S1_HS und S2_HS des Hauptradsatzes verdrehfest verbunden. Das nunmehr als Außenlamellenträger ausgebildete Ausgangselement 530 der Kupplung E umgreift das Ausgangselement 630 bzw. den Innenlamellenträger der Kupplung F in axialer Richtung radial und ist über die Stegwelle 540 mit dem gekoppelten Steg ST13_HS des Hauptradsatzes HS verbunden. Dabei durchgreift diese Stegwelle 540 in ihrem axialen Verlauf das vorschaltradsatznahe dritte Sonnenrad S3_HS des Hauptradsatzes HS und umschließt dabei die erste Sonnenwelle 240 radial. Im Bereich axial zwischen dem vorschaltradsatznahen dritten Sonnenrad S3_HS und dem räumlich gesehen mittleren ersten Sonnenrad S1_HS des Hauptradsatzes HS ist die Stegwelle 540 mit einem vorschaltradsatznahen Stegblech des gekoppelten Stegs ST13_HS des Hauptradsatzes HS verdrehfest verbunden, wobei das genannte Stegblech axial zwischen den beiden Sonnenrädern S3_HS und S1_HS radial hindurchgreift. Das Ausgangselement 330 der Bremse C ist nunmehr alleine mit dem dritten Sonnenrad S3_HS des Hauptradsatzes HS verdrehfest verbunden.

Aus dem in Fig. 3 dargestellten Aufbau des Hauptradsatzes HS und seiner kinematischen Kopplung an die einzelnen Schaltelemente A bis F ist ersichtlich, dass im Unterschied zu Fig. 1 in Fig. 3 die in Fig. 1 bestehende feste Kopplung zwischen den Ausgangselementen 230, 330, 630 der drei Schaltelemente B, C, F und dem ersten Eingangselement des Hauptradsatzes HS (in Fig. 1 also dem Sonnenrad S1_HS) ersetzt ist durch eine Kombination aus einer festen Kopplung zwischen Ausgangselement 230 der Kupplung B und Ausgangselement 630 der Kupplung F und dem ersten Eingangselement des Hauptradsatzes HS (in Fig. 3 also den gekoppelten Sonnenräder S1_HS und S2_HS), aus einer festen Kopplung zwischen Ausgangselement 330 der Bremse C und dem vierten Eingangselement des Hauptradsatzes HS (in Fig. 3 also dem Sonnenrad S3_HS, sowie aus einer kinematischen Kopplung zwischen dem ersten und vierten Eingangselement des Hauptradsatzes HS über die langen Planetenräder P13_HS des Hauptradsatzes HS. Entsprechend fallen die Linien des ersten und vierten Eingangselementes des Hauptradsatzes HS in einem Drehzahlplan des erfindungsgemäßen Getriebes gemäß Fig. 3 zusammen. Sollte in einer Modifikation des Hauptradsatzes HS vorgesehen sein, dass die genannten langen Planetenräder P13_HS abweichend von der Darstellung in Fig. 3 als Stufenplanetenräder ausgebildet sind, so würden in dem zu dieser Modifikation zugehörigen Drehzahlplan die Linien des ersten und vierten Eingangselementes des modifizierten Hauptradsatzes benachbart zueinander liegen.

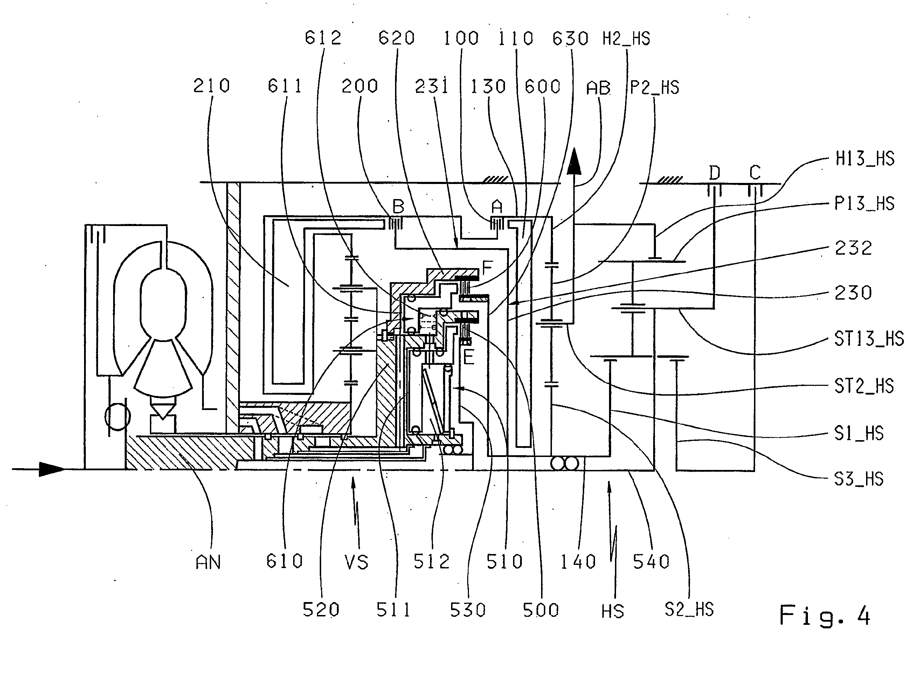

Anhand Fig. 4 wird nun ein drittes beispielhaftes Getriebeschema gemäß der vorliegenden Erfindung erläutert, basierend auf dem anhand Fig. 2 beschriebenen ersten erfindungsgemäßen Getriebeschema, jedoch mit einem zu Fig. 2 alternativen räumlichen Anordnung der Baugruppe mit dem fünften und sechsten Schaltelement E, F und einer alternativen räumlichen Anordnung des dritten und vierten Schaltelementes C, D innerhalb der Getriebes.

Wie beim zugrunde liegenden Stand der Technik ist sowohl das dritte Schaltelement C als auch das vierte Schaltelement D als Bremse ausgebildet, beide beispielhaft in Form einer Lamellenbremse. Aus Fig. 4 ist leicht ersichtlich, dass sich die "neue" Anordnung der beiden Bremsen C, D nunmehr auf der Seite des Hauptradsatzes HS, die dem Vorschaltradsatz VS gegenüberliegt, in Verbindung mit der koaxialen Anordnung von Vorschaltradsatz VS und Hauptradsatz HS eine Anordnung von achsparallel oder winklig zueinander angeordneter Antriebs- und Abtriebswelle AN, AB des Getriebes ermöglicht, eine Anordnung also, die beispielsweise für ein Kraftfahrzeug mit Frontantrieb und quer oder längs zur Fahrtrichtung angeordnetem Antriebsmotor notwendig ist. Zur Vereinfachung ist in Fig. 4 eine je nach Bedarf vorzusehende Stimradstufe oder Kegelradstufe zur Verbindung des Ausgangselementes des Hauptradsatzes HS zum Getriebeabtrieb nicht näher dargestellt. In Fig. 4 ebenfalls zur Vereinfachung nicht näher dargestellt ist ein mit der Antriebswelle AN wirkverbundener Antriebsmotor des Getriebes, der hier beispielhaft auf der dem Hauptradsatz HS abgewandten Seite des Vorschaltradsatzes VS angeordnet ist. Entsprechend durchdringt die Antriebswelle AN hier auch praktisch das ganze Getriebe in axialer Richtung, zumindest alle Radsätze VS, HS. Insofern bedarf es keinen besonderen konstruktiven Aufwand, um den Antriebsmotor auf der anderen Getriebestimseite, also auf der vorschaltradsatzfernen Seite des Hauptradsatzes HS anzuordnen.

Der in Fig. 4 vorgesehene Hauptradsatz HS ist wie in Fig. 2 als ein "auf eine Zweisteg-Einheit reduziertes Zweisteg-Fünfwellen-Planetengetriebe" ausgeführt und koaxial neben dem als einfacher Plus-Planetenradsatz ausgeführten Vorschaltradsatz VS und koaxial zur Antriebswelle AN angeordnet. Der Hauptradsatz HS weist dabei vier nicht miteinander verbundene Eingangselemente und ein Ausgangselement auf und wird aus zwei miteinander gekoppelten Einzel-Planetenradsätzen gebildet, wobei einer dieser beiden Einzel-Planetenradsätze ein "geteiltes Sonnenrad aufweist". Entsprechend umfasst der Hauptradsatz HS wie in Fig. 2 drei Sonnenräder S1_HS, S2_HS, S3_HS, ein gekoppeltes erstes Hohlrad H13_HS, ein zweites Hohlrad H2_HS, einen gekoppelten ersten Steg ST13_HS mit daran verdrehbar gelagerten langen Planetenrädern P13_HS, sowie einen zweiten Steg ST2_HS mit daran verdrehbar gelagerten kurzen Planetenrädern P2_HS. Entsprechend der Nomenklatur der Anbindung der Eingangselemente des Hauptradsatzes HS an die verschiedenen Schaltelemente A bis F umfasst der zweite der beiden Einzel-Planetenradsätze des Hauptradsatzes HS das zweite Sonnenrad S2_HS, das zweite Hohlrad H2_HS und den zweiten Steg ST2_HS mit den daran verdrehbar gelagerten kurzen Planetenrädern P2_HS, ist aber im Unterschied zu Fig. 2 nunmehr vorschaltradsatznah angeordnet. Der erste Einzel-Planetenradsatz des Hauptradsatzes HS umfasst das erste und dritte Sonnenrad S1_HS, S3_HS, das gekoppelte Hohlrad H13_HS und den gekoppelten Steg ST13_HS mit den daran verdrehbar gelagerten langen Planetenrädern P13_HS und ist im Unterschied zu Fig. 2 entsprechend nunmehr vorschaltradsatzfern angeordnet. Die kurzen Planetenräder P2_HS kämmen dabei mit dem zweiten Hohlrad H2_HS und dem zweiten Sonnenrad S2_HS, die langen Planetenräder P13_HS mit den gekoppelten Hohlrad H13_HS und dem ersten und dritten Sonnenrad S1_HS, S3_HS. Die langen Planetenräder P13_HS sind wie in Fig. 2 beispielhaft nicht als Stufenplaneten ausgeführt, die beiden Sonnenräder S1_HS und S3_HS des Hauptradsatzes HS weisen hier also identische Zähnezahlen auf. Räumlich gesehen ist das erste Sonnenrad S1_HS des Hauptradsatzes HS axial zwischen dem zweiten und dritten Sonnenrad S2_HS, S3_HS des Hauptradsatzes HS angeordnet, wobei dieses zweite Sonnenrad S2_HS näher am Vorschaltradsatz VS angeordnet ist als dieses dritte Sonnenrad S3_HS.

Wie in Fig. 2 sind das erste und zweite Sonnenrad S1_HS, S2_HS fest miteinander verbunden und bilden das erste Eingangselement des Hauptradsatzes HS, welches mit den Ausgangselementen 230, 630 der Kupplungen B und F auf der vorschaltradsatznahen Seite des Hauptradsatzes HS verdrehfest verbunden ist. Das zweite Hohlrad H2_HS bildet das zweite Eingangselement des Hauptradsatzes HS und ist mit dem Ausgangselement 130 der Kupplung A verdrehfest verbunden. Der gekoppelte Steg ST13 _HS bildet das dritte Eingangselement des Hauptradsatzes HS und ist - entsprechend der räumlichen Lage der Bremse D - auf der dem Vorschaltradsatz VS abgewandten Seite des Hauptradsatzes HS verdrehfest mit dem Ausgangselement 430 der Bremse D verbunden und - entsprechend der räumlichen Lage der Kupplung E - über einen axial zwischen dem ersten und dritten Sonnenrad S1_HS, S3_HS verlaufenden radialen Durchgriff mit dem Ausgangselement 530 der Kupplung E verbunden. Das dritte Sonnenrad S3_HS bildet das vierte Eingangselement des Hauptradsatzes HS und ist - entsprechend der räumlichen Lage der Bremse C - auf der dem Vorschaltradsatz VS abgewandten Seite des Hauptradsatzes HS verdrehfest mit dem Ausgangselement 330 der Bremse C verbunden. Das gekoppelte Hohlrad H13_HS und der zweite Steg ST2_HS sind fest miteinander verbunden und bilden das mit der Abtriebswelle AB des Getriebes verbundene Ausgangselement des Hauptradsatzes HS. In einem Drehzahlplan des Automatgetriebes gemäß Fig. 4 fallen die Linien des ersten und vierten Eingangselementes des Hauptradsatzes HS entsprechend der beschriebenen bauteilseitigen und kinematischen Koppelung dessen drei Sonnenräder S1_HS, S2_HS, S3_HS zusammen. Entsprechend der kinematischen Kopplung der beiden Bremsen C, D an den Hauptradsatz HS ist die Bremse D näher am Hauptradsatz HS angeordnet als die Bremse C, wobei die Bremse D im Unterschied zu Fig. 2 nunmehr auch näher am Vorschaltradsatz VS angeordnet ist als die Bremse C.

Erfindungsgemäß bilden die Kupplungen E und F eine fertigungstechnisch einfach vormontierbare Baugruppe, die nunmehr in einem Bereich axial zwischen Vorschaltradsatz VS und Hauptradsatz HS angeordnet ist und axial unmittelbar an den Vorschaltradsatz VS angrenzt. Dabei umfaßt diese Baugruppe die hier beide beispielhaft als Außenlamellenträger ausgebildeten Eingangselemente 520, 620 der Kupplungen E und F sowie für beide Kupplungen E, F je ein Lamellenpaket 500 bzw. 600 und je eine Servoeinrichtung 510 bzw. 610 zum Betätigen des jeweils zugeordneten Lamellenpaketes 500 bzw. 600.

In dem in Fig. 4 dargestellten Ausführungsbeispiel ist die Kupplung F hierbei räumlich gesehen radial über der Kupplung E angeordnet, wobei insbesondere das Lamellenpaket 600 der Kupplung F räumlich gesehen radial über dem Lamellenpaket 500 der Kupplung E angeordnet ist. Das Eingangselement bzw. der Außenlamellenträger 520 der Kupplung E ist geometrisch in Form eines in Richtung Hauptradsatz HS geöffneten Topfes ausgebildet, dessen Nabe mit der Antriebswelle AN drehfest verbunden ist, im dargestellten Beispiel sogar ein mit der Antriebswelle AN gemeinsames Bauteil bildet. Die Servoeinrichtung 510 der Kupplung E ist vollständig innerhalb eines Zylinderraums angeordnet, der durch den Außenlamellenträger 520 der Kupplung E gebildet wird, und an diesem Außenlamellenträger 520 axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem Druckausgleichsraum 512 vorgesehen, wobei dieser Druckraum 511 näher am Vorschaltradsatz VS angeordnet ist als der genannte Druckausgleichsraum 512.

Das Eingangselement bzw. der Außenlamellenträger 620 der Kupplung F ist ebenso geometrisch in Form eines in Richtung Hauptradsatz HS geöffneten Topfes ausgebildet, dessen Nabe mit dem Eingangselement bzw. Außenlamellenträger 520 der Kupplung E an dessen Außendurchmesser verdrehfest verbunden ist. Das Eingangselement 620 der Kupplung F ist also über das Eingangselement 520 der Kupplung E mit der Antriebswelle AN verbunden. Die Servoeinrichtung 610 der Kupplung F ist vollständig innerhalb eines Zylinderraums angeordnet, der durch den Außenlamellenträger (620) der Kupplung F gebildet wird, und an diesem Außenlamellenträger (620) axial verschiebbar gelagert. Entsprechend rotiert die Servoeinrichtung 610 ständig mit Drehzahl der Antriebswelle AN. Zum Ausgleich des rotatorischen Drucks des rotierenden Druckraums 611 der Servoeinrichtung 610 ist ein dynamischer Druckausgleich mit dem Druckausgleichsraum 612 vorgesehen, wobei dieser Drurckraum 611 näher am Vorschaltradsatz VS angeordnet ist als der genannte Druckausgleichsraum 612.

Räumlich gesehen ist die Servoeinrichtung 610 der (radial äußeren) Kupplung F in einem Bereich radial über der Servoeinrichtung 510 der (radial inneren) Kupplung E angeordnet. Entsprechend ist der Druckraum 611 der (radial äußeren) Servoeinrichtung 610 der Kupplung F zumindest in etwa radial über dem Druckraum 511 der (radial inneren) Servoeinrichtung 510 der Kupplung E und der Druckausgleichsraum 612 der (radial äußeren) Servoeinrichtung 610 der Kupplung F zumindest in etwa radial über dem Druckausgleichsraum 512 der (radial inneren) Servoeinrichtung 510 der Kupplung E angeordnet. Eine Druckmittelzufuhr zu dem Druckraum 511 und eine Schmiermittelzufuhr zu dem drucklos befüllbaren Druckausgleichsraum 512 der Servoeinrichtung 510 der Kupplung E verläuft dabei abschnittsweise innerhalb der Nabe des Eingangselementes (Außenlamellenträgers) 520 der Kupplung E und abschnittsweise innerhalb der Antriebswelle AN. Eine Druckmittelzufuhr zu dem Druckraum 611 Servoeinrichtung 610 der (radial äußeren) Kupplung F verläuft abschnittsweise ebenfalls innerhalb des (Außenlamellenträgers) 520 der (radial inneren) Kupplung E und abschnittsweise innerhalb der Antriebswelle AN. Der Druckausgleichsraum 612 der Servoeinrichtung 610 der Kupplung F wird hier beispielhaft direkt über den Druckausgteichsraum 512 der Servoeinrichtung 510 der Kupplung E drucklos mit Schmiermittel befüllt. Zum Schließen der Kupplung E wird der Druckraum 511 der Servoeinrichtung 510 mit Druckmittel befüllt, die dann das ihr zugeordnete Lamellenpaket 500 der Kupplung E axial in Richtung Hauptradsatz HS betätigt. Zum Schließen der Kupplung F wird der Druckraum 611 der Servoeinrichtung 610 mit Druckmittel befüllt, die dann das ihr zugeordnete Lamellenpaket 600 der Kupplung F axial in Richtung Hauptradsatz HS betätigt.

Die Ausgangselemente 530, 630 der beiden Kupplungen E, F sind in dem dargestellten Ausführungsbeispiel beide als Innenlamellenträger ausgebildet. Der Innenlamellenträger 530 der Kupplung E erstreckt sich ausgehend von dem Lamellenpaket 500 der Kupplung E axial angrenzend an die Servoeinrichtung 510 der Kupplung E radial nach innen und ist zentrisch mit der Stegwelle 540 verdrehfest verbunden. Diese Stegwelle 540 erstreckt sich axial in Richtung Hauptradsatz HS bis zu dem Stegblech des vorschaltradsatzfernen (gekoppelten) ersten Stegs ST13_HS des Hauptradsatzes HS, durchgreift dabei das zweite und erste Sonnenrad S2_HS, S1_HS des Hauptradsatzes HS zentrisch in axialer Richtung, und ist in einem Bereich axial zwischen dem dritten und ersten Sonnenrad S3_HS, S1_HS des Hauptradsatzes HS mit dem genannten Stegblech des Stegs ST13_HS verdrehfest verbunden. Selbstverständlich können das genannte Stegblech des Stegs ST13_HS und die Stegwelle 540 auch einstückig ausgeführt sein. Der Innenlamellenträger 630 der Kupplung F erstreckt sich ausgehend von dem Lamellenpaket 600 der Kupplung F abschnittsweise axial angrenzend an den Innenlamellenträger 530 der Kupplung E radial nach innen bis auf einen Durchmesser knapp oberhalb der Stegwelle 540 und ist in diesem Nabenbereich mit einer Nabe des Ausgangselementes 230 der Kupplung B und über die. Sonnenwelle 140 mit den beiden Sonnenrädern S2_HS und S1_HS des Hauptradsatzes HS verdrehfest verbunden. Die Stegwelle 540 verläuft also zentrisch innerhalb dieser Nabe des Ausgangselementes 630 der Kupplung F bzw. dieser Nabe des Ausgangselementes 230 der Kupplung B und zentrisch innerhalb der Sonnenwelle 140. Bei Bedarf wird der Fachmann die Verbindung zwischen den Naben der beiden Ausgangselemente 230, 630 auch über die Sonnenwelle 140 herstellen oder auch die beiden Sonnenräder S2_HS, S1_HS einstückig ausführen.

In dem in Fig. 4 dargestellten Ausführungsbeispiel sind die Lamellenpakete 200 und 100 der beiden Kupplungen B und A räumlich gesehen axial nebeneinander auf zumindest ähnlichem Durchmesser in einem Bereich zumindest teilweise radial über der aus den beiden Kupplungen E und F gebildeten Baugruppe angeordnet. Das Ausgangselement 230 der Kupplung B umgreift dabei die aus den beiden Kupplungen E, F gebildete Baugruppe in axialer Richtung radial, wobei sich der zylindrische Abschnitt 231 dieses Ausgangselementes 230 zumindest weitgehend radial oberhalb des Außendurchmessers des Eingangselementes (Außenlamellenträgers) 620 der Kupplung F erstreckt und dabei die Kupplung F vollständig übergreift, und wobei sich der scheibenförmige Abschnitt 232 dieses Ausgangselementes 230 zumindest weitgehend parallel zum Ausgangselement (Innenlamellenträger) 630 der Kupplung F erstreckt. Eine zur Vereinfachung nur schematisch dargestellte Servoeinrichtung 210 der Kupplung B zur Betätigung des Lamellenpaketes 200 der Kupplung B kann beispielsweise wie in Fig. 4 angedeutet zumindest über wiegend auf der hauptradsatzfernen Seite des Vorschaltradsatzes VS angeordnet sein, stets mit Drehzahl der Antriebswelle AN rotieren und das ihr zugeordnet Lamellenpaket 200 beim Schließen der Kupplung B axial in Richtung Hauptradsatz HS betätigen. Eine zur Vereinfachung ebenfalls nur schematisch dargestellte Servoeinrichtung 110 der Kupplung A zur Betätigung des Lamellenpaketes 100 der Kupplung A kann beispielsweise wie in Fig. 4 angedeutet axial zwischen dem Ausgangselement 230 der Kupplung B und dem Hauptradsatz HS auf der dem Hauptradsatz HS zugewandten Seite des Lamellenpaketes 100 angeordnet sein, stets mit Drehzahl des hier beispielhaft durch die gekoppelten Sonnenräder S1_HS, S2_HS gebildeten ersten Eingangselementes des Hauptradsatzes HS rotieren und das ihr zugeordnet Lamellenpaket 100 beim Schließen der Kupplung A axial in Richtung Vorschaltradsatz VS betätigen.

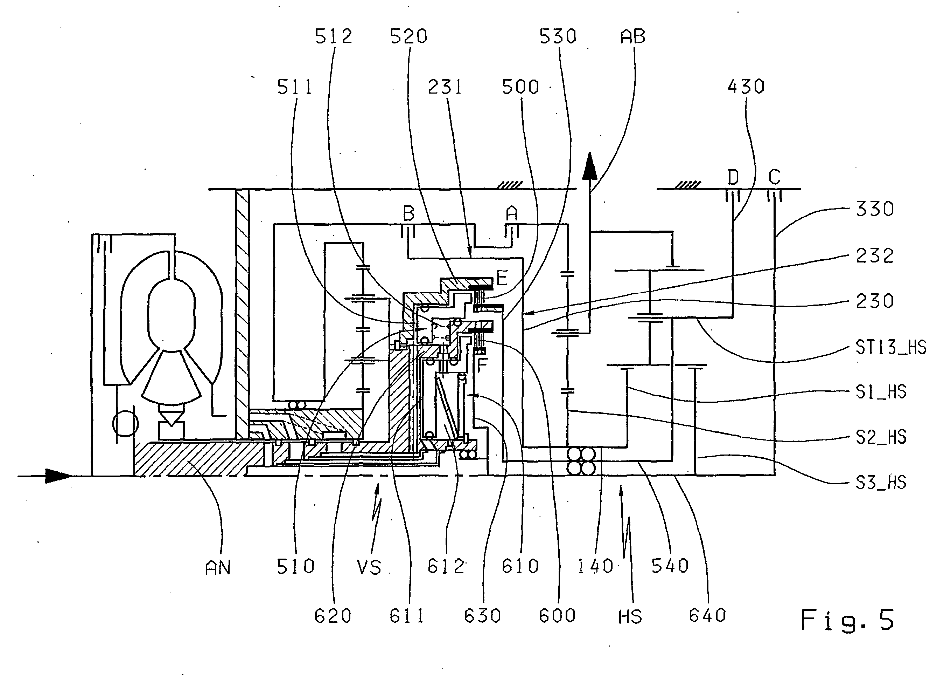

Anhand Fig. 5 wird nun ein viertes beispielhaftes Getriebeschema gemäß der vorliegenden Erfindung erläutert, basierend auf dem zuvor anhand Fig. 4 im Detail beschriebenen dritten erfindungsgemäßen Getriebeschema, jedoch mit einem zu Fig. 4 alternativen konstruktiven Ausgestaltung der Baugruppe mit dem fünften und sechsten Schaltelement E, F. Wie in Fig. 4 bilden die Kupplungen E und F eine fertigungstechnisch einfach vormontierbare Baugruppe, umfassend die hier beide beispielhaft als Außenlamellenträger ausgebildeten Eingangselement 520, 620 der Kupplungen E und F, die Servoainrichtungen 510, 610 beider Kupplungen E und F, sowie die Lamellenpakete 500, 600 beider Kupplungen E und F. Im Unterschied zu Fig. 4 jedoch ist nunmehr die Kupplung E räumlich gesehen radial über der Kupplung F angeordnet, wobei insbesondere das Lamellenpaket 500 der Kupplung E räumlich gesehen radial über dem Lamellenpaket 600 der Kupplung F angeordnet ist.

Das Eingangselement bzw. der Außenlamellenträger 620 der Kupplung F ist geometrisch in Form eines in Richtung Hauptradsatz HS geöffneten Topfes ausgebildet, dessen Nabe mit der Antriebswelle AN drehfest verbunden ist, im dargestellten Beispiel sogar ein mit der Antriebswelle AN gemeinsames Bauteil bildet. Die Servoeinrichtung 610 der Kupplung F ist vollständig innerhalb eines Zylinderraums angeordnet, der durch den Außenlamellenträger 620 der Kupplung F gebildet wird, und an diesem Außenlamellenträger 620 axial verschiebbar gelagert. Entsprechend rotiert die Servoeinrichtung 610 ständig mit Drehzahl der Antriebswelle AN. Zum Ausgleich des rotatorischen Drucks des rotierenden Druckraums 611 der Servoeinrichtung 610 ist ein dynamischer Druckausgleich mit dem Druckausgleichsraum 612 vorgesehen, wobei dieser Durckraum 611 näher am Vorschaltradsatz VS angeordnet ist als der genannte Druckausgleichsraum 612.

Das Eingangselement bzw. der Außenlamellenträger 520 der Kupplung E ist ebenfalls geometrisch in Form eines in Richtung Hauptradsatz HS geöffneten Topfes ausgebildet, dessen Nabe mit dem Eingangselement bzw. Außenlamellenträger 620 der Kupplung F an dessen Außendurchmesser verdrehfest verbunden ist. Das Eingangselement 520 der Kupplung E ist also über das Eingangselement 620 der Kupplung F mit der Antriebswelle AN verbunden. Die Servoeinrichtung 510 der Kupplung E ist vollständig innerhalb eines Zylinderraums angeordnet, der durch den Außenlamellenträger 520 der Kupplung E gebildet wird, und an diesem Außenlamellenträger 520 axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem Druckausgleichsraum 512 vorgesehen, wobei dieser Drurckraum 511 näher am Vorschaltradsatz VS angeordnet ist als der genannte Druckausgleichsraum 512.

Räumlich gesehen ist die Servoeinrichtung 510 der (radial äußeren) Kupplung E in einem Bereich radial über der Servoeinrichtung 610 der (radial inneren) Kupplung F angeordnet. Entsprechend ist der Druckraum 511 der (radial äußeren) Servoeinrichtung 510 der Kupplung E zumindest in etwa radial über dem Druckraum 611 der (radial inneren) Servoeinrichtung 610 der Kupplung F und der Druckausgleichsraum 512 der (radial äußeren) Servoeinrichtung 510 der Kupplung E zumindest in etwa radial über dem Druckausgleichsraum 612 der (radial inneren) Servoeinrichtung 610 der Kupplung F angeordnet. Eine Druckmittelzufuhr zu dem Druckraum 611 und eine Schmiermittelzufuhr zu dem drucklos befüllbaren Druckausgleichsraum 612 der Servoeinrichtung 610 der Kupplung F verläuft dabei abschnittsweise innerhalb der Nabe des Eingangselementes (Außenlamellenträgers) 620 der Kupplung F und abschnittsweise innerhalb der Antriebswelle AN. Eine Druckmittelzufuhr zu dem Druckraum 511 Servoeinrichtung 510 der (radial äußeren) Kupplung E verläuft abschnittsweise ebenfalls innerhalb des (Außenlamellenträgers) 620 der (radial inneren) Kupplung F und abschnittsweise innerhalb der Antriebswelle AN. Der Druckausgleichsraum 512 der Servoeinrichtung 510 der Kupplung E wird hier beispielhaft direkt über den Druckausgleichsraum 612 der Servoeinrichtung 610 der Kupplung F drucklos mit Schmiermittel befüllt. Zum Schließen der Kupplung E wird der Druckraum 511 der Servoeinrichtung 510 mit Druckmittel befüllt, die dann das ihr zugeordnete Lamellenpaket 500 der Kupplung E axial in Richtung Hauptradsatz HS betätigt. Zum Schließen der Kupplung F wird der Druckraum 611 der Servoeinrichtung 610 mit Druckmittel befüllt, die dann das ihr zugeordnete Lamellenpaket 600 der Kupplung F axial in Richtung Hauptradsatz HS betätigt.

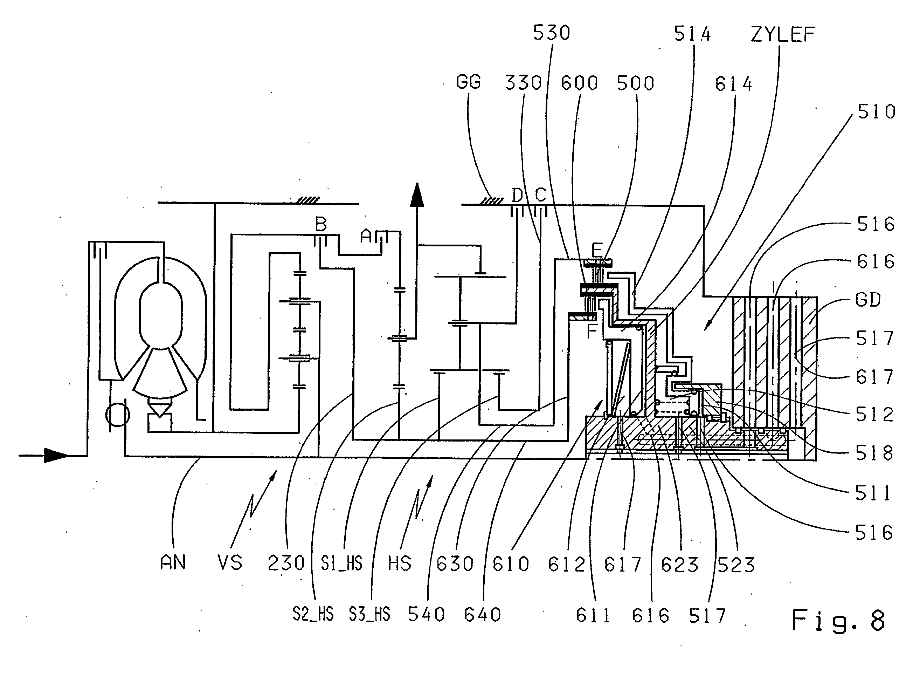

Entsprechend der kinematischen Kopplung zwischen den Ausgangselementen 230, 530, 630 der Kupplungen B, E, F und den drei Sonnenrädern S1_HS, S2_HS, S3_HS des Hauptradsatzes HS ist das genannte zweite Sonnenrad S2_HS wie in Fig. 8 vorschaltradsatznah angeordnet und das ersten Sonnenrad S1_HS axial zwischen dem zweiten und dritten Sonnenrad S1_HS, S3_HS. Im Unterschied zu Fig. 8 ist das durch die fest miteinander verbundenen Sonnenräder S1_HS und S2_HS gebildete erste Eingangselement des Hauptradsatzes HS nur noch mit dem Ausgangselement 230 des Kupplung B verbunden, hingegen ist das durch das dritte Sonnenrad S3_HS gebildete vierte Eingangselement des Hauptradsatzes HS nunmehr sowohl mit dem Ausgangselement 330 der Bremse C als auch mit dem Ausgangselement 630 der Kupplung F verbunden. Natürlich können die hier über die kurze Sonnenwelle 140 miteinander verbundenen Sonnenräder S2_HS und S3_HS bei Bedarf auch einstückig ausgeführt sein.

Die Ausgangselemente 530, 630 der beiden Kupplungen E, F sind in dem in Fig. 5 dargestellten Ausführungsbeispiel beide als Innenlamellenträger ausgebildet. Der Innenlamellenträger 630 der Kupplung F erstreckt sich ausgehend von dem Lamellenpaket 600 der Kupplung F axial angrenzend an die Servoeinrichtung 610 der Kupplung F radial nach innen und ist zentrisch mit einer dritten Sonnenwelle 640 verdrehfest verbunden. Diese dritte Sonnenwelle 640 erstreckt sich axial in Richtung Hauptradsatz HS bis zumindest zu dessen vorschaltradsatzfernen dritten Sonnenrad S3_HS, durchgreift dabei zumindest das (vorschaltradsatznahe) zweite Sonnenrad S2_HS und das (räumlich gesehen mittlere) erste Sonnenrad S1_HS des Hauptradsatzes HS in axialer Richtung zentrisch und ist mit diesem dritten Sonnenrad S3_HS verdrehfest verbunden. Im Prinzip durchgreift die dritte Sonnenwelle 640 auch dieses dritte Sonnenrad S3_HS zentrisch, da das Ausgangselement 330 der Bremse C auf der vorschaltradsatzfernen Seite des Hauptradsatzes HS mit diesem dritten Sonnenrad S3_HS oder eben mit diesem dritten Sonnenwelle 640 verdrehfest verbunden ist. Der Innenlamellenträger 530 der Kupplung E erstreckt sich ausgehend von dem Lamellenpaket 500 der Kupplung E abschnittsweise axial angrenzend an den Innenlamellenträger 630 der Kupplung F radial nach innen bis auf einen Durchmesser knapp oberhalb der dritten Sonnenwelle 640 und ist in diesem Nabenbereich mit der Stegwelle 540 verdrehfest verbunden. Diese Stegwelle 540 wiederum umschließt die dritte Sonnenwelle 640 radial, erstreckt sich dabei axial in Richtung Hauptradsatz HS bis zu dem Stegblech des vorschaltradsatzfemen gekoppelten Stegs ST13_HS des Hauptradsatzes HS, durchgreift dabei ebenfalls das zweite und erste Sonnenrad S2_HS, S1_HS des Hauptradsatzes HS in axialer Richtung, und ist in einem Bereich axial zwischen dem ersten und dritten Sonnenrad S1_HS, S3_HS des Hauptradsatzes HS mit dem genannten Stegblech des gekoppelten Stegs ST13_HS verdrehfest verbunden. Selbstverständlich können das genannte Stegblech des Stegs ST13_HS und die Stegwelle 540 auch einstückig ausgeführt sein.

In dem in Fig. 5 dargestellten Ausführungsbeispiel sind die Lamellenpakete 200 und 100 der beiden Kupplungen B und A räumlich gesehen axial nebeneinander auf zumindest ähnlichem Durchmesser in einem Bereich zumindest teilweise radial über der aus den beiden Kupplungen E und F gebildeten Baugruppe angeordnet. Das Ausgangselement 230 der Kupplung B umgreift dabei die aus den beiden Kupplungen E, F gebildete Baugruppe in axialer Richtung radial, wobei sich der zylindrische Abschnitt 231 dieses Ausgangselementes 230 zumindest weitgehend radial oberhalb des Außendurchmessers des Eingangselementes (Außenlamellenträgers) 520 der Kupplung E erstreckt und dabei die Kupplung E vollständig übergreift, und wobei sich der scheibenförmige Abschnitt 232 dieses Ausgangselementes 230 zumindest weitgehend parallel zum Ausgangselement (Innentamellenträger) 530 der Kupplung E radial nach innen erstreckt bis zu einem Durchmesser knapp oberhalb der Stegwelle 540. In seinem Nabenbereich ist das Ausgangselement 230 der Kupplung B mit dem vorschaltradsatznahen zweiten Sonnenrad S2_HS des Hauptradsatzes HS und über eine Sonnenwelle 140 auch mit dem (räumlich gesehen mittleren) ersten Sonnenrads S1_HS des Hauptradsatzes HS verdrehfest verbunden. Die Stegwelle 540 verläuft also zentrisch innerhalb dieser Nabe des Ausgangselementes 230 der Kupplung E und zentrisch innerhalb der Sonnenwelle 140.

Ansonsten entspricht die in Fig. 5 dargestellte vierte erfindungsgemäße Bauteilanordnung im wesentlichen der bereits in Fig. 4 dargestellten dritten erfindungsgemäßen Bauteilanordnung.

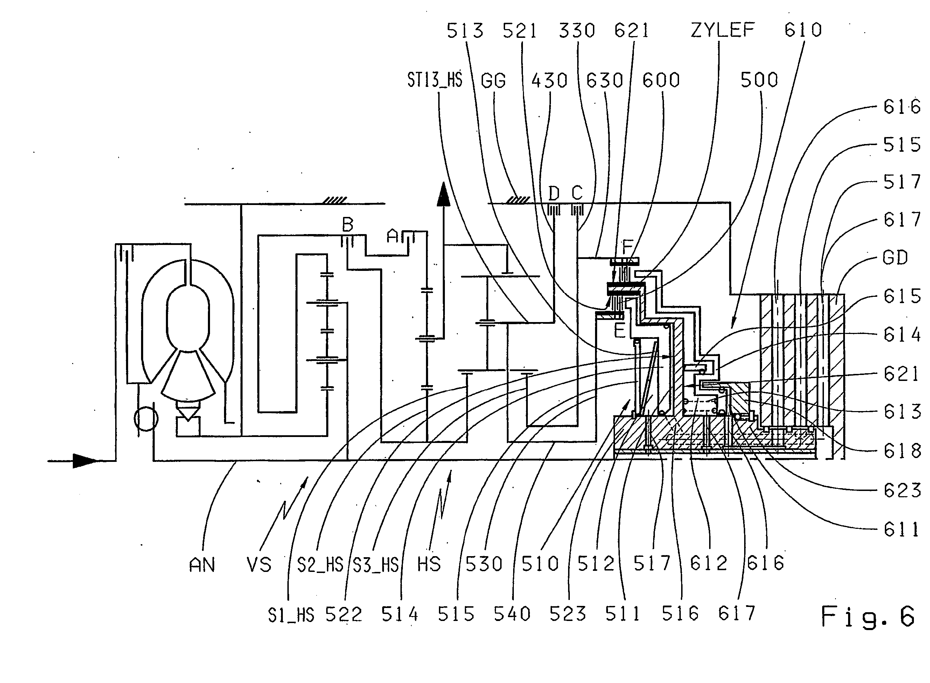

Anhand Fig. 6 wird nachfolgend nun ein fünftes beispielhaftes Getriebeschema gemäß der vorliegenden Erfindung erläutert, wiederum auf dem anhand Fig. 4 beschriebenen dritten erfindungsgemäßen Getriebeschema, jedoch mit einem zu Fig. 4 alternativen räumlichen Anordnung der Baugruppe mit dem fünften und sechsten Schaltelement E, F innerhalb des Getriebes. Nach wie vor bilden die beiden Kupplungen E und F eine fertigungstechnisch einfach vormontierbare Baugruppe, die einen für beide Kupplungen E und F gemeinsamen Lamellenträger ZYLEF, die Servoeinrichtungen 510, 610 beider Kupplungen E und F, sowie die Lamellenpakete 500, 600 beider Kupplungen E und F umfasst. Im Unterschied zu Fig. 4 ist diese aus den Kupplungen E, F bestehende Baugruppe nunmehr auf der dem Vorschaltradsatz VS abgewandten Seite des Hauptradsatzes HS angeordnet. Der Planetenradsatz des Hauptradsatzes HS mit dem geteilten Sonnenrad (also den beiden Sonnenrädern S1_HS und S2_HS) ist dabei der aus den Kupplungen E und F bestehenden Baugruppe zugewandt, wobei das Sonnenrad S3_HS des Hauptradsatzes HS axial an die genannte Baugruppe angrenzt. Entsprechend ist der andere Einfach-Planetenradsatz des Hauptradsatzes HS mit seinem Sonnenrad S2_HS dem Vorschaltradsatz VS zugewandt.

Der für die Kupplungen E und F gemeinsame Lamellenträger ZYLEF bildet für beide Kupplungen E, F deren Eingangselement und ist entsprechend mit der Antriebswelle AN verdrehfest verbunden. Für die Kupplung E ist der Lamellenträger ZYLEF als Außenlamellenträger zur Aufnahme Außenlamellen des Lamellenpaketes 500 der Kupplung E ausgebildet, für die Kupplung F als Innenlamellenträger zur Aufnahme von Innenlamellen des Lamellenpaketes 600 der Kupplung F. Räumlich gesehen ist das Lamellenpaket 600 der Kupplung F in einem Bereich radial über dem Lamellenpaket 500 der Kupplung E angeordnet. Geometrisch ist der genannte Lamellenträger ZYLEF im wesentlichen in Form eines in Richtung Hauptradsatz HS geöffneten Topfes ausgebildet, mit einem gestuft zylindrischen Abschnitt 521, an dessen Innendurchmesser die Außenlamellen des Lamellenpaketes 500 der Kupplung E angeordnet sind, mit einem zumindest weitgehend scheibenförmigen Abschnitt (Topfboden) 522, der sich ausgehend vom hauptradsatzfernen Ende des genannten zylindrischen Abschnitts 521 radial nach innen erstreckt, mit einem der Kupplung E zuzuordnenden ersten Nabenabschnitt 523, der sich ausgehend vom Innendurchmesser des genannten Topfbodens (522) axial in Richtung Hauptradsatz HS erstreckt und an seinem hauptradsatznahen Ende mit der Antriebswelle AN verbunden ist, sowie mit einem der Kupplung F zuzuordnenden zweiten Nabenabschnitt 623, der sich ausgehend vom Innendurchmesser des genannten Topfbodens (522) axial in zum Hauptradsatz HS entgegengesetzter Richtung erstreckt und an seinem hauptradsatzfernen Ende an einem mit dem Getriebegehäuse GG verdrehfest verbundenen Gehäusedeckel GD verdrehbar gelagert ist. Der Außendurchmesser des zylindrischen Abschnitts 521 ist mit 621 bezeichnet, als Hinweis, dass dieser Abschnitt auch der Kupplung F zuzuordnen ist. An diesem Außendurchmesser ist nämlich das Mitnahmeprofil zur Aufnahme der Innenlamellen des Lamellenpaketes 600 der Kupplung F vorgesehen.

Die Servoeinrichtung 510 der Kupplung E zur Betätigung deren Lamellenpaket 500 umfaßt einen Druckraum 511, einen Druckausgleichsraum 512, einen Kolben 514, ein Rückstellelement 513 sowie eine Stauscheibe 515 und ist radial oberhalb des ersten Nabenanschnitts 523 des Lamellenträgers ZYLEF vollständig innerhalb eines Zylinderraums angeordnet, der durch den Lamellenträger ZYLEF, insbesondere durch dessen zylindrischen Abschnitt 521 gebildet wird. Der Kolben 514 ist an diesem Lamellenträger ZYLEF axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem drucklos mit Schmiermittel befüllbaren Druckausgleichsraum 512 vorgesehen, wobei dieser Druckausgleichsraum 512 näher am Hauptradsatz HS angeordnet ist als der genannte Druckraum 511. Dabei wird der Druckraum 511 durch eine Mantelfläche des Lamellenträgers ZYLEF und den Kolben 514 gebildet. Der Druckausgleichsraum 512 wird gebildet durch den Kolben 514 und die Stauscheibe 515, welche axial an dem Nabenabschnitt 523 des Lamellenträgers ZYLEF fixiert ist und gegenüber dem Kolben 515 axial verschiebbar schmiermitteldicht abgedichtet ist. Der Kolben 514 ist über das hier beispielhaft als Tellerfeder ausgebildete Rückstellelement 513 axial gegen den Nabenabschnitt 523 des Lamellenträgers ZYLEF vorgespannt. Bei einer Beaufschlagung des Druckraums 511 mit Druckmittel zum Schließen der Kupplung E bewegt sich der Kolben 514 axial in Richtung Hauptradsatz HS und betätigt das ihm zugeordnete Lamellenpaket 500 gegen die Federkraft des Rückstellelementes 513.

Räumlich gesehen ist die Servoeinrichtung 510 der Kupplung E näher an Vorschalt- und Hauptradsatz VS, HS angeordnet als die Servoeinrichtung 610 der Kupplung F. Dabei ist diese Servoeinrichtung 610 räumlich gesehen zumindest überwiegend in einem Bereich radial über dem zweiten Nabenabschnitt 623 des Lamellenträgers ZYLEF angeordnet und auch an dem Lamellenträger ZYLEF axial verschiebbar gelagert. Entsprechend rotiert auch die Servoeinrichtung 610 ständig mit Drehzahl der Antriebswelle AN. Die Servoeinrichtung 610 der Kupplung F umfasst einen Druckraum 611, einen Druckausgleichsraum 612, einen abschnittsweise meanderförmig ausgebildeten Kolben 614, ein Rückstellelement 613, eine zylindrische Stauscheibe 615 und eine topfförmige Stützscheibe 618. Zum Ausgleich des rotatorischen Drucks des rotierenden Druckraums 611 der Servoeinrichtung 610 ist ein dynamischer Druckausgleich mit dem Druckausgleichsraum 612 vorgesehen. Hierzu ist die zylindrische Stauscheibe 615 auf einem definierten Durchmesser schmiermitteldicht an den scheibenförmigen Abschnitt 522 des Lamellenträgers ZYLEF befestigt (im dargestellten Beispiel verschweißt), zum axial benachbarten Kolben 614 hin axial verschiebbar schmiermitteldicht abgedichtet und bildet zusammen mit der radial unterhalb der Stauscheibe 615 befindlichen Mantelfläche 621 des Lamellenträgers ZYLEF und dem radial unterhalb der Stauscheibe 615 befindlichen Mantelfläche des Kolbens 614 den genannten Druckausgleichsraum 612. Der Druckausgleichsraum 612 der Servoeinrichtung 610 der Kupplung F und der Druckraum 511 der Servoeinrichtung 510 der Kupplung E sind also unmittelbar benachbart zueinander angeordnet und nur durch eine Mantelfläche des für die Kupplungen E und F gemeinsamen Lamellenträgers ZYLEF voneinander getrennt. Auf der dem Hauptradsatz HS bzw. dem Druckraum 511 abgewandten Seite des Druckausgleichsraums 612 ist der Druckraum 611 der Servoeinrichtung 610 angeordnet. Gebildet wird dieser Druckraum 611 durch den Kolben 615 und die Stützscheibe 618 und einen axialen Abschnitt der Nabe 623. Hierzu ist die Stützscheibe 618 druckmitteldicht an der Nabe 623 befestigt. Radial oberhalb des Abschnitts der Nabe 623, der den Druckraum 612 bildet, erstreckt sich ein zylindrischer Anschnitt dieser topfförmigen Stützscheibe 618 axial in Richtung Hauptradsatz HS (bzw. axial in Richtung Druckraum 511) und ist gegen einen korrespondierenden Abschnitt des Kolbens 614 hin druckmitteldicht axial verschiebbar abgedichtet. In seinem weiteren geometrischen Verlauf erstreckt sich der Kolben 614 zumindest weitgehend entlang der Außenkontur von Stützscheibe 618 und oberem Bereich des Lamellenträgers ZYLEF radial nach außen und axial in Richtung Hauptradsatz HS bis zu der hauptradsatzfemen Seite des ihm zugeordneten Lamellenpaket 600 der Kupplung F. Axial vorgespannt wird der Kolben 614 durch das Rückstellelement 613, dass hier beispielhaft als ein axial zwischen dem scheibenförmigen Lamellenträgerabschnitt 621 und dem Kolben 614 angeordnetes Spiralfederpaket ausgebildet ist. Bei einer Beaufschlagung des Druckraums 611 mit Druckmittel zum Schließen der Kupplung F bewegt sich der Kolben 614 axial in Richtung Hauptradsatz HS und betätigt das ihm zugeordnete Lamellenpaket 600 gegen die Federkraft des Rückstellelementes 613.

Aufgrund der Lagerung des Lamellenträgers ZYLEF an dem getriebegehäusefesten Gehäusedeckel GD ergibt sich eine konstruktiv vergleichsweise einfache Druck- und Schmiermittelzufuhr zu beiden Kupplungen E, F über entsprechende Kanäle bzw. Bohrungen, die abschnittsweise innerhalb dem genannten Gehäusedeckel GD und abschnittsweise innerhalb der Nabe des Lamellenträgers ZYLEF verlaufen. Eine Druckmittelzuführung zum Druckraum 511 der Servoeinrichtung 510 der Kupplung E ist mit 516 bezeichnet, eine Schmiermittelzuführung zum Druckausgleichsraum 512 der Servoeinrichtung 510 der Kupplung E mit 517, eine Druckmittelzuführung zum Druckraum 611 der Servoeinrichtung 610 der Kupplung F mit 616, und eine Schmiermittelzuführung zum Druckausgleichsraum 612 der Servoeinrichtung 610 der Kupplung F mit 617.

Bis auf Details der Druck- und Schmiermittelzuführung zu den beiden Kupplungen E, F entspricht die in Fig. 6 dargestellte bauteilseitige Ausgestaltung der durch die beiden Kupplungen E, F gebildeten Baugruppe mit dem für beide Kupplungen E, F gemeinsamen Lamellenträger ZYLEF, den Servoeinrichtungen 510, 610 und den Lamellenpaketen 500, 600 der beiden Kupplungen E, F entspricht also im wesentlichen der in Fig. 2 dargestellte bauteilseitigen Ausgestaltung dieser Baugruppe mit den beiden Kupplungen E, F.

Das Ausgangselement 530 der Kupplung E ist als Innenlamellenträger ausgebildet, der sich ausgehend von dem Lamellenpaket 500 der Kupplung E axial angrenzend an die Servoeinrichtung 510 der Kupplung E radial nach innen erstreckt bis knapp oberhalb der Antriebswelle AN und in seinem Nabenbereich mit der Stegwelle 540 verdrehfest verbunden ist. Diese Stegwelle 540 erstreckt sich axial in Richtung Vorschaltradsatz VS bis zu einem Bereich zwischen dem (vorschaltradsatzfernen) dritten Sonnenrad S3_HS und dem (räumlich mittleren) ersten Sonnenrad S1_HS des Hauptradsatzes HS und durchgreift dabei das dritte Sonnenrad S3_HS des Hauptradsatzes HS zentrisch in axialer Richtung. In dem genannten Bereich axial zwischen den Sonnenrädern S3_HS und S1_HS ist die Stegwelle 540 mit dem Stegblech des vorschaltradsatzfemen gekoppelten Stegs ST13_HS des Hauptradsatzes HS verdrehfest verbunden, wobei dieses genannte Stegblech des Stegs ST13_HS auch verdrehfest mit dem Ausgangselement 430 der hauptradsatznah angeordneten Bremse D verbunden ist.

Das Ausgangselement 630 der Kupplung F ist als Außenlamellenträger ausgebildet, der sich ausgehend von dem Lamellenpaket 600 der Kupplung F axial angrenzend an das Ausgangselement (bzw. den Innenlamellenträger) 530 der Kupplung E bis knapp oberhalb der Stegwelle 540 radial nach innen erstreckt und in seinem Nabenbereich mit dem (vorschaltradsatzfernen) dritten Sonnenrad S3_HS des Hauptradsatzes HS verdrehfest verbunden. Das ebenfalls kinematisch an das dritte Sonnenrad S3_HS des Hauptradsatzes HS gekoppelte Ausgangselement 330 der Bremse C ist hier beispielhaft im Bereich des Außendurchmessers des Außenlamellenträger (630) der Kupplung F mit diesem Außenlamellenträger (630) verdrehfest verbunden, wobei die Bremse C beispielhaft unmittelbar axial neben der Bremse D auf deren hauptradsatzfernen Seite angeordnet ist.

Ansonsten entspricht die in Fig. 6 dargestellte Bauteilanordnung im wesentlichen der bereits in Fig. 4 dargestellten Anordnung.

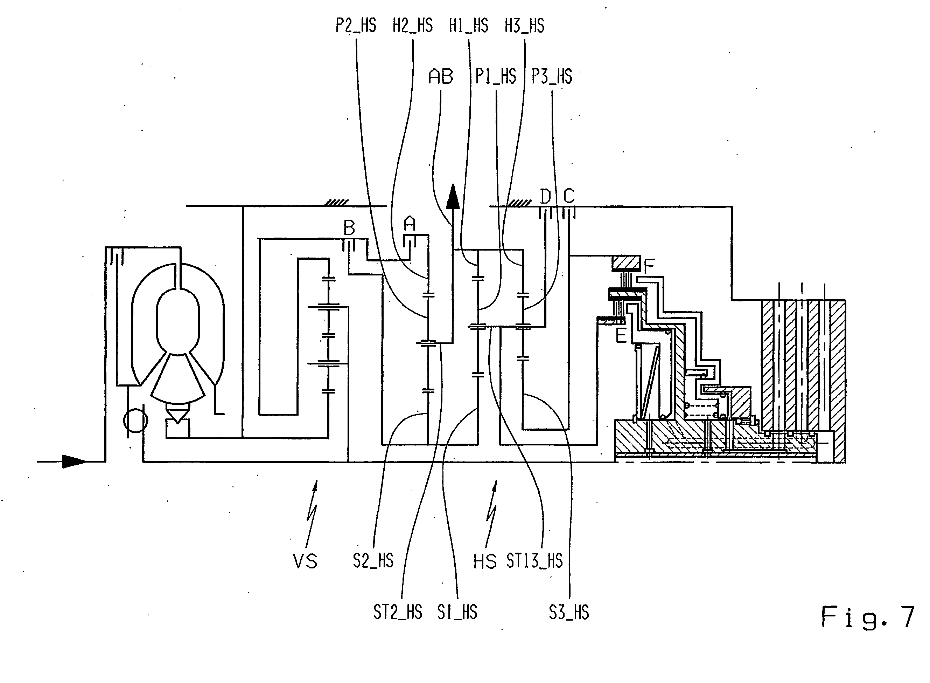

Selbstverständlich kann die anhand Fig. 6 beschriebene Bauteilanordnung auch mit einem anderen Hauptradsatz-Typ kombiniert werden. Ein entsprechendes Beispiel hierfür wird nun anhand eines in Fig. 7 dargestellten sechsten erfindungsgemäßen Getriebeschemas erläutert. Der Hauptradsatz HS ist hierbei ein Dreisteg-Vierwellen-Planetengetriebe, das auf ein Zweisteg-Planetengetriebe reduziert ist, umfassend nunmehr drei Sonnenräder S1_HS, S2_HS und S3_S, drei Hohlräder H1_HS, H2_HS und H3_S, einen gekoppelten Steg ST13_HS mit daran verdrehbar gelagerten Planetenrädern P1_HS und P3_HS, sowie einem einfachen Steg ST2_HS mit daran verdrehbar gelagerten Planetenrädern P2_HS. Dabei sind das Sonnenrad S1_HS, das Hohlrad H1_HS und die mit diesem Sonnenrad S1_HS und diesem Hohlrad H1_HS kämmenden Planetenräder P1_HS dem ersten der drei Einzel-Planetenradsätze des Hauptradsatzes HS zugeordnet. Das Sonnenrad S2_HS, das Hohlrad H2_HS und die mit diesem Sonnenrad S2_HS und diesem Hohlrad H2_HS kämmenden Planetenräder P2_HS sind dem zweiten der drei Einzel-Planetenradsätze des Hauptradsatzes HS zugeordnet. Das Sonnenrad S3_HS, das Hohlrad H3_HS und die mit diesem Sonnenrad S3_HS und diesem Hohlrad H3_HS kämmenden Planetenräder P3_HS schließlich sind dem zweiten der drei Einzel-Planetenradsätze des Hauptradsatzes HS zugeordnet. Räumlich gesehen ist der genannte erste der drei Einzel-Planetenradsätze des Hauptradsatzes HS wieder axial zwischen dem vorschaltradsatznahen zweiten der drei Einzel-Planetenradsätze des Hauptradsatzes HS und dem vorschaltradsatzfemen dritten der drei Einzel-Planetenradsätze des Hauptradsatzes HS angeordnet. Die beiden Sonnenräder S2_HS und S1_HS sind fest miteinander verbunden. Als weitere kinematische Koppelung des Hauptradsatzes HS ist eine feste Verbindung zwischen dem (einfachen) Steg ST2_HS und dem beiden Hohlrädem H1_HS und H3_HS vorgesehen.

In einer Modifikation des in Fig. 7 dargestellten Hauptradsatzes HS kann beispielsweise auch vorgesehen sein, dass die beiden am gekoppelten Steg ST13_HS verdrehbar gelagerten Planetenräder P1_HS und P3_HS des Hauptradsatzes HS zu einem Stufenplaneten zusammengefasst sind, wodurch dann eines der beiden gemäß Fig. 7 mit der Abtriebswelle AB verbundenen Hohlräder H1_HS, H3_HS des Hauptradsatzes HS entfallen kann.

Anhand Fig. 8 wird nachfolgend nun ein siebtes beispielhaftes Getriebeschema gemäß der vorliegenden Erfindung erläutert, basierend auf dem zuvor in Fig. 6 beschriebenen fünften erfindungsgemäßen Getriebeschema, wobei die Änderungen zu diesem im wesentlichen nur die konstruktive Ausgestaltung der durch die beiden Kupplungen E und F gebildeten Baugruppe betrifft. Unverändert ist diese Baugruppe auf der dem Vorschaltradsatz VS abgewandten Seite des Hauptradsatzes HS angeordnet und umfasst einen für beide Kupplungen E und F gemeinsamen Lamellenträger ZYLEF, die Servoeinrichtungen 510, 610 beider Kupplungen E und F, sowie die Lamellenpakete 500, 600 beider Kupplungen E und F. Dieser Lamellenträger ZYLEF bildet für beide Kupplungen E und F deren Eingangselement und ist entsprechend mit der Antriebswelle AN verdrehfest verbunden.

Wie in Fig. 8 ersichtlich, ist das Lamellenpaket 600 der Kupplung F nunmehr räumlich gesehen radial unter dem Lamellenpaket 500 der Kupplung E angeordnet. Entsprechend ist der Lamellenträger ZYLEF für die Kupplung F als Außenlamellenträger zur Aufnahme von außenverzahnten Lamellen des (nunmehr radial inneren) Lamellenpaketes 600 dieser Kupplung F ausgebildet, und für die Kupplung E als Innenlamellenträger zur Aufnahme von innenverzahnten Lamellen des (nunmehr radial äußeren) Lamellenpaketes 500 der Kupplung E. Entsprechend ist auch die räumliche Lage der Servoeinrichtungen 510, 610 der beiden Kupplungen E, F gegenüber Fig. 6 vertauscht und die Servoeinrichtung 610 der Kupplung F nunmehr näher am Hauptradsatz HS angeordnet als die Servoeinrichtung 510 der Kupplung E. Insofern ist die zuvor anhand Fig. 6 im Detail beschriebene Ausgestaltung dieser Servoeinrichtungen 510, 610 sinngemäß einfach übertragbar, weshalb auf deren nochmalige detaillierte verbale Beschreibung an dieser Stelle verzichtet werden kann. Zur Vermeidung von Missverständnissen seien hier lediglich die abweichenden und neuen Bezugszeichen namentlich vermerkt. So ist Fig. 8 der - nun der Kupplung F zuzuordnende - hauptradsatznahe Nabenabschnitt des Lamellenträgers ZYLEF mit 623 bezeichnet, der - nun der Kupplung E zuzuordnende - hauptradsatzfeme Nabenabschnitt des Lamellenträgers ZYLEF mit 523. Zur Bildung des Druckraums 511 der Servoeinrichtung 510 der Kupplung E ist eine Stützscheibe 518 vorgesehen, die am hauptradsatzfemen Nabenabschnitt 523 druckmitteldicht befestigt und gegenüber einem abschnittsweise meanderförmig ausgebildeten Kolben 514 dieser Servoeinrichtung 510 druckmitteldicht axial verschiebbar ist. Im Unterschied zu Fig. 6 sind nunmehr der Druckraum 611 der Servoeinrichtung 610 der Kupplung F und der Druckausgleichsraum 512 der Servoeinrichtung 510 der Kupplung E unmittelbar benachbart zueinander angeordnet und nur durch eine Mantelfläche der Lamellenträgers ZYLEF voneinander getrennt.

Wie in Fig. 8 weiterhin ersichtlich, ist das Ausgangselement 630 der Kupplung F im Unterschied zu Fig. 6 nunmehr als Innenlamellenträger ausgebildet, der sich ausgehend von dem radial inneren Lamellenpaket 600 der aus den Kupplungen E und F bestehenden Baugruppe axial angrenzend an die Servoeinrichtung 610 der Kupplung F radial nach innen erstreckt bis knapp oberhalb der Antriebswelle AN und in seinem Nabenbereich mit einer dritten Sonnenwelle 640 verdrehfest verbunden ist. Diese dritte Sonnenwelle 640 umgreift die Antriebswelle AN radial und erstreckt sich axial in Richtung Vorschaltradsatz VS und durchgreift dabei den Hauptradsatzes HS zentrisch in axialer Richtung vollständig. Verdrehfest verbunden ist diese dritte Sonnenwelle 640 zum einen auch mit dem (räumlich mittleren) ersten Sonnenrad S1_HS und dem (vorschaltradsatznahen) zweiten Sonnenrad S2_HS des Hauptradsatzes HS, zum anderen auch (räumlich gesehen in einem Bereich axial zwischen Vorschaltradsatz VS und Hauptradsatz HS) mit dem Ausgangselement 230 der Kupplung B. Das Ausgangselement 330 der Bremse C ist unmittelbar mit dem (vorschaltradsafizferne) dritten Sonnenrad S3_HS des Hauptradsatzes HS verdrehfest verbunden, im dargestellten Beispiel abschnittsweise axial unmittelbar an den Hauptradsatz HS angrenzend.

Im Unterschied zu Fig. 6 ist in Fig. 8 das Ausgangselement 530 der Kupplung E nunmehr als Außentamettenträger ausgebildet. Ausgehend von dem radial äußeren Lamellenpaket 500 der aus den Kupplungen E und F bestehenden Baugruppe erstreckt sich dieser Außenlamellenträger (530) der Kupplung E abschnittsweise zumindest weitgehend parallel axial zwischen dem Ausgangselement (Innenlamellenträger) 630 der Kupplung F und dem Ausgangselement 330 der Bremse C radial nach innen bis zu einem Durchmesser knapp oberhalb der dritten Sonnenwelle 640. In seinem Nabenbereich ist der lnnenlamellenträger (530) der Kupplung E wiederum mit der Stegwelle 540 verdrehfest verbunden, welche die dritte Sonnenwelle 640 radial umschließt. Wie in Fig. 6 durchgreift die Stegwelle 540 das (vorschaltradsatzferne) dritte Sonnenrad S3_HS des Hauptradsatzes HS in axialer Richtung und ist im Bereich axial zwischen den Sonnenrädern S3_HS und S1_HS verdrehfest mit dem Stegblech des (vorschaltradsatzfernen) gekoppelten Stegs ST13_HS des Hauptradsatzes HS verbunden.

Ansonsten entspricht die in Fig. 8 dargestellte Bauteilanordnung der bereits in Fig. 6 dargestellten Anordnung.

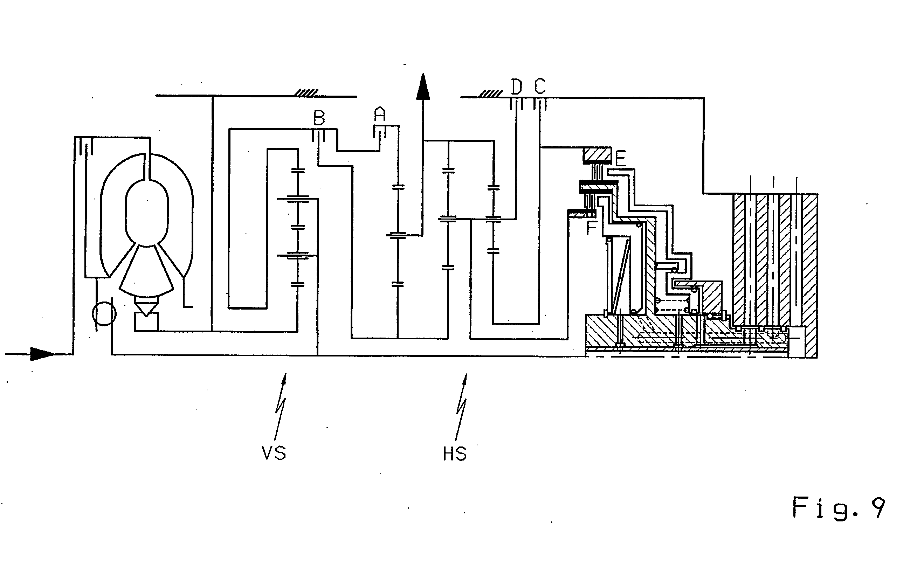

Selbstverständlich kann auch die anhand Fig. 8 beschriebene Bauteilanordnung auch mit einem anderen Hauptradsatz-Typ kombiniert werden. Ein entsprechendes Beispiel ist in Fig. 9 als ein achtes erfindungsgemäßes Getriebeschema dargestellt. Der Hauptradsatz HS ist hierbei ein Dreisteg-Vierwellen-Planetengetriebe, das auf ein Zweisteg-Planetengetriebe reduziert ist und dabei identisch wie der in Fig. 7 dargestellte Hauptradsatz HS aufgebaut ist, weshalb an dieser Stelle auf dessen nochmalige detaillierte Beschreibung verzichtet werden kann.

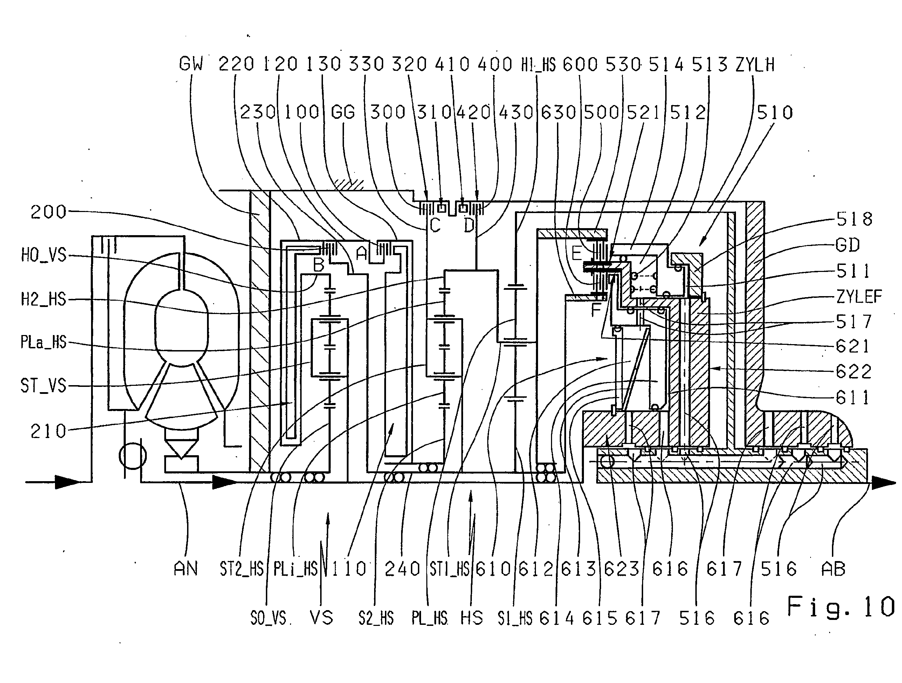

Anhand Fig. 10 wird nun ein neuntes beispielhaftes Getriebeschema gemäß der vorliegenden Erfindung erläutert, wiederum basierend auf dem anhand Fig. 8 beschriebenen siebten erfindungsgemäßen Getriebeschema, jedoch mit einem zu Fig. 8 zweiten alternativen Hauptradsatz HS und mit einer zu Fig. 8 alternativen konstruktiven Ausgestaltung der Baugruppe mit dem fünften und sechsten Schaltelement E, F.

Wie in Fig. 10 ersichtlich, ist der "neue" Hauptradsatz HS nunmehr als ein Zweisteg-Vierwellen-Planetengetriebe mit drei Eingangselementen und einem Ausgangselement ausgebildet, umfassend zwei miteinander gekoppelte Einfach-Planetenradsätze, von denen der erste in Einfach-Planetenbauweise und der zweite in Doppel-Planetenbauweise ausgeführt ist. Der zweite Einfach-Planetenradsatz des Hauptradsatzes HS ist dem Vorschaltradsatz VS zugewandt und umfasst ein Sonnenrad S2_HS, ein Hohlrad H2_S, sowie einen gekoppelten Steg ST2_HS mit daran verdrehbar gelagerten inneren und äußeren Planetenrädern PLi_HS, PLa_HS. Die inneren Planetenräder PLi_HS kämmen dabei mit dem Sonnenrad S2_HS und den äußeren Planetenrädern PLa_HS, die äußeren Planetenrädern PLa_HS mit den inneren Planetenrädern PLi_HS und dem Hohlrad H2_HS. Der erste Einfach-Planetenradsatz des Hauptradsatzes HS ist auf der dem Vorschaltradsatz VS abgewandten Seite des zweiten Einfach-Planetenradsatzes des Hauptradsatzes HS angeordnet und umfasst ein Sonnenrad S1_HS, ein Hohlrad H1_S, sowie einen Steg ST1_HS mit daran verdrehbar gelagerten Planetenrädern PL_HS. Dabei kämmen die Planetenräder PL_HS mit dem Sonnenrad S1_HS und dem Hohlrad H1_HS.

Das erste Sonnenrad S1_HS und der gekoppelte zweite Steg ST2_HS des Hauptradsatzes HS sind miteinander verdrehfest verbunden und bilden das erste Eingangselement des Hauptradsatzes HS, welches mit den Ausgangselementen 230, 630 der beiden Kupplungen B, F und dem Ausgangselement 330 der Bremse C verbunden ist. Dabei sind die Ausgangsetemente 230, 630 der Kupplungen B, F über die erste Sonnenwelle 240 mit dem Sonnenrad S1_HS verdrehfest verbunden, das Ausgangselement 330 der Bremse C hingegen ist mit einem vorschaltradsatzseitigen Stegblech des Stegs ST2_HS verdrehfest verbunden. Das Eingangselement 220 der Kupplung B wiederum ist mit dem Hohlrad HO_VS des Vorschaltradsatzes VS verbunden. Das Eingangselement 620 der Kupplung F wiederum ist mit der Antriebswelle AN verbunden. Das Eingangselement 320 der Bremse C wiederum ist mit dem Getriebegehäuse GG verbunden bzw. in dem Getriebegehäuse GG integriert.

Das vorschaltradsatznahe zweite Sonnenrad S2_HS des Hauptradsatzes HS bildet das zweite Eingangselement des Hauptradsatzes HS und ist mit dem Ausgangselement 130 der Kupplung A verbunden. Das Eingangselement 120 der Kupplung A wiederum ist mit dem Hohlrad HO_VS des Vorschaltradsatzes VS verbunden.

Der erste Steg ST1_HS und das zweite Hohlrad H2_HS des Hauptradsatzes HS sind miteinander verbunden und bilden das dritte Eingangselement des Hauptradsatzes HS, welches wiederum mit dem Ausgangselement 530 der Kupplung E und dem Ausgangselement 430 der Bremse D verbunden ist. Dabei ist das Ausgangselement 530 der Kupplung E mit einem vorschaltradsatzfernen Stegblech des Stegs ST1_HS verdrehfest verbunden, das Ausgangselement 430 der Bremse D hingegen ist mit dem Hohlrad H2_HS bzw. mit einem vorschaltradsatznahen Stegblech des Stegs ST1_HS verdrehfest verbunden. Das Eingangselement 520 der Kupplung E wiederum ist mit der Antriebswelle AN verbunden. Das Eingangselement 420 der Bremse D wiederum ist mit dem Getriebegehäuse GG verbunden bzw. in dem Getriebegehäuse GG integriert.

Das vorschaltradsatzferne erste Hohlrad H1_HS des Hauptradsatzes HS bildet das Ausgangselement des Hauptradsatzes HS und ist mit der Abtriebswelle AB des Getriebes verbunden. In dem in Fig. 10 dargestellten Ausführungsbeispiel verläuft die Abtriebswelle AB koaxial zur Antriebswelle AN. Der Fachmann wird aber bei Bedarf die Abtriebswelle AB abweichend von der Darstellung in Fig. 10 auch achsparallel oder winklig zur Antriebswelle AN anordnen.

Die Schaltlogik dieses neunten erfindungsgemäßen Getriebeschemas gemäß Fig. 10 entspricht der in Fig. 1B dargestellten Schaltlogik des gattungsgemäßen Getriebes.

Die räumliche Anordnung der sechs Schaltelemente A bis F innerhalb des Getriebegehäuses GG orientiert sich an deren zuvor beschriebenen jeweiliger kinematischen Anbindung an die einzelnen Komponenten des Hauptradsatzes HS. Wie in Fig. 10 ersichtlich, ist die Bremse C mit ihrem Lamellenpaket 300 und ihrer Servoeinrichtung 310 im Bereich des Innendurchmessers des Getriebegehäuses GG angeordnet, räumlich gesehen überwiegend axial neben dem Hauptradsatz HS auf dessen vorschaltradsatznahen Seite, teilweise aber auch radial über dem vorschattradsatznahen zweiten Hohlrad H2_HS des Hauptradsatzes HS. Bei Bedarf wird der Fachmann die Bremse C abweichend von der Darstellung in Fig. 10 beispielsweise auch in einem Bereich nahe der getriebegehäusefesten Gehäusewand GW auf der hauptradsatzfernen Seite des Vorschaltradsatzes VS anordnen. Wie in Fig. 10 weiterhin ersichtlich, ist die Bremse D mit ihrem Lamellenpaket 400 und ihrer Servoeinrichtung 410 ebenfalls im Bereich des Innendurchmessers des Getriebegehäuses GG angeordnet, räumlich gesehen aber in einem Bereich radial über dem Hauptradsatz HS und dabei in etwa radial über dem vorschaltradsatznahen zweiten Hohlrad H2_HS des Hauptradsatzes HS.

Wie in Fig. 10 weiterhin ersichtlich, schließt sich die Kupplung A axial unmittelbar an den Hauptradsatz HS auf dessen vorschaltradsatznahen Seite an. Dabei ist das mit dem zweiten Sonnenrad S2_HS des Hauptradsatzes HS verbundene Ausgangselement 130 der Kupplung A als zylinderförmiger Außenlamellenträger ausgebildet, geometrisch in Form eines in Richtung Vorschaltradsatz VS hin geöffneten Topfes, innerhalb dessen das Lamellenpaket 100 der Kupplung A und die Servoeinrichtung 110 der Kupplung A zum Betätigen dieses Lamellenpaketes 100 angeordnet sind. Entsprechend rotiert die Servoeinrichtung 110 der Kupplung A stets mit Drehzahl des zweiten Sonnenrades S2_HS des Hauptradsatzes HS. Das entsprechend als Innenlamellenträger ausgebildete Eingangselement 120 der Kupplung A ist über das Eingangselement 220 der Kupplung B mit dem Hohlrad HO_VS des Vorschaltradsatzes VS verdrehfest verbunden. Die Kupplung B wiederum ist teilweise auf der hauptradsatzfemen Seite des Vorschaltradsatzes VS und teilweise radial über dem Vorschaltradsatz VS angeordnet, wobei das Lamellenpaket 200 der Kupplung B zumindest teilweise radial über dem Hohlrads HO_VS des Vorschaltradsatzes VS und die Servoeinrichtung 210 der Kupplung B zur Betätigung dieses Lamellenpaketes 200 zumindest überwiegend auf der dem Hauptradsatz HS gegenüberliegenden Seite des Vorschaltradsatzes VS angeordnet ist. Das mit dem Hohlrad HO_VS verbundene Eingangselement 220 der Kupplung B ist als zylinderförmiger Außenlamellenträger ausgebildet, geometrisch in Form eines in Richtung Hauptradsatz HS hin geöffneten Topfes, innerhalb dessen das Lamellenpaket 200 und die Servoeinrichtung 210 der Kupplung B angeordnet sind. Das entsprechend als Innenlamellenträger ausgebildete Ausgangselement 230 der Kupplung B grenzt auf der dem Hauptradsatz HS zugewandten Seite des Vorschaltradsatzes VS unmittelbar an diesen Vorschaltradsatz VS an und ist in seinem Nabenbereich zur kinematischen Anbindung an das erste Sonnenrad S1_HS (und das vorschaltradsatzferne Stegblech des zweiten Stegs ST2_HS) des Hauptradsatzes HS mit der bereits erwähnten ersten Sonnenwelle 240 verdrehfest verbunden. Die erste Sonnenwelle 240 wiederum umschließt die Antriebswelle AN und durchgreift in ihrem axialen Verlauf ausgehend von der Nabe des Ausgangselementes 230 bzw. Innenlamallenträgers der Kupplung B zunächst den durch das Ausgangselement 130 bzw. den Außenlamellenträger der Kupplung A gebildeten Kupplungsraum der Kupplung A zentrisch vollständig und anschließend auch das vorschaltradsatznahe zweite Sonnenrad S2_HS des Hauptradsatzes HS zentrisch vollständig.

Wie in Fig. 10 weiterhin ersichtlich, bilden die beiden Kupplungen E und F eine in fertigungstechnisch günstiger Weise vormontierbare Baugruppe, umfassend einen für beide Kupplungen E, F gemeinsamen Lamellenträger ZYLEF, für beide Kupplungen E, F je ein Lamellenpaket 500 bzw. 600 sowie für beide Kupplungen E, F je eine Servoeinrichtung 510 bzw. 610 zur Betätigung des jeweiligen Lamellenpaketes 500 bzw. 600. Ähnlich wie in Fig. 8 ist diese Baugruppe auf der dem Vorschaltradsatz VS gegenüberliegenden Seite des Hauptradsatzes HS angeordnet, räumlich gesehen zwischen einem getriebegehäusefesten Gehäusedeckel GD, der die der Gehäusewand GW gegenüberliegende Außenwand des Getriebes bildet, und dem Hauptradsatz HS und dabei axial an diesen Hauptradsatz HS angrenzend.

Der für die beiden Kupplungen E, F gemeinsame Lamellenträger ZYLEF bildet für beide Kupplungen E, F deren Eingangselement und ist entsprechend mit der Antriebswelle AN verdrehfest verbunden, die hierzu fast das ganze Getriebe in axialer Richtung zentrisch durchgreift. Das Lamellenpaket 500 der Kupplung E ist räumlich gesehen zumindest weitgehend radial über dem Lamellenpaket 600 der Kupplung F angeordnet, wobei beide Lamellenpakete 500, 600 benachbart zum Hauptradsatz HS - insbesondere benachbart zu dessen erstem Hohlrad H1_HS - angeordnet sind. Entsprechend ist der Lamellenträger ZYLEF für die Kupplung F als Außenlamellenträger zur Aufnahme von außenverzahnten Lamellen des radial inneren Lamellenpaketes 600 dieser Baugruppe ausgebildet, und für die Kupplung E als Innenlamellenträger zur Aufnahme von innenverzahnten Lamellen des radial äußeren Lamellenpaketes 500 dieser Baugruppe. Auch die auf der hauptradsatzfernen Seite des Lamellenpaketes 500 angeordnete Servoeinrichtung 510 der Kupplung E ist räumlich gesehen zumindest weitgehend radial über der auf der hauptradsatzfemen Seite des Lamellenpaketes 600 angeordneten Servoeinrichtung 610 der Kupplung F angeordnet.

Geometrisch ist der Lamellenträger ZYLEF als ein in Richtung Hauptradsatz HS hin geöffneter Topf ausgebildet, mit einem gestuft zylindrischen Abschnitt 621 bzw. 521, einem Topfboden 622 und mit einer Nabe 623. Im Bereich seines hauptradsatznahen Endes weist der gestuft zylindrische Abschnitt des Lamellenträgers ZYLEF an seinem Innendurchmesser ein Mitnahmeprofil zur Aufnahme der Außenlamellen des Lamellenpaketes 600 der Kupplung F und an seinem Außendurchmesser ein Mitnahmeprofil zur Aufnahme der Innenlamellen des Lamellenpaketes 500 der Kupplung E auf. Entsprechend ist der Außendurchmesser des gestuft zylindrischen Abschnitts des Lamellenträgers ZYLEF mit 521 bezeichnet und der Innendurchmesser dieses gestuft zylindrischen Abschnitts mit 621. Am hauptradsatzfemen Endes des gestuft zylindrischen Abschnitts 621 bzw. 521 des Lamellenträgers ZYLEF schließt sich der scheibenförmige Topfboden 622 an und erstreckt sich radial nach innen bis zu einem Durchmesser knapp oberhalb der Abtriebswelle AB des Getriebes. Am Innendurchmesser dieses Topfbodens 622 wiederum schließt sich die Nabe 623 des Lamellenträgers ZYLEF an und erstreckt sich axial in Richtung Hauptradsatz HS. Dabei ist diese Nabe 623 auf der Abtriebswelle AB verdrehbar gelagert. Die Abtriebswelle AB wiederum ist in dem Gehäusedeckel GD verdrehbar gelagert und durchdringt diesen Gehäusedeckel GD in axialer Richtung zentrisch. Sollte in einer anderen Ausgestaltung des Getriebeschemas abweichend zur Darstellung in Fig. 10 die Abtriebswelle AB nicht koaxial zur Antriebswelle AN angeordnet sein, so wäre die Nabe 623 des Lamellenträgers ZYLEF dann zweckmäßigerweise an einem sich axial in Richtung Hauptradsatz HS in den Getriebeinnenraum erstreckenden getriebegehäusefesten Zapfen des Gehäusedeckels GD verdrehbar gelagert.

Wie in Fig. 10 weiterhin ersichtlich, ist die Servoeinrichtung 610 der Kupplung F räumlich gesehen radial über der Nabe 623 des Lamellenträgers ZYLEF vollständig innerhalb eines Zylinderraums angeordnet, der durch den Lamellenträger ZYLEF, genauer gesagt durch den gestuft zylindrischen Abschnitt 621 und den Topfboden 622 des Lamellenträgers ZYLEF gebildet wird. Da die Servoeinrichtung 610 an diesem Lamellenträger ZYLEF axial verschiebbar gelagert ist, rotiert sie ständig mit Drehzahl der Antriebswelle AN. Dabei umfasst die Servoeinrichtung 610 einen Druckraum 611, einen Druckausgleichsraum 612, einen Kolben 614, ein Rückstellelement 613 und eine Stauscheibe 615. Der Kolben 614 ist im Lamellenträger ZYLEF druckmitteldicht axial verschiebbar gelagert und über das hier beispielhaft als Tellerfeder ausgebildete Rückstellelement 613 axial gegen die Nabe 623 des Lamellenträgers ZYLEF vorgespannt. Der Druckraum 611 wird gebildet durch den Kolben 614 und einen Teil der inneren Mantelfläche des Lamellenträgers ZYLEF. Zum Ausgleich des rotatorischen Drucks des rotierenden Druckraums 611 ist ein dynamischer Druckausgleich mit dem Druckausgleichsraum 612 vorgesehen, wobei dieser Druckausgleichsraum 612 durch den Kolben 614 und die Stauscheibe 615 gebildet wird und näher am Hauptradsatz HS angeordnet ist als der Druckraum 611.

Die Druckmittel- und Schmiermittel-Versorgung der Servoeinrichtung 610 der Kupplung F erfolgt über entsprechende Kanäle bzw. Bohrungen, die abschnittsweise innerhalb der Gehäusewand GW und abschnittsweise innerhalb der Abtriebswelle AB und abschnittsweise innerhalb der Nabe 623 des Lamellenträgers ZYLEF verlaufen. Eine Druckmittelzuführung zum Druckraum 611 der Servoeinrichtung 610 der Kupplung F ist mit 616 bezeichnet, eine Schmiermittelzuführung zum Druckausgleichsraum 612 der Servoeinrichtung 610 der Kupplung F mit 617. Wird der Druckraum 611 zum Schließen der Kupplung F mit Druckmittel beaufschlagt, so bewegt sich der Kolben 614 axial in Richtung Hauptradsatz HS und betätigt das ihm zugeordnete Lamellenpaket 600 gegen die Federkraft des Rückstellelementes 613.

Die Servoeinrichtung 510 der radial äußeren Kupplung E ist räumlich gesehen in einem Bereich radial über der Servoeinrichtung 610 der radial inneren Kupplung F angeordnet. Diese Servoeinrichtung 510 umfaßt einen Druckraum 511, einen Druckausgleichsraum 512, einen Kolben 514, ein Rückstellelement 513 und eine Stützscheibe 518. Dabei ist der Druckraum 511 der Servoeinrichtung 510 der (radial äußeren) Kupplung E zumindest in etwa radial über dem Druckraum 611 der Servoeinrichtung 610 der (radial inneren) Kupplung F und der Druckausgleichsraum 512 der Servoeinrichtung 510 der (radial äußeren) Kupplung E zumindest in etwa radial über dem Druckausgleichsraum 612 der Servoeinrichtung 610 der (radial inneren) Kupplung F angeordnet. Gebildet wird der genannte Druckraum 511 durch den Kolben 514, die Stützscheibe 518 und einen Teil der äußeren Mantelfläche des Lamellenträgers ZYLEF. Hierzu ist die Stützscheibe 518 geometrisch in Form eines in Richtung Lamellenpaket 500 bzw. in Richtung Hauptradsatz HS hin geöffneten Topfes ausgebildet, dessen Mantelfläche den Kolben 514 außen umschließt, und dessen Topfboden an seinem Innendurchmesser am Außendurchmesser des scheibenförmigen Abschnitts des Lamellenträgers ZYLEF befestigt ist. Im dargestellten Beispiel ist für die Befestigung der Stützscheibe 518 an dem Lamellenträger ZYLEF ein druckmitteldicht abgedichtetes Mitnahmeprofil und zur axialen Festlegung ein Sicherungsring vorgesehen. Somit ist der Kolben 514 zwischen dem Innendurchmesser des zylindrischen Abschnitts der Stützscheibe 518 und dem Außendurchmesser des gestuften zylindrischen Abschnitts des Lamellenträgers ZYLEF druckmitteldicht axial verschiebbar gelagert und über das Rückstellelement 513 axial gegen den Lamellenträger ZYLEF vorgespannt. Das Rückstellelement 513 ist hier beispielhaft als Federpaket aus ringförmig angeordneten Spiralfedern ausgeführt.

Eine Druckmittelzuführung 516 zu dem Druckraum 511 der Servoeinrichtung 510 der Kupplung E verläuft abschnittsweise innerhalb der Gehäusewand GW und abschnittsweise innerhalb der Abtriebswelle AB und abschnittsweise innerhalb des Topfbodens 622 des Lamellenträgers ZYLEF. Der Druckausgleichsraum 512 der Servoeinrichtung 510 der (radial äußeren) Kupplung E wird hier in baulängensparender Weise direkt über den Druckausgleichsraum 612 der Servoeinrichtung 610 der (radial inneren) Kupplung F drucklos mit Schmiermittel befüllt. Hierzu ist am Außendurchmesser des Kolbens 614 der Servoeinrichtung 610 mindestens eine Radialbohrung vorgesehen, die einerseits im Druckausgleichsraum 612 der Servoeinrichtung 610 und andererseits in einem nach außen hin schmiermitteldicht abgedichteten Ringraum am Innendurchmesser des gestuften zylindrischen Abschnitts 621 des Lamellenträgers ZYLEF mündet. Weiterhin ist in dem gestuften zylindrischen Abschnitt 621 des Lamellenträgers ZYLBF mindestens eine Radialbohrung vorgesehen, die einerseits im genannten Ringraum am Innendurchmesser des gestuften zylindrischen Abschnitts 621 und andererseits im Druckausgleichsraum 512 der Servoeinrichtung 510 mündet. Die entsprechenden Bohrungen bzw. Kanäle zwischen den beiden Druckausgleichsräumen 612, 512 sind in Fig. 10 mit 517 bezeichnet. Wird der Druckraum 511 der Servoeinrichtung 510 zum Schließen der Kupplung E mit Druckmittel befüllt, so bewegt sich der Kolben 514 axial in Richtung Hauptradsatz HS und betätigt das ihm zugeordnete Lamellenpaket 500 gegen die Federkraft des Rückstellelementes 513.

Selbstverständlich kann in einer anderen Ausgestaltung der die beiden Kupplungen E und F umfassenden Baugruppe vorgesehen sein, dass abweichend zur Darstellung in Fig. 10 die Servoeinrichtungen 510, 610 der beiden Kupplungen E, F weitgehend nebeneinander angeordnet sind, wie dies beispielsweise in Fig. 8 vorgeschlagen ist.

Wie in Fig. 10 weiterhin ersichtlich, ist das Ausgangselement 630 der Kupplung F als weitgehend scheibenförmiger Innenlamellenträger ausgebildet, der in seinem Nabenbereich mit dein vorschaltradsatzfernen ersten Sonnenrad S1_HS des Hauptradsatzes HS verdrehfest verbunden ist. Das Ausgangselement 530 der Kupplung E ist als zylindrischer Außenlamellenträger ausgebildet, der mit dem vorschaltradsatzfernen Stegblech des ersten Stegs ST1_HS des Hauptradsatzes HS verdrehfest verbunden ist und hier beispielhaft an der ersten Sonnenwelle 240 bzw. einer Nabe des Ausgangselement 630 bzw. Innenlamellenträgers der Kupplung F verdrehbar gelagert ist. Dabei können das genannte vorschaltradsatzferne Stegblech des Stegs ST1_HS und das Ausgangselement 530 bzw. der Außenlamellenträger der Kupplung E auch einstückig ausgeführt sein.

Zur Drehzahl- und Drehmomentübertragung zwischen dem vorschaltradsatzfemen ersten Hohlrad H1_HS des Hauptradsatzes HS und der hier beispielhaft koaxial zur Antriebswelle AN verlaufenden Abtriebswelle AB ist ein Verbindungselement ZYLH vorgesehen, welches geometrisch in Form eines in Richtung Hauptradsatz HS hin geöffneten Topfes mit einem scheibenförmigen Topfboden und einem zylinderringförmigen Mantel ausgebildet ist und die aus den beiden Kupplungen E, F gebildeten Baugruppe vollständig umschließt. Dabei ist der Topfboden dieses Verbindungselementes ZYLH mit der Abtriebswelle AB verdrehfest verbunden (hier beispielhaft verschweißt) und erstreckt sich in radialer Richtung axial zwischen dem Topfboden 622 des Lamellenträgers ZYLEF und der Gehäusewand GW. An seinem hauptradsatznahen Ende ist der zytinderringförmigen Mantel des Verbindungselementes ZYLH mit dem Hohlrad H1_HS verdrehfest (beispielsweise formschlüssig) verbunden.

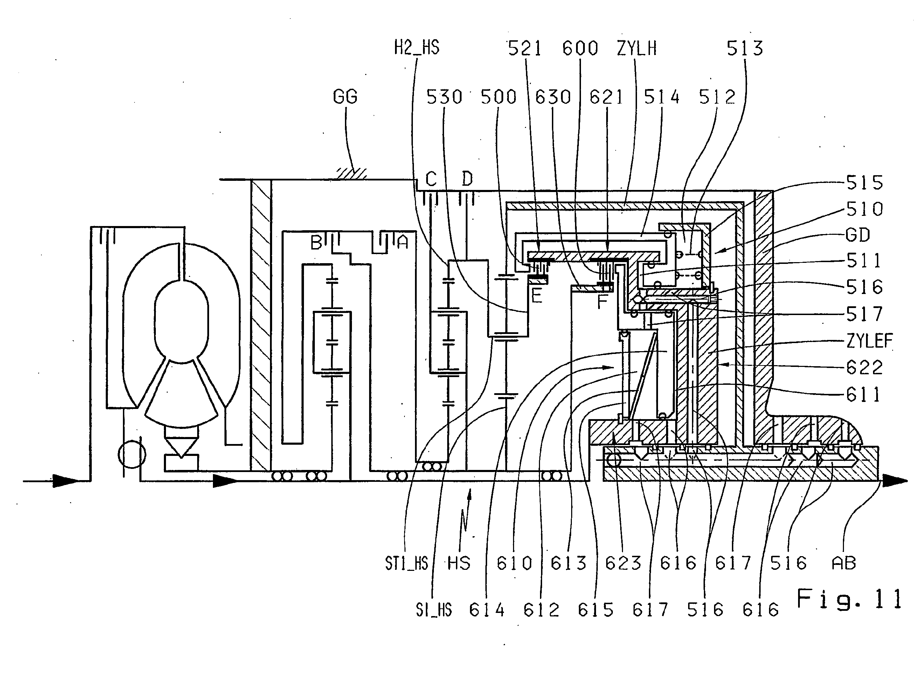

Anhand Fig. 11 wird nun ein zehntes beispielhaftes Getriebeschema gemäß der vorliegenden Erfindung erläutert, basierend auf dem zuvor anhand Fig. 10 beschriebenen neunten erfindungsgemäßen Getriebeschema, jedoch mit einem zu Fig. 10 alternativen konstruktiven Ausgestaltung der Baugruppe mit dem fünften und sechsten Schaltelement E, F. Insofern kann die Erläuterung dieses zehnten erfindungsgemäßen Getriebeschemas auf die Beschreibung dieser modifizierten Baugruppe beschränkt werden.

Wie in Fig. 11 ersichtlich, umfasst die genannte Baugruppe nach wie vor einen gemeinsamen Lamellenträger ZYLEF, der für beide Kupplungen E, F deren Eingangselement bildet und entsprechend mit der Antriebswelle AN des Getriebes verbunden ist, für beide Kupplungen E, F jeweils ein Lamellenpaket 500 bzw. 600 sowie für beide Kupplungen E, F jeweils eine Servoeinrichtung 510 bzw. 610 zur Betätigung des jeweiligen Lamellenpaketes 500 bzw. 600. Im Unterschied zu Fig. 10 sind die Lamellenpakete 500, 600 der beiden Kupplungen E, F nunmehr axial nebeneinander angeordnet, vorzugsweise auf gleichem oder aber auf einem zumindest ähnlichen Durchmesser.

In dem in Fig. 11 dargestellten Ausführungsbeispiel ist der für beide Kupplungen E, F gemeinsame, mit der Antriebswelle AN verdrehfest verbundene Lamellenträger ZYLEF nunmehr für beide Kupplungen E, F als Außenlamellenträger ausgebildet. Entsprechend der kinematischen Anbindung des (nun als Innenlamellenträger ausgebildeten) Ausgangselementes 530 der Kupplung E an den (mit dem zweiten Hohlrad H2_HS gekoppelten) ersten Steg ST1_HS des Hauptradsatzes HS und entsprechend der kinematischen Anbindung des (als Innenlamellenträger ausgebildeten) Ausgangselementes 630 der Kupplung F an das erste Sonnenrad S1_HS des Hauptradsatzes HS ist das Lamellenpaket 500 der Kupplung E näher am Hauptradsatz HS angeordnet als das Lamellenpaket 600 der Kupplung F.

Geometrisch ist der Lamellenträger ZYLEF als ein in Richtung Hauptradsatz HS hin geöffneter Topf ausgebildet, mit einem gestuft zylindrischen Abschnitt 621 bzw. 521, einem Topfboden 622 und mit einer Nabe 623. Im Bereich seines hauptradsatznahen Endes weist der gestuft zylindrische Abschnitt des Lamellenträgers ZYLEF an seinem Innendurchmesser ein Mitnahmeprofil zur Aufnahme der Außenlamellen des Lamellenpaketes 500 der Kupplung E auf. Entsprechend ist dieser Teil des gestuft zylindrischen Abschnitts des Lamellenträgers ZYLEF mit 521 bezeichnet. Im Bereich in etwa der Mitte seiner axialen Erstreckung weist der gestuft zylindrische Abschnitt des Lamellenträgers ZYLEF an seinem Innendurchmesser ein Mitnahmeprofil zur Aufnahme der Außenlamellen des Lamellenpaketes 600 der Kupplung F auf. Entsprechend ist dieser Teil des gestuft zylindrischen Abschnitts des Lamellenträgers ZYLEF mit 621 bezeichnet. Am hauptradsatzfemen Endes des gestuft zylindrischen Abschnitts (621) des Lamellenträgers ZYLEF schließt sich der scheibenförmige Topfboden 622 an und erstreckt sich radial nach innen bis zu einem Durchmesser knapp oberhalb der Abtriebswelle AB des Getriebes. Am Innendurchmesser dieses Topfbodens 622 wiederum schließt sich die Nabe 623 des Lamellenträgers ZYLEF an und erstreckt sich axial in Richtung Hauptradsatz HS. Dabei ist diese Nabe 623 auf der Abtriebswelle AB verdrehbar gelagert. Die Abtriebswelle AB wiederum ist in dem Gehäusedeckel GD verdrehbar gelagert und durchdringt diesen Gehäusedeckel GD in axialer Richtung zentrisch. Sollte in einer anderen Ausgestaltung der Getriebeschemas abweichend zur Darstellung in Fig. 11 die Abtriebswelle AB nicht koaxial zur Antriebswelle AN angeordnet sein, so wäre die Nabe 623 des Lamellenträgers ZYLEF dann zweckmäßigerweise an einem sich axial in Richtung Hauptradsatz HS in den Getriebeinnenraum erstreckenden getriebegehäusefesten Zapfen des Gehäusedeckels GD verdrehbar gelagert.

Wie in Fig. 11 weiterhin ersichtlich, ist die Servoeinrichtung 610 der Kupplung F ist räumlich gesehen radial über der Nabe 623 des Lamellenträgers ZYLEF vollständig innerhalb eines Zylinderraums angeordnet, der durch den gestuft zylindrischen Abschnitt 621 und den Topfboden 622 des Lamellenträgers ZYLEF gebildet wird. Wie in Fig. 10 umfasst die Servoeinrichtung 610 einen Druckraum 611, einen Druckausgleichsraum 612, einen Kolben 614, ein Rückstellelement 613 und eine Stauscheibe 615. Der Kolben 614 ist im Lamellenträger ZYLEF druckmitteldicht axial verschiebbar gelagert und über das hier beispielhaft als Tellerfeder ausgebildete Rückstellelement 613 axial gegen die Nabe 623 des Lamellenträgers ZYLEF vorgespannt. Der Druckraum 611 wird gebildet durch den Kolben 614 und einen Teil der inneren Mantelfläche des Lamellenträgers ZYLEF. Zum Ausgleich des rotatorischen Drucks des ständig mit Drehzahl der Antriebswelle AN rotierenden Druckraums 611 ist ein dynamischer Druckausgleich mit dem drucklos mit Schmiermittel befüllbaren Druckausgleichsraum 612 vorgesehen, wobei dieser Druckausgleichsraum 612 durch den Kolben 614 und die Stauscheibe 615 gebildet wird und näher am Hauptradsatz HS angeordnet ist als der Druckraum 611. Die Druckmittel- und Schmiermittel-Zuführung 616 bzw. 617 zur Servoeinrichtung 610 der Kupplung F ist aus Fig. 10 unverändert übernommen. Wird der Druckraums 611 zum Schließen der Kupplung F mit Druckmittel beaufschlagt, so bewegt sich der Kolben 614 axial in Richtung Hauptradsatz HS und betätigt das ihm zugeordnete Lamellenpaket 600 gegen die Federkraft des Rückstellelementes 613. Bezogen auf die räumliche Lage ihres Druckraums 611 betätigt die Servoeinrichtung 610 das ihr zugeordnete Lamellenpaket 600 beim Schließen der Kupplung F also "gedrückt".

Im Unterschied zu Fig. 10 betätigt die Servoeinrichtung 510 der Kupplung E das ihr zugeordnete Lamellenpaket 500 beim Kupplungschließen in dem zehnten erfindungsgemäßen Getriebe gemäß Fig. 11 hingegen "gezogen". In dem in Fig. 11 dargestellten Ausführungsbeispiel ist diese Servoeinrichtung 510 der Kupplung E im wesentlichen radial oberhalb der Servoeinrichtung 610 der Kupplung F angeordnet. Ein Druckraum 511 der Servoeinrichtung 510 der Kupplung E ist räumlich gesehen nunmehr in etwas radial über dem Druckausgleichsraum 612 der Servoeinrichtung 610 der Kupplung F angeordnet. Entsprechend ist ein zum Ausgleich des dynamischen Drucks des stets mit Drehzahl der Antriebswelle AN rotierenden Druckraums 511 vorgesehener Druckausgleichsraum 512 der Servoeinrichtung 510 der Kupplung E räumlich gesehen nunmehr in etwa radial über dein Druckraum 611 der Servoeinrichtung 610 der Kupplung F angeordnet. Gebildet wird der genannte Druckraum 511 der Servoeinrichtung 510 durch einen Kolben 514 dieser Servoeinrichtung 510 und durch eine radial außerhalb des Kupplungsraumes der Kupplung F liegende Mantelfläche des Lamellenträgers ZYLEF, sodaß der an dem Lamellenträger ZYLEF axial verschiebbar gelagerte Kolben 514 im wesentlichen radial oberhalb des gestuft zylindrischen Abschnitts dieses Lamellenträgers ZYLEF angeordnet ist. In dem dargestellten Ausführungsbeispiel ist dieser dem Lamellenpaket 500 der Kupplung E zugeordnete Druckraum 511 räumlich gesehen axial neben dem Lamellenpaket 600 der Kupplung F angeordnet. Zur Betätigung des ihm zugeordneten Lamellenpaketes 500 weist der Kolben 514 der Servoeinrichtung 510 der Kupplung E einen von der hauptradsatznahen Seite dieses Lamellenpaketes 500 aus auf das Lamellenpaket 500 wirkenden Druckteller auf. Anstelle dieses Drucktellers können beispielsweise auch mehrere umfangsverteilt angeordnete Betätigungsfinger vorgesehen sein. Der Kolben 514 bzw. der Druckteller bzw. die Betätigungsfinger dieses Kolbens 514 umgreifen die beiden nebeneinander angeordneten Lamellenpakete 500 und 600 in axialer Richtung radial vollständig. Der auf der dem Lamellenpaket 500 abgewandten Seite des Druckraums 511 angeordnete, drucklos mit Schmiermittel befüllbare Druckausgleichsraum 512 der Servoeinrichtung 510 der Kupplung E wird gebildet durch den Kolben 514 und durch eine topfförmige Stauscheibe 515. Diese Stauscheibe 515 ist außen am Lamellenträger ZYLEF im Bereich dessen Topfboden 622 festgesetzt und gegenüber dem Kolben 514 axial verschiebbar schmiermitteldicht abgedichtet. Eine Druckmittel- und Schmiermittel-Zuführung 516 bzw. 517 zur Servoeinrichtung 510 der Kupplung E verläuft ähnlich wie die in Fig. 10. Bei einer Befüllung des Druckraums 511 mit Druckmittel bewegt sich der Kolben 514 axial in zum Hauptradsatz HS entgegengesetzter Richtung gegen die Federkraft der Rückstellelementes 513, welches hier beispielhaft als ein axial zwischen Kolben 514 und Stauscheibe 515 eingespanntes Spiralfederpaket ausgebildet ist.

Ansonsten entspricht die in Fig. 11 dargestellte Bauteilanordnung der anhand Fig. 10 bereits im Detail erläuterten Anordnung.

Selbstverständlich kann in einer anderen Ausgestaltung der die beiden Kupplungen E und F umfassenden Baugruppe auch vorgesehen sein, dass abweichend zur Darstellung in Fig. 11 die Servoeinrichtungen 510, 610 der beiden Kupplungen E, F zumindest weitgehend nebeneinander angeordnet sind, wie dies beispielsweise in Fig. 8 vorgeschlagen ist, wobei dann ähnlich wie in Fig. 10 ein auf das Lamellenpaket 500 der Kupplung E wirkender Druckteller bzw. vorzugsweise mehrere umfangsverteilt angeordnete auf das Lamellenpaket 500 der Kupplung E wirkende Betätigungsfinder des Kolbens 514 der Servoeinrichtung 510 die beiden nebeneinander angeordneten Lamellenpakete 600, 500 in axialer Richtung radial außen umgreifen muß.

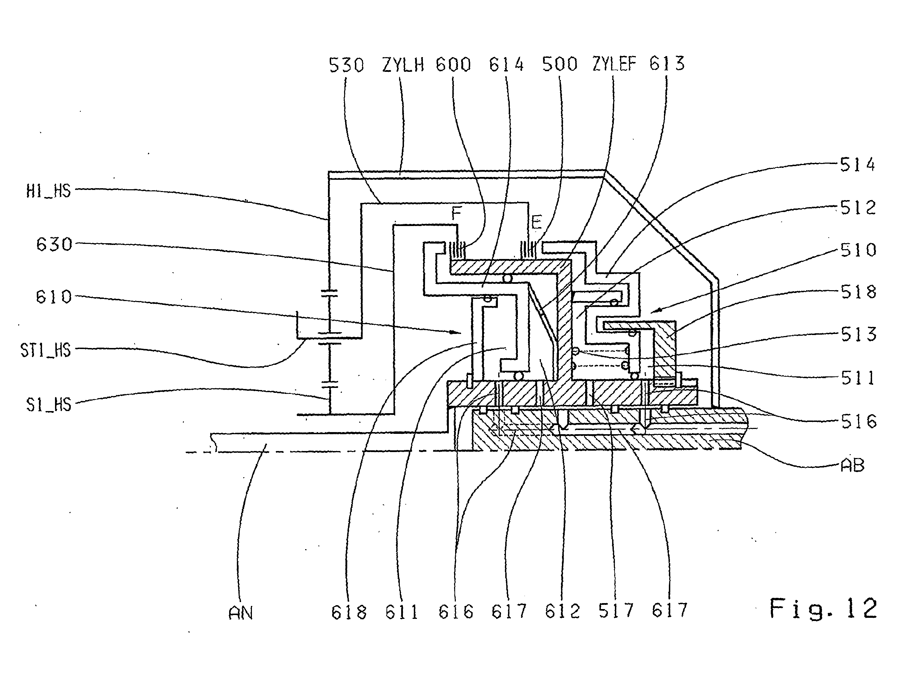

In noch einer anderen Ausgestaltung der die beiden Kupplungen E und F umfassenden Baugruppe kann beispielsweise auch vorgesehen sein, dass die Lamellenpakete 500, 600 der beiden Kupplungen E, F wie in Fig. 11 zwar unmittelbar nebeneinander angeordnet sind, das Lamellenpaket 600 der Kupplung F aber abweichend zur Darstellung näher am Hauptradsatz HS angeordnet ist als das Lamellenpaket 500 der Kupplung E. Entsprechend der kinematischen Anbindung des Ausgangselementes 530 der Kupplung E an den (mit dem zweiten Hohlrad H2_HS gekoppelten) ersten Steg ST1_HS des Hauptradsatzes HS und entsprechend der kinematischen Anbindung des Ausgangselementes 630 der Kupplung F an das erste Sonnenrad S1_HS des Hauptradsatzes HS muß in diesem Fall der für beide Kupplungen E, F gemeinsame Lamellenträger ZYLEF für beider Kupplungen E, F als Innenlamellenträger ausgeführt sein und das dann als Außenlamellenträger ausgeführte Ausgangselement 530 der Kupplung E das dann ebenfalls als Außenlamellenträger ausgeführte Ausgangselement 630 der Kupplung F in axialer Richtung radial außen umgreifen. In der Regel wird die praktische Konstruktion dieser Ausgestaltungsvariante dazu führen, dass die Servoeinrichtung 610 der Kupplung F im wesentlichen näher am Hauptradsatz HS angeordnet ist als die Servoeinrichtung 510 der Kupplung E. Insbesondere ein Druckraum 611 der Servoeinrichtung 610 der Kupplung F wird im Regelfall dann näher am Hauptradsatz HS angeordnet sein als ein Druckraum 511 der Servoeinrichtung 510 der Kupplung E. Je nach zur Verfügung stehendem Bauraum kann die Servoeinrichtung 510 der Kupplung E räumlich gesehen zumindest weitgehend radial über der Servooeinrichtung 610 der Kupplung F oder aber zumindest weitgehend auf der dem Hauptradsatz HS gegenüberliegenden Seite der Servoeinrichtung 610 der Kupplung F angeordnet sein. Abweichend von Fig. 11 betätigt die Servoeinrichtung 610 das ihr zugeordnete Lamellenpaket 600 beim Schließen der Kupplung F bei dieser Ausgestaltungsvariante axial in zum Hauptradsatz HS entgegengesetzter Richtung, bezogen auf die räumliche Lage ihres Druckraums 611 also "gezogen", wohingegen die Servoeinrichtung 510 das ihr zugeordnete Lamellenpaket 500 beim Schließen der Kupplung E axial in Richtung Hauptradsatz HS betätigt, bezogen auf die räumliche Lage ihres Druckraums 511 also "gedrückt". Sofern für die Kupplung F ein dynamischer Druckausgleich vorgesehen ist, wäre der Druckraum 611 der Servoeinrichtung 610 der Kupplung F dann näher am Hauptradsatz HS angeordnet als ein für den genannten dynamischen Druckausgleich erforderlicher Druckausgleichsraum 612 dieser Servoeinrichtung 610. Sofern für die Kupplung E ein dynamischer Druckausgleich vorgesehen ist, wäre ein für diesen dynamischen Druckausgleich erforderlicher Druckausgleichsraum 512 der Servoeinrichtung 510 der Kupplung E dann zweckmäßigerweise näher am Hauptradsatz HS angeordnet als der Druckraum 511 der Servoeinrichtung 510, ungeachtet der schon erwähnten möglichen räumlichen Lage dieser Servoeinrichtung 510 radial über oder axial neben der Servoeinrichtung 610 der Kupplung F. Eine Skizze zu einer möglichen Konstruktion dieser vorgeschlagenen Ausgestaltungsvariante der durch die Kupplungen E, F gebildeten Baugruppe ist in Fig. 12 dargestellt.

Abschießend sei noch einmal darauf hingewiesen, dass die in den verschiedenen erfindungsgemäßen Bauteilanordnungen auch sinngemäß mit den verschiedenen zuvor erläuterten Hauptradsatz-Varianten kombinierbar sind.

### Bezugszeichen

- A: erstes Schaltelement, Kupplung
- B: zweites Schaltelement, Kupplung
- C: drittes Schaltelement, Bremse
- D: viertes Schaltelement, Bremse
- E: fünftes Schaltelement, Kupplung
- F: sechstes Schaltelement, Kupplung

- AN: Antriebswelle
- AB: Abtriebswelle
- GD: Gehäusedeckel
- GG: Getriebegehäuse
- GN: Nabe der Gehäusewand
- GW: Gehäusewand
- GZ: Gehäusezwischenwand
- NAN: Zahnprofil zur Antriebsdrehzahlbestimmung
- ZYL: zylinderförmiges Verbindungselement
- ZYLB: zylinderförmiges Verbindungselement
- ZYLF: zylinderförmiges Verbindungselement
- ZYLH: Verbindungselement
- ZYLAB: gemeinsamer Lamellenträger des ersten und zweiten Schaltelementes
- ZYLBF: gemeinsamer Lamellenträger des zweiten und sechsten Schaltelementes
- ZYLCD: gemeinsamer Lamellenträger des dritten und vierten Schaltelementes
- ZYLEF: gemeinsamer Lamellenträger des fünften und sechsten Schaltelementes
- VS: Vorschaltradsatz
- HO_VS: Hohlrad des Vorschaltradsatzes
- SO_VS: Sonnenrad des Vorschaltradsatzes
- ST_VS: (gekoppelter) Steg des Vorschaltradsatzes
- P1_VS: inneres Planetenrad des Vorschaltradsatzes
- P2_VS: äußeres Planetenrad des Vorschaltradsatzes

- HS: Hauptradsatz
- H1_HS: erstes Hohlrad des Hauptradsatzes
- H2_HS: zweites Hohlrad des Hauptradsatzes
- H23_HS: gekoppeltes (zweites) Hohlrad des Hauptradsatzes
- S1_HS: erstes Sonnenrad des Hauptradsatzes
- S2_HS: zweites Sonnenrad des Hauptradsatzes
- S3_HS: drittes Sonnenrad des Hauptradsatzes
- ST1_HS: erster Steg des Hauptradsatzes
- ST2_HS: zweiter Steg des Hauptradsatzes
- ST13_HS: gekoppelter (zweiter) Steg des Hauptradsatzes
- P13_HS: langes Planetenrad des Hauptradsatzes
- P2_HS: kurzes Planetenrad des Hauptradsatzes
- PL_HS: erstes Planetenrad des Hauptradsatzes
- PLa_HS: äußeres Planetenrad des Hauptradsatzes
- PLi_HS: inneres Planetenrad des Hauptradsatzes
- 100: Lamellen des ersten Schaltelementes
- 110: Servoeinrichtung des ersten Schaltelementes
- 111: Druckraum der Servoeinrichtung des ersten Schaltelementes
- 112: Druckausgleichsraum der Servoeinrichtung des ersten Schaltelementes
- 113: Rückstellelement der Servoeinrichtung des ersten Schaltelementes
- 114: Kolben der Servoeinrichtung des ersten Schaltelementes
- 115: Stauscheibe der Servoeinrichtung des ersten Schaltelementes
- 120: Eingangselement des ersten Schaltelementes
- 123: Nabe des Eingangselementes des ersten (und zweiten) Schaltelementes
- 130: Ausgangselement des ersten Schaltelementes
- 140: zweite Sonnenwelle
- 150: Mitnahmescheibe

- 200: Lamellen des zweiten Schaltelementes
- 210: Servoeinrichtung des zweiten Schaltelementes
- 211: Druckraum der Servoeinrichtung des zweiten Schaltelementes
- 212: Druckausgleichsraum der Servoeinrichtung des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 216: Druckmittelzuführung zum Druckraum der Servoeinrichtung des zweiten Schaltelementes
- 217: Schmiermittelzuführung zum Druckausgleichsraum der Servoeinrichtung des zweiten Schaltelementes
- 218: Stützscheibe der Servoeinrichtung des zweiten Schaltelementes
- 219: Nabe der Servoeinrichtung des zweiten Schaltelementes
- 220: Eingangselement des zweiten Schaltelementes
- 223: Nabe des Eingangselementes des zweiten Schaltelementes
- 230: Ausgangselement des zweiten Schaltelementes
- 233: Nabe des Ausgangselementes des zweiten Schaltelementes
- 240: erste Sonnenwelle
- 250: Mitnahmeblech
- 300: Lamellen des dritten Schaltelementes
- 310: Servoeinrichtung des dritten Schaltelementes
- 311: Druckraum der Servoeinrichtung des dritten Schaltelementes
- 313: Rückstellelement der Servoeinrichtung des dritten Schaltelementes
- 314: Kolben der Servoeinrichtung des dritten Schaltelementes
- 320: Eingangselement des dritten Schaltelementes
- 330: Ausgangselement des dritten Schaltelementes

- 400: Lamellen des vierten Schaltelementes
- 410: Servoeinrichtung des vierten Schaltelementes
- 411: Druckräume der Servoeinrichtung des vierten Schaltelementes
- 413: Rückstellelement der Servoeinrichtung des vierten Schaltelementes
- 414: Kolben der Servoeinrichtung des vierten Schaltelementes
- 420: Eingangselement des vierten Schaltelementes
- 430: Ausgangselement des vierten Schaltelementes

- 500: Lamellen des fünften Schaltelementes
- 510: Servoeinrichtung des fünften Schaltelementes
- 511: Druckraum der Servoeinrichtung des fünften Schaltelementes
- 512: Druckausgleichsraum der Servoeinrichtung des fünften Schaltelementes
- 513: Rückstellelement der Servoeinrichtung des fünften Schaltelementes
- 514: Kolben der Servoeinrichtung des fünften Schaltelementes
- 515: Stauscheibe der Servoeinrichtung des fünften Schaltelementes
- 520: Eingangselement des fünften Schaltelementes
- 521: zylindrischer Abschnitt des Eingangselementes des fünften Schaltelementes
- 522: scheibenförmiger Abschnitt des Eingangselementes des fünften Schaltelementes
- 523: Nabe des Eingangselementes des fünften Schaltelementes
- 530: Ausgangselement des fünften Schaltelementes
- 540: Stegwelle

- 600: Lamellen des sechsten Schaltelementes
- 610: Servoeinrichtung des sechsten Schaltelementes
- 611: Druckraum der Servoeinrichtung des sechsten Schaltelementes
- 612: Druckausgleichsraum der Servoeinrichtung des sechsten Schaltelementes
- 613: Rückstellelement der Servoeinrichtung des sechsten Schaltelementes
- 614: Kolben der Servoeinrichtung des sechsten Schaltelementes
- 615: Stauscheibe der Servoeinrichtung des sechsten Schaltelementes
- 616: Druckmittelzuführung zum Druckraum der Servoeinrichtung des sechsten Schaltelementes
- 617: Schmiermittelzuführung zum Druckausgleichsraum der Servoeinrichtung des sechsten Schaltelementes
- 618: Stützscheibe der Servoeinrichtung des sechsten Schaltelementes
- 620: Eingangselement des sechsten Schaltelementes
- 621: zylindrischer Abschnitt des Eingangselementes des sechsten Schaltelementes
- 622: scheibenförmiger Abschnitt des Eingangselementes des sechsten Schaltelementes
- 623: Nabe des Eingangselementes des sechsten Schaltelementes
- 630: Ausgangselement des sechsten Schaltelementes
- 633: Nabe des Ausgangselementes des sechsten Schaltelementes
- 640: dritte Sonnenwelle

## Patentansprüche

1. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten. Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
**dadurch gekennzeichnet,**
• **dass** das fünfte und sechste Schaltelement (E, F) eine Baugruppe bilden, umfassend einen für das fünfte und sechste Schaltelement (E, F) gemeinsamen Lamellenträger (ZYLEF); je ein Lamellenpaket (500, 600) für das fünfte und sechste Schaltelement (E, F), sowie je eine Servoeinrichtung (510, 610) für das fünfte und sechste Schaltelement (E, F) zur Betätigung des jeweiligen Lamellenpaketes (500, 600) des fünften bzw. sechsten Schaltelementes (E, F),
• **dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS. P2_VS) verdrehbar gelagert sind, wobei
o die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
o die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
o der Steg (ST_VS) des Vorschaltradsatzes (VS) das ständig mit der Antriebswelle (AN) verbundene Eingangselement des Vorschaltradsatzes (VS) bildet,
o das Hohlrad (HO_VS) des Vorschaltradsatzes (VS) das mit Eingangselementen des Hauptradsatzes (HS) verbindbare Ausgangselement des Vorschaltradsatzes (VS) bildet und
o das Sonnenrad (SO_VS) des Vorschaltradsatzes (VS) am Getriebegehäuse festgesetzt ist,
• und **dass** der Hauptradsatz (HS) als reduziertes Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie einem zweiten Steg (ST2_HS) mit daran verdrehbar gelagerten kurzen Planetenrädern (P2_HS), wobei
o das erste Sonnenrad (S1_HS) des Hauptradsatzes (HS) axial zwischen dem zweiten und dritten Sonnenrad (S2_HS, S3_HS) des Hauptradsatzes (HS) angeordnet ist,
o die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
o die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
o das erste und zweite Sonnenrad (S1_HS, S2_HS) des Hauptradsatzes (HS) fest miteinander verbunden sind und das erste Eingangselement des Hauptradsatzes (HS) bilden und mit dem Ausgangselement (230) des zweiten Schaltelementes (B) verbunden sind,
o das zweite Hohlrad (H2_HS) des Hauptradsatzes (HS) das zweite Eingangselement des Hauptradsatzes (HS) bildet und mit dem Ausgangselement (130) des ersten Schaltelementes (A) verbunden ist,
o der gekoppelte Steg (ST13_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
o das dritte Sonnenrad (S3_HS) des Hauptradsatzes (HS) ein viertes Eingangselemerlt des Hauptradsatzes (HS) bildet und mit den Ausgangselementen (330, 630) des dritten und sechsten Schaltelementes (C, F) verbunden ist und
o das gekoppelte Hohlrad (H13_HS) und der zweite Steg (ST2_HS) des Hauptradsatzes (HS) fest miteinander verbunden sind und das Ausgangselement des Hauptradsatzes (HS) bilden und mit der Abtriebswelle (AB) verbunden sind.

2. Mehrstufen-Automatgetriebe nach Anspruch 1, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift und mit dem Ausgangselement (530) des fünften Schaltelementes (E) verdrehfest verbunden ist, wobei eine Nabe dieses Stegblechs oder eine mit diesem Stegblech und dem Ausgangselement (530) des fünften Schaltelementes (E) verdrehfest verbundene Stegwelle (540) entweder das erste und zweite Sonnenrad (S1_HS, S2_HS) des Hauptradsatzes (HS) oder das dritte Sonnenrad (S3_HS) des Hauptradsatzes (HS) in axialer Richtung zentrisch durchdringt.

3. Mehrstufen-Automatgetriebe nach Anspruch 1 oder 2, **dadurch gekennzeichnet, dass** der für das fünfte und sechste Schaltelement (E, F) gemeinsame Lamellenträger (ZYLEF) das Eingangselement (520) des fünften Schaltelementes (E) und das Eingangselement (620) des sechsten Schaltelementes (F) bildet.

4. Mehrstufen-Automatgetriebe nach Anspruch 1, 2 oder 3, **dadurch gekennzeichnet , dass** die Baugruppe des fünften und sechsten Schaltelementes (E, F) räumlich gesehen zumindest überwiegend auf der dem Hauptradsatz (HS) abgewandten Seite des Vorschaltradsatzes (VS) angeordnet ist.

5. Mehrstufen-Automatgetriebe nach Anspruch 4, **dadurch gekennzeichnet, dass** das erste und zweite Schaltelement (A, B) zumindest überwiegend auf der Seite des Vorschaltradsatzes (VS) angeordnet sind, die der Baugruppe des fünften und sechsten Schaltelementes (E, F) gegenüberliegt.

6. Mehrstufen-Automatgetriebe nach Anspruch 4 oder 5, **dadurch gekennzeichnet, dass** das erste Schaltelement (A) näher am Vorschaltradsatz (VS) angeordnet ist als das zweite Schaltelement (B).

7. Mehrstufen-Automatgetriebe nach Anspruch 4, 5 oder 6, **dadurch gekennzeichnet , dass** das erste Schaltelement (A) axial unmittelbar an den Vorschaltradsatz (VS) auf der dem Hauptradsatz (HS) zugewandeten Seite des Vorschaltradsatzes (VS) angrenzt.

8. Mehrstufen-Automatgetriebe nach einem der Ansprüche 4 bis 7, **dadurch gekennzeichnet,**
**dass** das Ausgangselement (530) des fünften Schaltelementes (E) oder ein mit diesem Ausgangselement (530) des fünften Schaltelementes (E) verbundenes Verbindungselement (ZYL) den Vorschaltradsatz (VS) sowie das erste und zweite Schaltelement (A, B) in axialer Richtung radial vollständig übergreift, und dass das Ausgangselement (630) des sechsten Schaltelementes (F) das Ausgangselement (530) des fünften Schaltelementes (E) bzw. das mit dem Ausgangselement (530) des fünften Schaltelementes (E) verbundene Verbindungselement (ZYL) in axialer Richtung radial zumindest weitgehend übergreift.

9. Mehrstufen-Automatgetriebe nach einem der Ansprüche 4 bis 7, **dadurch gekennzeichnet,**
**dass** das Ausgangselement (630) des sechsten Schaltelementes (F) oder ein mit diesem Ausgangselement (630) des sechsten Schaltelementes (F) verbundenes Verbindungselement (ZYL) den Vorschaltradsatz (VS) sowie das erste und zweite Schaltelement (A, B) in axialer Richtung radial vollständig übergreift, und dass das Ausgangselement (530) des fünften Schaltelementes (E) das Ausgangselement (630) des sechsten Schaltelementes (F) bzw. das mit dem Ausgangselement (630) des sechsten Schaltelementes (F) verbundene Verbindungselement (ZYL) in axialer Richtung radial zumindest weitgehend übergreift.

10. Mehrstufen-Automatgetriebe nach einem der Ansprüche 4 bis 9, **dadurch gekennzeichnet, dass** das dritte und/oder vierte Schaltelement (C, D) auf der Seite des Vorschaltradsatzes (VS) angeordnet ist, die der Baugruppe des fünften und sechsten Schaltelementes (E, F) gegenüberliegt.

11. Mehrstufen-Automatgetriebe nach Anspruch 1, 2 oder 3, **dadurch gekennzeichnet , dass** die Baugruppe des fünften und sechsten Schaltelementes (E, F) räumlich gesehen zumindest überwiegend in einem Bereich axial zwischen Vorschaltradsatzes (VS) und Hauptradsatz (HS) angeordnet ist.

12. Mehrstufen-Automatgetriebe nach Anspruch 11, **dadurch gekennzeichnet, dass** die Baugruppe des fünften und sechsten Schaltelementes (E, F) räumlich gesehen zumindest teilweise radial unter einem Lamellenpaket (200) des zweiten Schaltelementes (B) angeordnet ist,
wobei das Ausgangselement (230) des zweiten Schaltelementes (B) die Baugruppe des fünften und sechsten Schaltelementes (E, F) in axialer Richtung radial zumindest teilweise übergreift.

13. Mehrstufen-Automatgetriebe nach Anspruch 11 oder 12, **dadurch gekennzeichnet, dass** die Baugruppe des fünften und sechsten Schaltelementes (E, F) räumlich gesehen zumindest teilweise radial unter einem Lamellenpaket (100) des ersten Schaltelementes (A) angeordnet ist.

14. Mehrstufen-Automatgetriebe nach Anspruch 11, 12 oder 13, **dadurch gekennzeichnet, dass** das dritte und/oder vierte Schaltelement (C, D) auf der Seite des Hauptradsatzes (HS) angeordnet sind, die dem Vorschaltradsatz (VS) gegenüberliegt.

15. Mehrstufen-Automatgetriebe nach Anspruch 1, 2 oder 3, **dadurch gekennzeichnet, dass** die Baugruppe des fünften und sechsten Schaltelementes (E, F) räumlich gesehen zumindest überwiegend auf der dem Vorschaltradsatz (VS) abgewandten Seite des Hauptradsatzes (HS) angeordnet ist.

16. Mehrstufen-Automatgetriebe nach Anspruch 15, **dadurch gekennzeichnet, dass** das erste und zweite Schaltelement (A, B) zumindest überwiegend auf der Seite des Hauptradsatzes (VS) angeordnet sind, die der Baugruppe des fünften und sechsten Schaltelementes (E, F) gegenüberliegt.

17. Mehrstufen-Automatgetriebe nach Anspruch 15 oder 16, **dadurch gekennzeichnet , dass** das dritte und/oder vierte Schaltelement (C, D) zumindest überwiegend auf der Seite des Hauptradsatzes (HS) angeordnet ist, an der auch die Baugruppe des fünften und sechsten Schaltelementes (E, F) angeordnet ist.

18. Mehrstufen-Automatgetriebe nach einem der Ansprüche 11 bis 16, **dadurch gekennzeichnet, dass** das dritte und/oder vierte Schaltelement (C, D) zumindest teilweise radial über dem Hauptradsatz (HS) oder auf der Seite des Hauptradsatzes (HS) angeordnet ist, die der Baugruppe des fünften und sechsten Schaltelementes (E, F) gegenüberliegt.

19. Mehrstufen-Automatgetriebe nach einem der Ansprüche 11 bis 18, **dadurch gekennzeichnet, dass** das erste Schaltelement (A) näher am Hauptradsatz (HS) angeordnet ist als das zweite Schaltelement (B).

20. Mehrstufen-Automatgetriebe nach einem der Ansprüche 11 bis 19, **dadurch gekennzeichnet , dass** das erste Schaltelement (A) axial unmittelbar an den Hauptradsatz (HS) auf der dem Vorschaltradsatz (VS) zugewandeten Seite des Hauptradsatzes (HS) angrenzt.

21. Mehrstufen-Automatgetriebe nach einem Ansprüche 1 bis 20, **dadurch gekennzeichnet , dass** das Lamellenpaket (500) des fünften Schaltelementes (E) räumlich gesehen zumindest teilweise radial über dem Lamellenpaket (600) des sechsten Schaltelementes (F) angeordnet ist.

22. Mehrstufen-Automatgetriebe nach Anspruch 21, **dadurch gekennzeichnet, dass** die Servoeinrichtungen (510, 610) des fünften und sechsten Schaltelementes (E, F) räumlich gesehen zumindest überwiegend nebeneinander angeordnet sind und im wesentlichen nur durch eine Mantelfläche eines für das fünfte und sechste Schaltelement (E, F) gemeinsamen Lamellenträgers (ZYLEF) voneinander getrennt sind.

23. Mehrstufen-Automatgetriebe nach Anspruch 21, **dadurch gekennzeichnet, dass** die Servoeinrichtung (510) des fünften Schaltelementes (E) räumlich gesehen zumindest überwiegend radial über der Servoeinrichtung (610) des sechsten Schaltelementes (F) angeordnet ist und im wesentlichen nur durch eine Mantelfläche eines für das fünfte und sechste Schaltelement (E, F) gemeinsamen Lamellenträgers (ZYLEF) von dieser Servoeinrichtung (610) des sechsten Schaltelementes (F) getrennt ist.

24. Mehrstufen-Automatgetriebe nach einem der Ansprüche 1 bis 20, **dadurch gekennzeichnet , dass** das Lamellenpaket (600) des sechsten Schaltelementes (F) räumlich gesehen zumindest teilweise radial über dem Lamellenpaket (500) des fünften Schaltelementes (E) angeordnet ist.

25. Mehrstufen-Automatgetriebe nach Anspruch 24, **dadurch gekennzeichnet, dass** die Servoeinrichtungen (510, 610) des fünften und sechsten Schaltelementes (E, F) räumlich gesehen zumindest überwiegend nebeneinander angeordnet sind und im wesentlichen nur durch eine Mantelfläche eines für das fünfte und sechste Schaltelement (E, F) gemeinsamen Lamellenträgers (ZYLEF) voneinander getrennt sind.

26. Mehrstufen-Automatgetriebe nach Anspruch 24, **dadurch gekennzeichnet, dass** die Servoeinrichtung (610) des sechsten Schaltelementes (F) räumlich gesehen zumindest überwiegend radial über der Servoeinrichtung (510) des fünften Schaltelementes (E) angeordnet ist und im wesentlichen nur durch eine Mantelfläche eines für das fünfte und sechste Schaltelement (E, F) gemeinsamen Lamellenträgers (ZYLEF) von dieser Servoeinrichtung (510) des fünften Schaltelementes (E) getrennt ist.

27. Mehrstufen-Automatgetriebe nach einem der Ansprüche 1 bis 20, **dadurch gekennzeichnet , dass** das Lamellenpaket (500) des fünften Schaltelementes (E) näher am Hauptradsatz (HS) bzw. näher am Vorschaltradsatz (VS) angeordnet ist als das Lamellenpaket (600) des sechsten Schaltelementes (F).

28. Mehrstufen-Automatgetriebe nach einem der Ansprüche 1 bis 20, **dadurch gekennzeichnet , dass** das Lamellenpaket (600) des sechsten Schaltelementes (F) näher am Hauptradsatz (HS) bzw. näher am Vorschaltradsatz (VS) angeordnet ist als das Lamellenpaket (500) des fünften Schaltelementes (E).

29. Mehrstufen-Automatgetriebe nach Anspruch 28, **dadurch gekennzeichnet, dass** die Lamellenpakete (500, 600) des fünften und sechsten Schaltelementes (E, F) auf einem zumindest ähnlichen Durchmesser angeordnet sind.

30. Mehrstufen-Automatgetriebe nach Anspruch 27, 28 oder 29, **dadurch gekennzeichnet, dass** die Servoeinrichtung (510) des fünften Schaltelementes (E) räumlich gesehen zumindest überwiegend radial über der Servoeinrichtung (610) des sechsten Schaltelementes (F) angeordnet ist und im wesentlichen nur durch eine Mantelfläche eines für das fünfte und sechste Schaltelement (E, F) gemeinsamen Lamellenträgers (ZYLEF) von dieser Servoeinrichtung (610) des sechsten Schaltelementes (F) getrennt ist.

31. Mehrstufen-Automatgetriebe nach Anspruch 27, 28 oder 29, **dadurch gekennzeichnet, dass** die Servoeinrichtung (510) des fünften Schaltelementes (E) räumlich gesehen zumindest überwiegend auf der dem Hauptradsatz (HS) abgewandten Seite der Servoeinrichtung (610) des sechsten Schaltelementes (F) angeordnet ist und im wesentlichen nur durch eine Mantelfläche eines für das fünfte und sechste Schaltelement (E, F) gemeinsamen Lamellenträgers (ZYLEF) von dieser Servoeinrichtung (610) des sechsten Schaltelementes (F) getrennt ist.

32. Mehrstufen-Automatgetriebe nach einem der Ansprüche 1 bis 31, **dadurch gekennzeichnet , dass** der für das fünfte und sechste Schaltelement (E, F) gemeinsame Lamellenträger (ZYLEF) an einer getriebegehäusefesten Nabe (GN) oder an einer getriebgehäusefesten Gehäusewand (GW) oder an einem getriebgehäusefesten Gehäusedeckel (GD) verdrehbar gelagert ist, wobei eine Druck- und/oder Schmiermittelzuführung (511, 611 bzw. 512, 612) zu den Servoeinrichtungen (510, 610) des fünften und sechsten Schaltelementes (E, F) abschnittsweise innerhalb dieser getriebegehäusefesten Nabe (GN) bzw. dieses Gehäusewand (GW) bzw. dieses Gehäusedeckels (GD) verlaufen.

33. Mehrstufen-Automatgetriebe nach einem der Ansprüche 1 bis 31, **dadurch gekennzeichnet, dass** der für das fünfte und sechste Schaltelement (E, F) gemeinsame Lamellenträger (ZYLEF) an der Abtriebswelle (AB) verdrehbar gelagert ist, wobei eine Druck- und/oder Schmiermittelzuführung (511, 611 bzw. 512, 612) zu den Servoeinrichtungen (510, 610) des fünften und sechsten Schaltelementes (E, F) abschnittsweise innerhalb dieser Abtriebswelle (AB) verlaufen.

34. Mehrstufen-Automatgetriebe nach einem der vorigen Ansprüche, **dadurch gekennzeichnet, dass** durch selektives Schließen der Schaltelemente (A bis F) zumindest acht Vorwärtsgänge derart schaltbar sind, dass eine Eingangsdrehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird,
wobei
• in einem ersten Vorwärtsgang das erste und vierte Schaltelement (A, D),
• in einem zweiten Vorwärtsgang das erste und dritte Schaltelement (A, C),
• in einem dritten Vorwärtsgang das erste und zweite Schaltelement (A, B),
• in einem vierten Vorwärtsgang das erste und sechste Schaltelement (A, F),
• in einem fünften Vorwärtsgang das erste und fünfte Schaltelement (A, E),
• in einem sechsten Vorwärtsgang das fünfte und sechste Schaltelement (E, F),
• in einem siebten Vorwärtsgang das zweite und fünfte Schaltelement (B, E),
• in einem achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Claims

1. The invention relates to a multistage automatic transmission with an input shaft (AN), an output shaft (AB), a front-mounted gear set (VS), a main gear set (HS), and at least six shifting components (A to F), with the following features:
• the front-mounted gear set (VS) is designed as a double planetary gear set;
• one output element of the front-mounted gear set (VS) rotates at a lower speed than the input speed of the input shaft (AN);
• one input element of the front-mounted gear set (VS) is permanently connected to the input shaft (AN);
• one element on the front-mounted gear set (VS) is connected to a transmission housing (GG) of the multistage automatic transmission;
• the main gear set (HS) is designed as a coupled planetary gear set with several uncoupled input elements and one output element;
• the output element of the main gear set (HS) is permanently connected to the output shaft (AB);
• one input element (120) of the first shifting component (A) is linked to the output element of the front-mounted gear set (VS);
• one output element (130) of the first shifting component (A) is connected to a second input element of the main gear set (HS);
• one input element (220) of the second shifting component (B) is connected to the output element of the front-mounted gear set (VS);
• one output element (230) of the second shifting component (B) is connected to a first input element of the main gear set (HS);
• one input element of the third shifting component (C) is connected to the transmission housing (GG);
• one output element (330) of the third shifting component (C) is connected to the first input element of the main gear set (HS) or to an input element of the main gear set (HS) that is the first input element's neighbor in terms of a speed plan;
• one input element on the fourth shifting component (D) is connected to the transmission housing (GG);
• one output element (430) of the fourth shifting component (D) is connected to a third input element of the main gear set (HS);
• one input element (520) of the fifth shifting component (E) is connected to the input shaft ( AN);
• one output element (530) of the fifth shifting component (E) is connected to the third input element of the main gear set (HS);
• one input element (620) of the sixth shifting component (F) is connected to the input shaft (AN);
• one output element (630) of the sixth shifting component (F) is connected to the first input element of the main gear set (HS) or to an input element of the main gear set (HS) that is the first input element's neighbor in terms of a speed plan;
**characterized in that**
• the fifth and sixth shifting component (E, F) form an assembly comprising a disk carrier (ZYLEF) shared by the fifth and sixth shifting component (E, F), one disk pack each (500, 600) for the fifth and sixth shifting component (E, F) and one servo unit each (510, 610) for the fifth and sixth shifting component (E, F), for actuation of the respective disk pack (500, 600) of the fifth or sixth shifting component (E, F);
• the front-mounted gear set (VS) features a sun gear (SO_VS), a ring gear (HO_VS) and a coupled web (ST_VS) on which inner and outer planet gears (P1_VS, P2_VS) are rotatably supported, with
o the inner planet gears (P1_VS) of the front-mounted gear set (VS) meshing with the sun gear (SO_VS) and the outer planet gears (P2_VS) of the front-mounted gear set (VS);
o the outer planet gears (P2_VS) on the front-mounted gear set (VS) meshing with the inner planet gears (P1_VS) and the ring gear (HO_VS) of the front-mounted gear set (HS);
o the web (ST_VS) of the front-mounted gear set (VS) forming the input element of the front-mounted gear set (VS) and being permanently connected to the input shaft (AN);
o the ring gear (HO_VS) of the front-mounted gear set (VS) forming the output element of the front-mounted gear set (VS) and being connectable with input elements of the main gear set (HS), and
o with the sun gear (SO_VS) of the front-mounted gear set (VS) being fixed to the transmission housing;
• and that the main gear set (HS) is designed as a reduced triple-web-five-shaft transmission with three sun gears (S1_HS, S2_HS, S3_HS), a coupled ring gear (H13_HS), a second ring gear (H2_HS), a coupled web (ST13_HS) supporting rotatably mounted long planet gears (P13_HS), and a second web (ST2_HS) supporting rotatably mounted short planet gears (P2_HS), with
o the first sun gear (S1_HS) of the main gear set (HS) being arranged axially between the second and third sun gear (S2_HS, S3_HS) of the main gear set (HS);
o the long planet gears (P13_HS) of the main gear set (HS) meshing with the coupled ring gear (HI 3_HS) and the first and third sun gear (S1_HS, S3_HS) of the main gear set (HS);
o the short planet gears (P2_HS) of the main gear set (HS) meshing with the second ring gear (H2_HS) and the second sun gear (S2_HS) of the main gear set (HS);
o the first and second sun gear (S1_HS, S2_HS) of the main gear set (HS) being firmly connected and forming the first input element of the main gear set (HS) and being connected to the output element (230) of the second shifting component (B);
o the second ring gear (H2_HS) of the main gear set (HS) forming the second input element of the main gear set (HS) and being connected to the output element (130) of the first shifting component (A), the coupled web (ST13_HS) of the main gear set (HS) forming the third input element of the main gear set (HS) and being connected to the output elements (430, 530) of the fourth and fifth shifting component (D, E);
o the third sun gear (S3_HS) of the main gear set (HS) forming a fourth input element of the main gear set (HS) and being connected to the output elements (330, 630) of the third and fourth shifting component (C, F), and
o the coupled ring gear (H13_HS) and the second web (ST2_HS) of the main gear set (HS) being firmly connected and forming the output element of the main gear set (HS) and being connected with the output shaft (AB).

2. Multistage automatic transmission according to claim 1, **characterized in that** the coupled web (ST13_HS) of the main gear set (HS) features a web plate which in radial direction reaches axially inwards between the first and third sun gear (S1_HS, S3_HS) of the main gear set (HS), and which is nonrotationally connected to the output element (530) of the fifth shifting component (E), with a hub of this web plate or a web shaft (540), which is nonrotationally connected to this web plate and the output element (530) of the fifth shifting component (E), extending in axial direction centrally through either the first and second sun gear (S1_HS, S2_HS) of the main gear set (HS) or through the third sun gear (S3_HS) of the main gear set(HS).

3. Multistage automatic transmission according to claim 1 or 2, **characterized in that** the disk carrier (ZYLEF) shared by the fifth and sixth shifting component (E, F) forms the input element (520) of the fifth shifting component (E) and the input element (620) of the sixth shifting component (F).

4. Multistage automatic transmission according to claim 1, 2 or 3, **characterized in that** the assembly of the fifth and sixth shifting component (E.F) is spatially arranged at least predominantly on the side of the front-moultied gear set (VS) not facing the main gear set (HS).

5. Multistage automatic transmission according to claim 4, **characterized in that** the first and second shifting component (A, B) are arranged at least predominantly on the side of the front mounted gear set (VS) facing the assembly of the fifth and sixth shifting component (E, F).

6. Multistage automatic transmission according to claim 4 or 5, **characterized in that** the first shifting component (A) is arranged closer to the front-mounted gear set (VS) than the second shifting component (B).

7. Multistage automatic transmission according to claim 4, 5 or 6, **characterized in that** the first shifting component (A) borders axially and direct on the front-mounted gear set (VS), specifically on the side of the front-mounted gear set (VS) facing the main gear set (HS).

8. Multistage automatic transmission according to one of the claims 4 thru 7, **characterized in that** the output element (530) of the fifth shifting component (E) or a connecting element (ZYL) attached to this output element (530) of the fifth shifting component (E) in axial direction radially laps over the entire front-mounted gear set (VS) as well as the first and second shifting component (A, B), and that the output element (630) of the sixth shifting component (F) in axial direction at least to a large extent radially laps over the output element (530) of the fifth shifting component (E) or the connecting element (ZYL) attached to the output element (530) of the fifth shifting component (E).

9. Multistage automatic transmission according to claims 4 thru 7, **characterized in that** the output element (630) of the sixth shifting component (F) or a connecting element (ZYL) attached to this output element (630) of the sixth shifting component (F) in axial direction radially laps over the entire front-mounted gear set (VS) as well as the first and second shifting component (A, B), and that the output element (530) of the fifth shifting component (E) in axial direction at least to a large extent radially laps over the output element (630) of the sixth shifting component (F) or the connecting element (ZYL) attached to the output element (630) of the sixth shifting component (F).

10. Multistage automatic transmission according to one of claims 4 thru 9, **characterized in that** the third and/or fourth shifting component (C, D) is/are arranged on the side of the front-mounted gear set (VS) facing the assembly of the fifth and sixth shifting components (E, F).

11. Multistage automatic transmission according to claim 1, 2 or 3, **characterized in that** the assembly of the fifth and sixth shifting components (E, F) is spatially arranged at least predominantly in an area located axially between the front-mounted gear set (VS) and the main gear set (HS).

12. Multistage automatic transmission according to claim 11, **characterized in that** the assembly of the fifth and sixth shifting components (E, F) is spatially arranged at least partially radially under a disk pack (200) of the second shifting component (B), with the output element (230) of the second shifting component (B) at least partially radially lapping over the assembly of the fifth and sixth shifting components (E, F) in axial direction.

13. Multistage automatic transmission according to claim 11 or 12, **characterized in that** the assembly of the fifth and sixth shifting components (E,F) is spatially arranged at least partially radially under a disk pack (100) of the first shifting component (A).

14. Multistage automatic transmission according to claim 11, 12 or 13, **characterized in that** the third and/or fourth shifting component (C, D) is/are arranged on the side of the main gear set (HS) facing the front-mounted gear set (VS).

15. Multistage automatic transmission according to claim 1, 2 or 3, **characterized in that** the assembly of the fifth and sixth shifting components (E, F) is spatially arranged at least predominantly on the side of the main gear set (HS) not facing the front-mounted gear set

16. Multistage automatic transmission according to claim 15, **characterized in that** the first and second shifting components (A, B) are arranged at least predominantly on the side of the main gear set (VS) facing the assembly of the fifth and sixth shifting components (E, F).

17. Multistage automatic transmission according to claim 15 or 16, **characterized in that** the third and/or fourth shifting component (C, D) is/are arranged at least predominantly on the side of the main gear set (HS) on which the assembly of the fifth and sixth shifting components (E, F) is also arranged.

18. Multistage automatic transmission according to one of claims 11 thru 16, **characterized in that** the third and/or fourth shift element (C, D) is/are arranged at least partially radially above the main gear set (HS) or on the side of the main gear set (HS) facing the assembly of the fifth and sixth shifting components (E, F).

19. Multistage automatic transmission according to one of claims 11 thru 18,
**characterized in that** the first shifting component (A) is arranged closer to the main gear set (HS) than the second shifting component(B).

20. Multistage automatic transmission according to one of claims 11 thru 19, **characterized in that** the first shifting component (A) borders axially direct on the main gear set (HS) on the side of the main gear set (HS) facing the front-mounted gear set (VS).

21. Multistage automatic transmission according to one of claims 1 thru 20, **characterized**
**in that** the disk pack (500) of the fifth shifting component (E) is spatially arranged at least partially radially above the disk pack (600) of the sixth shifting component (F).

22. Multistage automatic transmission according to claim 21, **characterized in that** the servo units (510, 610) of the fifth and sixth shifting components (E, F) are spatially arranged at least predominantly side-by-side and are separated essentially only by a lateral surface of a disk carrier (ZYLEF) shared by the fifth and sixth shifting components (E, F).

23. Multistage automatic transmission according to claim 21, **characterized in that** the servo unit (510) of the fifth shifting component (E) is spatially arranged at least predominantly radially above the servo unit (610) of the sixth shifting component (F) and is separated from this servo unit (610) of the sixth shifting component (F) essentially only by a lateral surface of the disk carrier (ZYLEF) shared by the fifth and sixth shifting components (E, F).

24. Multistage automatic transmission according to one of claims 1 thru 20, **characterized in that** the disk pack (600) of the sixth shifting component (F) is spatially arranged at least partially above the disk pack (500) of the fifth shifting component (E).

25. Multistage automatic transmission according to claim 24, **characterized in that** the servo units (510, 610) of the fifth and sixth shifting components (E, F) are spatially arranged at least predominantly side-by-side, and are separated essentially only by a lateral surface of a common disk carrier (ZYLEF) shared by the fifth and sixth shifting components (E, F).

26. Multistage automatic transmission according to claim 24, **characterized in that** the servo unit (610) of the sixth shifting component (F) is spatially arranged at least predominantly radially above the servo unit (510) of the fifth shifting component (E) and is separated from this servo unit (510) of the fifth shifting component (E) essentially only by a lateral surface of a disk carrier (ZYLEF) shared by the fifth and sixth shifting components (E, F).

27. Multistage automatic transmission according to one of the claims 1 thru 20, **characterized in that** the disk pack (500) of the fifth shifting component (E) is arranged closer to the main gear set (HS) or closer to the front-mounted gear set (VS) than the disk pack (600) of the sixth shifting component (F).

28. Multistage automatic transmission according to one of the claims 1 thru 20, **characterized in that** the disk pack (600) of the sixth shifting component (F) is arranged closer to the main gear set (HS) or closer to the front-mounted gear set (VS) than the disk pack (500) of the fifth shifting component (E).

29. Multistage automatic transmission according to claim 28, **characterized in that** the disk packs (500, 600) of the fifth and sixth shifting components (E, F) are arranged on at least a similar diameter.

30. Multistage automatic transmission according to claim 27, 28 or 29, **characterized in that** the servo unit (510) of the fifth shifting component (E) is spatially arranged at least predominantly radially above the servo unit (610) of the sixth shifting component (F) and is separated from this servo unit (610) of the sixth shifting component (F) essentially only by a lateral surface of a disk carrier (ZYLEF) shared by the fifth and sixth shifting components (E, F).

31. Multistage automatic transmission according to claim 27, 28 or 29, **characterized in that** the servo unit (510) of the fifth shifting component (E) is spatially arranged at least predominantly on the side of the servo unit (610) of the sixth shifting component (F) not facing the main gear set (HS), and is separated from this servo unit (610) of the sixth shifting component (F) essentially only by a lateral surface of a disk carrier (ZYLEF) shared by the fifth and sixth shifting components (E, F).

32. Multistage automatic transmission according to one of the claims 1 thru 31, **characterized in that** the disk carrier (ZYLEF) shared by the fifth and sixth shifting components (E, F) is rotatably supported on a transmission-housing-mounted hub (GN) or a transmission-housing-mounted wall or a transmission-housing-mounted housing cover (GO), with a pressure and/or lubricant supply line (511, 611 or 512, 612) being routed to the servo units (510, 610) of the fifth and sixth shifting components (E, F) through sections of this transmission-housing-mounted hub (GN), or this housing wall (GW), or this housing cover (GD).

33. Multistage automatic transmission according to one of the claims 1 thru 31, **characterized in that** the disk carrier (ZYLEF) shared by the fifth and sixth shifting components (E, F) is rotatably supported on the output shaft (AB), with a pressure and/or lubricant supply line (511, 611 or 512, 612) being routed to the servo units (510, 610) of the fifth and sixth shifting components (E, F) through sections of this output shaft (AB).

34. Multistage automatic transmission according to one of the preceding claims, **characterized in that** through selective closing of the shifting components (A to F) at least eight forward gears can be shifted in such a way that an input speed of the input shaft (AN) can be transmitted to the output shaft (AB) in such a way that for shifts from one gear to the next higher or lower gear in each case only one shifting component of the shifting components actuated is opened and another shifting component is closed, with
• the first and fourth shifting components (A, D) being closed in a first forward gear,
• the first and third shifting components (A, C) being closed in a second forward gear,
• the first and second shifting components (A, B) being closed in a third forward gear,
• the first and sixth shifting components (A, F) being closed in a fourth forward gear,
• the first and fifth shifting components (A, E) being closed in a fifth forward gear,
• the fifth and sixth shifting components (E, F) being closed in a sixth forward gear,
• the second and fifth shifting components (B, E) being closed in a seventh forward gear,
• the third and fifth shifting components (C, E) being closed in an eighth forward gear,
and with the fourth shifting component (D) and in addition either the second shifting component (B) or the sixth shifting component (F) being closed in a reverse gear.

## Revendications

1. Boîte de vitesses automatique à étages multiples, comprenant un arbre d'entrée (AN), un arbre de sortie (AB), un train de roues amont (VS), un train de roues principal (HS) et au moins six éléments de commande (A à F) et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de boîte de vitesses (GG) de la boîte de vitesses automatique à étages multiples,
• le train de roues principal (HS) est constitué par un train épicycloïdal accouplé possédant plusieurs éléments d'entrée qui ne sont pas accouplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de boîte de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation,
• un élément d'entrée du quatrième élément de commande (D) est relié au carter de boîte de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
**caractérisée**
• **en ce que** les cinquième et sixième éléments de commande (E, F) forment un groupe comprenant un support de disques (ZYLEF) commun pour les cinquième et sixième éléments de commande (E, F), un paquet de disques (500, 600) pour chacun des cinquième et sixième éléments de commande (E, F) ainsi qu'un servodispositif (510, 610) pour chacun des cinquième et sixième éléments de commande (E, F), pour l'actionnement du paquet de disques (500, 600) du cinquième ou sixième élément de commande (E, F),
• **en ce que** le train de roues amont (VS) comporte une roue planétaire (SO_VS), une couronne à denture intérieure (HO_VS) ainsi qu'un porte-satellites accouplé (ST_VS) sur lequel sont montées rotatives des roues satellites intérieures et extérieures (P1_VS, P2_VS),
o les roues satellites intérieures (P1_VS) du train de roues amont (VS) engrenant avec la roue planétaire (SO_VS) et avec les roues satellites extérieures (P2_VS) du train de roues amont (VS),
o les roues satellites extérieures (P2_ VS) du train de roues amont (VS) engrenant avec les roues satellites intérieures (P1_VS) et avec la couronne à denture intérieure (HO_VS) du train de roues amont (VS),
o le porte-satellites (ST_VS) du train de roues amont (VS) formant l'élément d'entrée du train de roues amont (VS) relié en permanence à l'arbre d'entrée (AN),
o la couronne à denture intérieure (HO_VS) du train de roues amont (VS) formant l'élément de sortie du train de roues amont (VS) qui peut être relié aux éléments d'entrée du train de roues principal (HS),
o la roue planétaire (SO_VS) du train de roues amont (VS) étant bloquée sur le carter de boîte de vitesses (GG),
• et **en ce que** le train de roues principal (HS) est réalisé sous la forme d'un mécanisme réduit à trois porte-satellites-cinq-arbres comprenant trois roues planétaires (S1_HS, S2-HS, S3_HS), une couronne à denture intérieure accouplée (H13_HS), une deuxième couronne à denture intérieure (H2_HS), un porte-satellites accouplé (ST13_HS) portant de roues satellites longues (P13_HS) montées rotatives sur lui, ainsi qu'un deuxième porte-satellites (ST2_HS) portant des roues satellites courtes (P2_HS) montées rotatives sur lui,
o la première roue planétaire (S1_HS) du train de roues principales (HS) étant disposée axialement entre les deuxième et troisième roues planétaires (S2_HS, S3_HS) du train de roues principal (HS),
o les roues satellites longues (P13_HS) du train de roues principales (HS) engrenant avec la couronne à denture intérieure accouplée (H13_HS) et avec les première et troisième roues planétaires (S1_HS, S3_HS) du train de roues principal (HS),
o les roues satellites courtes (P2_HS) du train de roues principales (HS) engrenant avec la deuxième couronne à denture intérieure (H2_HS) et avec la deuxième roue planétaire (S2_HS) du train de roues principales (HS),
o les première et deuxième roues planétaires (S1_HS, S2_HS) du train de roues principal (HS) étant reliées rigidement l'une à l'autre, formant le premier élément d'entrée du train de roues principal (HS) et étant reliées à l'élément de sortie (230) du deuxième élément de commande (B),
o la deuxième couronne à denture intérieure (H2_HS) du train de roues principal (HS) formant le deuxième élément d'entrée du train de roues principal (HS) et étant reliée à l'élément de sortie (130) du premier élément de commande (A),
o le porte-satellites accouplé (ST13_HS) du train de roues principal (HS) formant le troisième élément d'entrée du train de roues principal (HS) et étant relié aux éléments de sortie (430, 530) des quatrième et cinquième éléments de commande (D, E),
o la troisième roue planétaire (S3_HS) du train de roues principal (HS) formant un quatrième élément d'entrée du train de roues principal (HS) et étant reliée aux éléments de sortie (330, 630) des troisième et sixième éléments de commande (C, F),
o la couronne à denture intérieure accouplée (H13_HS) et le deuxième porte-satellites (ST2_HS) du train de roues principal (HS) étant reliés rigidement l'un à l'autre, formant l'élément de sortie du train de roues principal (HS) et étant reliés à l'arbre de sortie (AB).

2. Boîte de vitesses automatique à étages multiples selon la revendication 1, **caractérisée en ce que** le porte-satellites accouplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS), et qui est relié solidairement en rotation à l'élément de sortie (530) du cinquième élément de commande (E), un moyeu de ce disque de porte-satellites ou un arbre de porte-satellites (540) relié solidairement en rotation à ce disque de porte-satellites et à l'élément de sortie (530) du cinquième élément de commande (E) traversant au centre, dans la direction axiale, soit les première et deuxième roues planétaires (S1_HS, S2_HS) du train de roues principal (HS), soit la troisième roue planétaire (S3_HS) du train de roues principal (HS).

3. Boîte de vitesses automatique à étages multiples selon la revendication 1 ou 2, **caractérisée en ce que** le support de disques (ZYMEF) commun pour les cinquième et sixième éléments de commande (E, F) forme l'élément d'entrée (520) du cinquième élément de commande (E) et l'élément d'entrée (620) du sixième élément de commande (F).

4. Boîte de vitesses automatique à étages multiples selon la revendication 1, 2 ou 3, **caractérisée en ce que** le groupe des cinquième et sixième éléments de commande (E, F) est disposé, vu dans l'espace, au moins en majeure partie sur le côté du train de roues amont (VS) qui est éloigné du train de roues principal (HS).

5. Boîte de vitesses automatique à étages multiples selon la revendication 4, **caractérisée en ce que** les premier et deuxième éléments de commande (A, B) sont disposés, au moins en majeure partie, sur le côté du train de roues amont (VS) qui est à l'opposé du groupe des cinquième et sixième éléments de commande (E, F).

6. Boîte de vitesses automatique à étages multiples selon la revendication 4 ou 5, **caractérisée en ce que** le premier élément de commande (A) est disposé plus près du train de roues amont (VS) que le deuxième élément de commande (B).

7. Boîte de vitesses automatique à étages multiples selon la revendication 4, 5 ou 6, **caractérisée en ce que** le premier élément de commande (A) est directement adjacent au train de roues amont (VS), sur le côté du train de roues amont (VS) qui est dirigé vers le train de roues principal (HS).

8. Boîte de vitesses automatique à étages multiples selon l'une des revendications 4 à 7, **caractérisée en ce que** l'élément de sortie (530) du cinquième élément de commande (E), ou un élément de liaison (ZYL) relié à cet élément de sortie (530) du cinquième élément de commande (E) emboîte entièrement radialement dans la direction axiale le train de roues amont (VS), ainsi que les premier et deuxième éléments de commande (A, B), et **en ce que** l'élément de sortie (630) du sixième élément de commande (F) emboîte au moins en grande partie radialement dans la direction axiale l'élément de sortie (530) du cinquième élément de commande (E) ou l'élément de liaison (ZYL) relié à l'élément de sortie (530) du cinquième élément de commande (E).

9. Boîte de vitesses automatique à étages multiples selon l'une des revendications 4à 7, **caractérisée**
**en ce que** l'élément de sortie (630) du sixième élément de commande (F) ou un élément de liaison (ZYL) relié à cet élément de sortie (630) du sixième élément de commande (F) emboîte entièrement radialement dans la direction axiale le train de roues amont (VS) ainsi que les premier et deuxième éléments de commande (A, B), et en ce que l'élément de sortie (530) du cinquième élément de commande (E) emboîte radialement au moins en grande partie dans la direction axiale l'élément de sortie (630) du sixième élément de commande (F) ou l'élément de liaison (ZYL) relié à l'élément de sortie (630) du sixième élément de commande (F).

10. Boîte de vitesses automatique à étages multiples selon l'une des revendications 4 à 8, **caractérisée en ce que** le troisième et/ou le quatrième élément de commande (C, D) est ou sont disposé(s) sur le côté du train de roues amont (VS) qui est à l'opposé du groupe des cinquième et sixième éléments de commande (E, F).

11. Boîte de vitesses automatique à étages multiples selon la revendication 1, 2 ou 3, **caractérisée en ce que** le groupe des cinquième et sixième éléments de commande (E, F) est disposé, vu dans l'espace, au moins en majeure partie dans une région située axialement entre le train de roues amont (VS) et le train de roues principal (HS).

12. Boîte de vitesses automatique à étages multiples selon la revendication 11, **caractérisée en ce que** le groupe des cinquième et sixième éléments de commande (E, F) est disposé, vu dans l'espace, au moins en partie radialement au-dessous d'un paquet de disques (200) du deuxième élément de commande (B), l'élément de sortie (230) du deuxième élément de commande (B) emboîtant radialement au moins en partie dans la direction axiale, le groupe des cinquième et sixième éléments de commande (E, F).

13. Boîte de vitesses automatique à étages multiples selon la revendication 11 ou 12, **caractérisée en ce que** le groupe des cinquième et sixième éléments de commande (E, F) est disposé, vu dans l'espace, au moins en partie radialement au-dessous d'un paquet de disques (100) du premier élément de commande (A).

14. Boîte de vitesses automatique à étages multiples selon la revendication 11, 12 ou 13, **caractérisée en ce que** le troisième et/ou le quatrième élément de commande (C, D) et ou sont disposé(s) sur le côté du train de roues principal (HS) qui est à l'opposé du train de roues amont (VS).

15. Boîte de vitesses automatique à étages multiples selon la revendication 1, 2 ou 3, **caractérisée en ce que** le groupe des cinquième et sixième éléments de commande (E, F) est disposé, vu dans l'espace, au moins en majeure partie sur le côté du train de roues principal (HS) qui est éloigné du train de roues amont (VS).

16. Boîte de vitesses automatique à étages multiples selon la revendication 15, **caractérisée en ce que** les premier et deuxième éléments de commande (A, B) sont disposés au moins en majeure partie sur le côté du train de roues principal (VS) qui est à l'opposé du groupe des cinquième et sixième éléments de commande (E, F).

17. Boîte de vitesses automatique à étages multiples selon la revendication 15 ou 16, **caractérisée en ce que** les troisième et/ou quatrième éléments de commande (C, D) est ou sont disposé(s) au moins en majeure partie sur le côté du train de roues principal (HS) sur lequel le groupe des cinquième et sixième éléments de commande (E, F) est aussi disposé.

18. Boîte de vitesses automatique à étages multiples selon l'une des revendications 11 à 16, **caractérisée en ce que** le troisième et/ou le quatrième élément de commande (C, D) est ou sont disposés, au moins en partie, radialement au-dessus du train de roues principal (HS) ou sur le côté du train de roues principal (HS) qui est à l'opposé du groupe des cinquième et sixième éléments de commande (E, F).

19. Boîte de vitesses automatique à étages multiples selon l'une des revendications 11 à 18, **caractérisée en ce que** le premier élément de commande (A) est disposé plus près du train de roues principal (HS) que le deuxième élément de commande (B).

20. Boîte de vitesses automatique à étages multiples selon l'une des revendications 11 à 19, **caractérisée en ce que** le premier élément de commande (A) est directement adjacent, dans la direction axiale, au train de roues principal (HS), sur le côté du train de roues principal (HS) qui est dirigé vers le train de roues amont (VS).

21. Boîte de vitesses automatique à étages multiples selon l'une des revendications 1 à 20, **caractérisée en ce que** le paquet de disques (500) du cinquième élément de commande (E) est disposé, vu dans l'espace, au moins en partie, radialement au-dessus du paquet de disques (600) du sixième élément de commande (F).

22. Boîte de vitesses automatique à étages multiples selon la revendication 21, **caractérisée en ce que** les servodispositifs (510, 610) des cinquième et sixième éléments de commande (E, F) sont disposés, vus dans l'espace, au moins en majeure partie l'un à côté de l'autre et ne sont sensiblement séparés l'un de l'autre que par une surface latérale d'un support de disques (ZYLEF) commun pour les cinquième et sixième éléments de commande (E, F).

23. Boîte de vitesses automatique à étages multiples selon la revendication 21, **caractérisée en ce que** le servodispositif (510) du cinquième élément de commande (E) est disposé, vu dans l'espace, au moins en majeure partie, radialement au-dessus du servodispositif (610) du sixième élément de commande (F) et n'est sensiblement séparé de ce servodispositif (610) du sixième élément de commande (F) que par une surface latérale d'un support de disques (ZYLEF) commun pour les cinquième et sixième éléments de commande (E, F).

24. Boîte de vitesses automatique à étages multiples selon l'une des revendication 1 à 20, **caractérisée en ce que** le paquet de disques (600) du sixième élément de commande (F) est disposé, vu dans l'espace, au moins en partie radialement au-dessus du paquet de disques (500) du cinquième élément de commande (E).

25. Boîte de vitesses automatique à étages multiples selon la revendication 24, **caractérisée en ce que** les servodispositifs (510, 610) des cinquième et sixième éléments de commande (E, F) sont disposés, vus dans l'espace, au moins en majeure partie l'un à côté de l'autre et ne sont sensiblement séparés l'un de l'autre que par une surface latérale d'un support de disques (ZYLEF) commun pour les cinquième et sixième éléments de commande (E, F).

26. Boîte de vitesses automatique à étages multiples selon la revendication 24, **caractérisée en ce que** le servodispositif (610) du sixième élément de commande (F) est disposé, vu dans l'espace, au moins en majeure partie, radialement au-dessus du servodispositif (510) du cinquième élément de commande (E) et n'est séparé de ce servodispositif (510) du cinquième élément de commande (E) que par une surface latérale d'un support de disques (ZYLEF) commun pour les cinquième et sixième éléments de commande (E, F).

27. Boîte de vitesses automatique à étages multiples selon l'une des revendication 1 à 20, **caractérisée en ce que** le paquet de disques (500) du cinquième élément de commande (E) est disposé plus près du train de roues principal (HS), ou plus près du train de roues amont (VS) que le paquet de disques (600) du sixième élément de commande (F).

28. Boîte de vitesses automatique à étages multiples selon l'une des revendications 1 à 20, **caractérisée en ce que** le paquet de disques (600) du sixième élément de commande (F) est disposé plus près du train de roues principal (HS) ou plus près du train de roues amont (VS) que le paquet de disques (500) du cinquième élément de commande (E).

29. Boîte de vitesses automatique à étages multiples selon la revendication 28, **caractérisée en ce que** les paquets de disques (500, 600) des cinquième et sixième éléments de commande (E, F) sont disposés sur des diamètres au moins proches l'un de l'autre.

30. Boîte de vitesses automatique à étages multiples selon la revendication 27, 28 ou 29, **caractérisée en ce que** le servodispositif (510) du cinquième élément de commande (E) est disposé, vu dans l'espace, au moins en majeure partie, radialement au-dessus du servodispositif (610) du sixième élément de commande (F) et n'est essentiellement séparé de ce servodispositif (610) du sixième élément de commande (F) que par une surface latérale d'un support de disques (ZYLEF) commun pour les cinquième et sixième éléments de commande (E, F).

31. Boîte de vitesses automatique à étages multiples selon la revendication 27, 28 ou 29, **caractérisée en ce que** le servodispositif (510) du cinquième élément de commande (E) est disposé, vu dans l'espace, au moins en majeure partie sur le côté du servodispositif (610) du sixième élément de commande (F) qui est éloigné du train de roues principal (HS), et n'est sensiblement séparé de ce servodispositif (610) du sixième élément de commande (F) que par une surface latérale d'un support de disques (ZYLEF) commun pour les cinquième et sixième éléments de commande (E, F).

32. Boîte de vitesses automatique à étages multiples selon l'une des revendications 1 à 31, **caractérisée en ce que** le support de disques (ZYLEF) commun pour les cinquième et sixième éléments de commande (E, F) est monté rotatif sur un moyeu (GN) solidaire du carter de la boîte de vitesses ou sur une paroi (GW) solidaire du carter de la boîte de vitesses, ou encore sur un couvercle (GD) solidaire du carter de la boîte de vitesses, une arrivée de milieu de pression et/ou une arrivée de lubrifiant (511, 611 ou 512, 612) aboutissant aux servodispositifs (510, 610) des cinquième et sixième éléments de commande (E, F) s'étendant par segments à l'intérieur de ce moyeu (GN) solidaire du carter de la boîte de vitesses ou à l'intérieur de cette paroi (GW) du carter ou à l'intérieur de ce couvercle (GD) du carter.

33. Boîte de vitesses automatique à étages multiples selon l'une des revendications 1 à 31, **caractérisée en ce que** le support de disques (ZYLEF) commun pour les cinquième et sixième éléments de commande (E, F) est monté rotatif sur l'arbre de sortie (AB), une arrivée de milieu de pression et/ou une arrivée de lubrifiant (511, 611 ou 512, 612) aboutissant aux servodispositifs (510, 610) des cinquième et sixième éléments de commande (E, F) s'étendant par segments à l'intérieur de cet arbre de sortie (AB).

34. Boîte de vitesses automatique à étages multiples selon l'une des revendications précédentes, **caractérisée en ce que**, par fermeture sélective des éléments de commande (A à F), on peut enclencher au moins huit vitesses de marche avant, de telle sorte qu'une vitesse de rotation d'entrée de l'arbre d'entrée (AN) peut être transmise à l'arbre de sortie (AB) et de telle manière que, pour passer d'une vitesse à la vitesse immédiatement supérieure ou à la vitesse immédiatement inférieure, parmi les éléments de commande qui sont actionnés au moment considéré, il ne se produit que l'ouverture d'un élément de commande et la fermeture d'un autre élément de commande,
• dans une première vitesse de marche avant, les premier et quatrième éléments de commande (A, D) étant fermés,
• dans une deuxième vitesse de marche avant, les premier et troisième éléments de commande (A, C) étant fermés,
• dans une troisième vitesse de marche avant, les premier et deuxième éléments de commande (A, B) étant fermés,
• dans une quatrième vitesse de marche avant, les premier et sixième éléments de commande (A, F) étant fermés,
• dans une cinquième vitesse de marche avant, les premier et cinquième éléments de commande (A, E) étant fermés,
• dans une sixième vitesse de marche avant, les cinquième et sixième éléments de commande (E, F) étant fermés,
• dans une septième vitesse de marche avant, les deuxième et cinquième éléments de commande (B, E) étant fermés,
• dans une huitième vitesse de marche avant, les troisième et cinquième éléments de commande (C, E) étant fermés,
• et, dans une vitesse de marche arrière, le quatrième élément de commande (D) et, en outre, soit le deuxième élément de commande (B), soit le sixième élément de commande (F) étant fermés.
